# EUROPEAN PATENT APPLICATION

(11) **EP 4 598 077 A1**
(43) Date of publication of application: **06.08.2025**
(21) Application number: 23870087.6
(22) Date of filing: 25.08.2023
(51) Int. Cl.: H04W 12/041

(54) **SCG SIDE SECURITY KEY DETERMINATION METHOD, DEVICE, AND APPARATUS, AND STORAGE MEDIUM**

(30) Priority: 29.09.2022 CN 202211204374
(71) Applicant: Datang Mobile Communications Equipment Co., Ltd., Beijing 100085 (CN)
(72) Inventor: YAN, Xue, Beijing 100085 (CN); XU, Meng, Beijing 100085 (CN)
(74) Representative: Studio Torta S.p.A.
(86) International application number: PCT/CN2023/114997
(87) International publication number: WO 2024/066844

(57) **Abstract**

The present disclosure provides an SCG side security key determination method, device, and apparatus, and a storage medium. The method comprises: a terminal receiving first configuration information sent by a master node (MN); and when it is determined to access a target SCG, on the basis of the first configuration information, generating or updating or using a target SCG side security key or an SCG side security key used for at least one subsequent access to a candidate target SCG.

## Description

### CROSS-REFERENCES TO RELATED APPLICATIONS

The present application claims priority to Chinese patent application No. 202211204374.6 filed on September 29, 2022, entitled "SCG Side Security Key Determination Method, Device, and Apparatus, and Storage Medium", which is hereby incorporated by reference in its entirety.

### FIELD

The present application relates to the field of radio communications, and in particular, to methods and apparatuses for determining secondary cell group (SCG) side security key, devices, and a storage medium.

### BACKGROUND

In dual-connectivity (DC), an access network device that has interaction with a core network through a control plane signaling may be referred to as a master node (MN), and other access network devices may be referred to as secondary nodes (SN). A serving cell group provided by the MN for a terminal (also known as a user equipment (UE)) may be referred to as a master cell group (MCG), and a serving cell group provided by the SN for the UE may be referred to as a secondary cell group (SCG). The MCG and SCG each contain at least one cell. A primary cell (PCell) is a cell in the MCG, and the PCell works on a primary carrier. The PCell refers to a cell corresponding to an initial connection establishment procedure or a connection reestablishment procedure performed by the UE. A primary secondary cell (PSCell) is a cell that the UE initially accesses in the SCG.

Taking into account a mobility requirement of the terminal, a network side may pre-configure configuration information of multiple candidate SCGs for the UE in advance, and the terminal may perform one or more SCG additions or changes. In this case, there is no clear solution for how to determine an SCG side security key each time the terminal performs SCG addition or change.

### BRIEF SUMMARY

In response to the problems in the related art, embodiments of the present application provide methods and apparatuses for determining secondary cell group (SCG) side security key, devices, and a storage medium.

An embodiment of the present application provides a method for determining secondary cell group (SCG) side security key, performed by a terminal, including:
receiving first configuration information sent from a master node (MN); and
in case of determining to access to a target SCG, based on the first configuration information, generating or updating or using a target SCG side security key or an SCG side security key used for at least one subsequent access to a candidate target SCG.

In any of the embodiments of the present application, the first configuration information includes one or more of the following:
security configuration information;
a security configuration information list, where the security configuration information list contains at least one security configuration information unit, and each security configuration information unit is associated with one or more candidate SCGs;
a cell group identifier or index;
a secondary node (SN) identifier or index; or
a calculation way of a secondary node (SN) key counter (sk-counter) value.

In any of the embodiments of the present application, the security configuration information unit contains one or more of the following:
security configuration information;
a secondary node (SN) identifier or index;
a cell group identifier or index;
a primary secondary cell (PSCell) identifier or index; or
a security configuration information index.

In any of the embodiments of the present application, the security configuration information contains one or more of the following:
a first SN key counter (sk-counter) value;
a maximum sk-counter value;
a maximum number of accesses;
a first step;
an sk-counter value list; or
a cell radio network temporary identifier (C-RNTI) list.

In any of the embodiments of the present application, generating or updating or using the target SCG side security key includes one or more of the following:
using a first security key as the target SCG side security key, where the first security key is a security key used for a most recent access to the target SCG or a target secondary node (SN); or,
determining the target SCG side security key based on a second SN key counter (sk-counter) value, where the second sk-counter value is an sk-counter value used to generate a first security key; or,
determining the target SCG side security key based on a third sk-counter value, where the third sk-counter value is an sk-counter value determined in a first way based on the first configuration information; or,
determining the target SCG side security key based on a fourth sk-counter value, where the fourth sk-counter value is an sk-counter value indicated by a network device; or,
determining the target SCG side security key based on a fifth sk-counter value, where the fifth sk-counter value is a first sk-counter value associated with the target SCG or a target SN; or,
determining the target SCG side security key based on a sixth sk-counter value, where the sixth sk-counter value is an sk-counter value determined and saved for a current access to the target SCG after a most recent generation or update or use of the target SCG side security key; or,
using a second security key as the target SCG side security key, where the second security key is a security key determined and saved for a current access to the target SCG after a most recent generation or update or use of the target SCG side security key.

In any of the embodiments of the present application, the method further includes one or more of the following:
determining a sixth sk-counter value in a first way based on the first configuration information; or,
generating the SCG side security key based on a sixth sk-counter value and saving the SCG side security key as a second security key.

In any of the embodiments of the present application, determining the third sk-counter value or the sixth sk-counter value in the first way based on the first configuration information includes one or more of the following:
determining the third sk-counter value or the sixth sk-counter value based on a sum of a seventh sk-counter value and a second step; or,
determining the third sk-counter value or the sixth sk-counter value based on a difference between a seventh sk-counter value and a second step; or,
determining the third sk-counter value or the sixth sk-counter value based on a sum of the three: a seventh sk-counter value, a product of a first value N and a second value M, and a first sequence number value; or,
determining the third sk-counter value or the sixth sk-counter value based on a sum of the two: a product of a seventh sk-counter value and a first sequence number value, and a second value M; or,
determining the third sk-counter value or the sixth sk-counter value based on a sum of the two: a product of a first sequence number value and a second value M, and a seventh sk-counter value; or,
determining the third sk-counter value or the sixth sk-counter value based on a sum of a first sk-counter value and a first offset; or,
determining the third sk-counter value or the sixth sk-counter value based on a difference between a first sk-counter value and a first offset; or,
determining the third sk-counter value or the sixth sk-counter value based on an sk-counter value list and a number of accesses;
where the seventh sk-counter value is an sk-counter value used for a most recent generation or update of the SCG side security key; the first value N indicates that a network side configures N candidate SCGs for the terminal; the second value M indicates that the third sk-counter value or the sixth sk-counter value determined this time corresponds to an M-th access to the target SCG or a target SN; the first sequence number value is one or more of a cell group identifier or index corresponding to the target SCG, an SN identifier or index corresponding to the target SCG, or a primary secondary cell (PSCell) identifier or index corresponding to the target SCG.

In any of the embodiments of the present application, the second step includes one or more of the following:
a step specified by a protocol;
a step generated by the terminal; or
a first step.

In any of the embodiments of the present application, the first offset is determined by one or more of the following ways:
determining the first offset based on a sum of a second offset and a second step; or,
determining the first offset based on a difference between a second offset and a second step; or,
determining the first offset based on a sum of the three: a second offset, a product of a first value N and a second value M, and a first sequence number value; or,
determining the first offset based on a sum of the two: a product of a second offset and a first sequence number value, and a second value M; or,
determining the first offset based on a sum of the two: a product of a first sequence number value and a second value M, and a second offset;
where the second offset is a most recently updated first offset.

In any of the embodiments of the present application, the method further includes:
sending first information to the MN, where the first information contains one or more of the following:
a third sk-counter value;
a sixth sk-counter value;
a second step;
an sk-counter value index;
a number of accesses; or
a first offset.

In any of the embodiments of the present application, the method further includes:
in case of determining that an sk-counter value used to generate the SCG side security key is greater than a maximum sk-counter value configured by a network side, or a number of accesses is greater than a maximum number of accesses configured by a network side, performing one or more of the following:
sending second information to the MN, where the second information is used to indicate that the sk-counter value or the number of accesses reaches a maximum threshold;
releasing configuration information of the target SCG or a target secondary node (SN);
releasing configuration information of all candidate SCGs; or
ending evaluation of an execution condition for the target SCG or a target SN.

In any of the embodiments of the present application, determining to access to the target SCG includes one or more of the following:
determining that an execution condition for the target SCG is satisfied; or,
receiving an SCG addition or change indication sent from a network device, where the SCG addition or change indication is used to indicate the terminal to access to the target SCG.

In any of the embodiments of the present application, a way for determining the fourth sk-counter value includes:
receiving a media access control-control element (MAC-CE), downlink control information (DCI) or a radio resource control (RRC) signaling sent from a network device, where the MAC-CE, DCI or RRC signaling contains the fourth sk-counter value or indication information for indicating the fourth sk-counter value.

An embodiment of the present application further provides a method for determining secondary cell group (SCG) side security key, performed by a master node (MN), including:
sending first configuration information to a terminal, where the first configuration information is used for determining an SCG side security key used, by the terminal, for accessing a target SCG or for at least one subsequent access to a candidate target SCG; and
sending second configuration information to a first secondary node (SN), where the second configuration information is used for determining a third security key used for data transmission between the first SN and the terminal, where the first SN includes a target SN or a candidate target SN.

In any of the embodiments of the present application, the first configuration information includes one or more of the following:
security configuration information;
a security configuration information list, where the security configuration information list contains at least one security configuration information unit, and each security configuration information unit is associated with one or more candidate SCGs;
a cell group identifier or index;
a secondary node (SN) identifier or index; or
a calculation way of an SN key counter (sk-counter) value.

In any of the embodiments of the present application, the security configuration information unit contains one or more of the following:
security configuration information;
a secondary node (SN) identifier or index;
a cell group identifier or index;
a primary secondary cell (PSCell) identifier or index; or
a security configuration information index.

In any of the embodiments of the present application, the security configuration information contains one or more of the following:
a first SN key counter (sk-counter) value;
a maximum sk-counter value;
a maximum number of accesses;
a first step;
an sk-counter value list; or
a cell radio network temporary identifier (C-RNTI) list.

In any of the embodiments of the present application, the second configuration information contains one or more of the following:
a value of the third security key;
a security key list;
an index of the third security key;
a cell radio network temporary identifier (C-RNTI) list;
an sk-counter value used to generate the third security key; or
third information used to determine the third security key.

In any of the embodiments of the present application, the third information contains one or more of the following:
first information reported from the terminal to the MN;
first configuration information configured by a network side for the terminal;
a first sk-counter value;
an MN side security key;
a maximum sk-counter value;
a maximum number of accesses;
a first step;
an sk-counter value list;
a C-RNTI list;
a cell group identifier or index of a first SCG, where the first SCG is a candidate SCG corresponding to the first SN among multiple candidate SCGs configured by a network side for the terminal;
a primary secondary cell (PSCell) identifier or index of a first PSCell, where the first PSCell is a PSCell corresponding to a first SCG;
an SN identifier or index of the first SN;
a step generated by the terminal;
a number of accesses;
a first offset; or
a calculation way of an sk-counter value.

In any of the embodiments of the present application, the method further includes:
sending a media access control-control element (MAC-CE), downlink control information (DCI) or a radio resource control (RRC) signaling to the terminal, where the MAC-CE, DCI or RRC signaling contains a fourth sk-counter value or indication information for indicating a fourth sk-counter value.

In any of the embodiments of the present application, the method further includes:
sending an SCG addition or change indication to the terminal, where the SCG addition or change indication is used to indicate the terminal to access to the target SCG.

In any of the embodiments of the present application, the method further includes:
receiving second information sent from the terminal, where the second information is used to indicate that an sk-counter value or a number of accesses reaches a maximum threshold; and
performing one or more of the following based on the second information:
   releasing configuration information of a target SCG or target SN accessed by the terminal;
   releasing configuration information of all candidate SCGs;
   reconfiguring configuration information of a target SCG or target SN accessed by the terminal;
   reconfiguring configuration information of all candidate SCGs;
   reconfiguring an MN side security key; or
   reconfiguring an sk-counter value or first configuration information used to determine the SCG side security key.

An embodiment of the present application further provides a method for determining secondary cell group (SCG) side security key, performed by a first secondary node (SN), including:
receiving second configuration information sent from a master node (MN); and
determining a third security key used for data transmission with a terminal based on the second configuration information.

In any of the embodiments of the present application, the second configuration information contains one or more of the following:
a value of the third security key;
a security key list;
an index of the third security key;
a cell radio network temporary identifier (C-RNTI) list;
an SN key counter (sk-counter) value used to generate the third security key; or
third information used to determine the third security key.

In any of the embodiments of the present application, the third information contains one or more of the following:
first information reported from the terminal to the MN;
first configuration information configured by a network side for the terminal;
a first sk-counter value;
an MN side security key;
a maximum sk-counter value;
a maximum number of accesses;
a first step;
an sk-counter value list;
a C-RNTI list;
a cell group identifier or index of a first SCG, where the first SCG is a candidate SCG corresponding to the first SN among multiple candidate SCGs configured by a network side for the terminal;
a primary secondary cell (PSCell) identifier or index of a first PSCell, where the first PSCell is a PSCell corresponding to a first SCG;
an SN identifier or index of the first SN;
a step generated by the terminal;
a number of accesses;
a first offset; or
a calculation way of an sk-counter value.

In any of the embodiments of the present application, determining the third security key used for data transmission with the terminal based on the second configuration information includes:
determining the third security key based on a mapping relationship between a cell radio network temporary identifier (C-RNTI) and an sk-counter value or a security key, and a C-RNTI sent from the terminal.

In any of the embodiments of the present application, the method further includes:
sending a media access control-control element (MAC-CE), downlink control information (DCI) or a radio resource control (RRC) signaling to the terminal, where the MAC-CE, DCI or RRC signaling contains a fourth sk-counter value or indication information for indicating the fourth sk-counter value.

An embodiment of the present application further provides a terminal, including a memory, a transceiver and a processor,
where the memory is used for storing a computer program, the transceiver is used for receiving and sending data under control of the processor, and the processor is used for reading the computer program in the memory and performing the following operations:
receiving first configuration information sent from a master node (MN); and
in case of determining to access to a target secondary cell group (SCG), based on the first configuration information, generating or updating or using a target SCG side security key or an SCG side security key used for at least one subsequent access to a candidate target SCG.

In any of the embodiments of the present application, the first configuration information includes one or more of the following:
security configuration information;
a security configuration information list, where the security configuration information list contains at least one security configuration information unit, and each security configuration information unit is associated with one or more candidate SCGs;
a cell group identifier or index;
a secondary node (SN) identifier or index; or
a calculation way of an SN key counter (sk-counter) value.

In any of the embodiments of the present application, the security configuration information unit contains one or more of the following:
security configuration information;
a secondary node (SN) identifier or index;
a cell group identifier or index;
a primary secondary cell (PSCell) identifier or index; or
a security configuration information index.

In any of the embodiments of the present application, the security configuration information contains one or more of the following:
a first SN key counter (sk-counter) value;
a maximum sk-counter value;
a maximum number of accesses;
a first step;
an sk-counter value list; or
a cell radio network temporary identifier (C-RNTI) list.

In any of the embodiments of the present application, generating or updating or using the target SCG side security key includes one or more of the following:
using a first security key as the target SCG side security key, where the first security key is a security key used for a most recent access to the target SCG or a target secondary node (SN); or,
determining the target SCG side security key based on a second SN key counter (sk-counter) value, where the second sk-counter value is an sk-counter value used to generate a first security key; or,
determining the target SCG side security key based on a third sk-counter value, where the third sk-counter value is an sk-counter value determined in a first way based on the first configuration information; or,
determining the target SCG side security key based on a fourth sk-counter value, where the fourth sk-counter value is an sk-counter value indicated by a network device; or,
determining the target SCG side security key based on a fifth sk-counter value, where the fifth sk-counter value is a first sk-counter value associated with the target SCG or a target SN; or,
determining the target SCG side security key based on a sixth sk-counter value, where the sixth sk-counter value is an sk-counter value determined and saved for a current access to the target SCG after a most recent generation or update or use of the target SCG side security key; or,
using a second security key as the target SCG side security key, where the second security key is a security key determined and saved for a current access to the target SCG after a most recent generation or update or use of the target SCG side security key.

In any of the embodiments of the present application, the operations further include one or more of the following:
determining a sixth sk-counter value in a first way based on the first configuration information; or,
generating the SCG side security key based on a sixth sk-counter value and saving the SCG side security key as a second security key.

In any of the embodiments of the present application, determining the third sk-counter value or the sixth sk-counter value in the first way based on the first configuration information includes one or more of the following:
determining the third sk-counter value or the sixth sk-counter value based on a sum of a seventh sk-counter value and a second step; or,
determining the third sk-counter value or the sixth sk-counter value based on a difference between a seventh sk-counter value and a second step; or,
determining the third sk-counter value or the sixth sk-counter value based on a sum of the three: a seventh sk-counter value, a product of a first value N and a second value M, and a first sequence number value; or,
determining the third sk-counter value or the sixth sk-counter value based on a sum of the two: a product of a seventh sk-counter value and a first sequence number value, and a second value M; or,
determining the third sk-counter value or the sixth sk-counter value based on a sum of the two: a product of a first sequence number value and a second value M, and a seventh sk-counter value; or,
determining the third sk-counter value or the sixth sk-counter value based on a sum of a first sk-counter value and a first offset; or,
determining the third sk-counter value or the sixth sk-counter value based on a difference between a first sk-counter value and a first offset; or,
determining the third sk-counter value or the sixth sk-counter value based on an sk-counter value list and a number of accesses;
where the seventh sk-counter value is an sk-counter value used for a most recent generation or update of the SCG side security key; the first value N indicates that a network side configures N candidate SCGs for the terminal; the second value M indicates that the third sk-counter value or the sixth sk-counter value determined this time corresponds to an M-th access to the target SCG or a target SN; the first sequence number value is one or more of a cell group identifier or index corresponding to the target SCG, an SN identifier or index corresponding to the target SCG, or a primary secondary cell (PSCell) identifier or index corresponding to the target SCG.

In any of the embodiments of the present application, the second step includes one or more of the following:
a step specified by a protocol;
a step generated by the terminal; or
a first step.

In any of the embodiments of the present application, the first offset is determined by one or more of the following ways:
determining the first offset based on a sum of a second offset and a second step; or,
determining the first offset based on a difference between a second offset and a second step; or,
determining the first offset based on a sum of the three: a second offset, a product of a first value N and a second value M, and a first sequence number value; or,
determining the first offset based on a sum of the two: a product of a second offset and a first sequence number value, and a second value M; or,
determining the first offset based on a sum of the two: a product of a first sequence number value and a second value M, and a second offset;
where the second offset is a most recently updated first offset.

In any of the embodiments of the present application, the operations further include:
sending first information to the MN, where the first information contains one or more of the following:
a third sk-counter value;
a sixth sk-counter value;
a second step;
an sk-counter value index;
a number of accesses; or
a first offset.

In any of the embodiments of the present application, the operations further include:
in case of determining that an sk-counter value used to generate the SCG side security key is greater than a maximum sk-counter value configured by a network side, or a number of accesses is greater than a maximum number of accesses configured by a network side, performing one or more of the following:
sending second information to the MN, where the second information is used to indicate that the sk-counter value or the number of accesses reaches a maximum threshold;
releasing configuration information of the target SCG or a target secondary node (SN);
releasing configuration information of all candidate SCGs; or
ending evaluation of an execution condition for the target SCG or a target SN.

In any of the embodiments of the present application, determining to access to the target SCG includes one or more of the following:
determining that an execution condition for the target SCG is satisfied; or,
receiving an SCG addition or change indication sent from a network device, where the SCG addition or change indication is used to indicate the terminal to access to the target SCG.

In any of the embodiments of the present application, a way for determining the fourth sk-counter value includes:
receiving a media access control-control element (MAC-CE), downlink control information (DCI) or a radio resource control (RRC) signaling sent from a network device, where the MAC-CE, DCI or RRC signaling contains the fourth sk-counter value or indication information for indicating the fourth sk-counter value.

An embodiment of the present application further provides a master node (MN), including a memory, a transceiver and a processor,
where the memory is used for storing a computer program, the transceiver is used for receiving and sending data under control of the processor, and the processor is used for reading the computer program in the memory and performing the following operations:
sending first configuration information to a terminal, where the first configuration information is used for the terminal to determine a secondary cell group (SCG) side security key used for accessing a target SCG or for at least one subsequent access to a candidate target SCG; and
sending second configuration information to a first secondary node (SN), where the second configuration information is used by the first SN to determine a third security key used for data transmission between the first SN and the terminal, where the first SN includes a target SN or a candidate target SN.

In any of the embodiments of the present application, the first configuration information includes one or more of the following:
security configuration information;
a security configuration information list, where the security configuration information list contains at least one security configuration information unit, and each security configuration information unit is associated with one or more candidate SCGs;
a cell group identifier or index;
a secondary node (SN) identifier or index; or
a calculation way of an SN key counter (sk-counter) value.

In any of the embodiments of the present application, the security configuration information unit contains one or more of the following:
security configuration information;
a secondary node (SN) identifier or index;
a cell group identifier or index;
a primary secondary cell (PSCell) identifier or index; or
a security configuration information index.

In any of the embodiments of the present application, the security configuration information contains one or more of the following:
a first SN key counter (sk-counter) value;
a maximum sk-counter value;
a maximum number of accesses;
a first step;
an sk-counter value list; or
a cell radio network temporary identifier (C-RNTI) list.

In any of the embodiments of the present application, the second configuration information contains one or more of the following:
a value of the third security key;
a security key list;
an index of the third security key;
a cell radio network temporary identifier (C-RNTI) list;
an sk-counter value used to generate the third security key; or
third information used to determine the third security key.

In any of the embodiments of the present application, the third information contains one or more of the following:
first information reported from the terminal to the MN;
first configuration information configured by a network side for the terminal;
a first sk-counter value;
an MN side security key;
a maximum sk-counter value;
a maximum number of accesses;
a first step;
an sk-counter value list;
a C-RNTI list;
a cell group identifier or index of a first SCG, where the first SCG is a candidate SCG corresponding to the first SN among multiple candidate SCGs configured by a network side for the terminal;
a primary secondary cell (PSCell) identifier or index of a first PSCell, where the first PSCell is a PSCell corresponding to a first SCG;
an SN identifier or index of the first SN;
a step generated by the terminal;
a number of accesses;
a first offset; or
a calculation way of an sk-counter value.

In any of the embodiments of the present application, the operations further include:
sending a media access control-control element (MAC-CE), downlink control information (DCI) or a radio resource control (RRC) signaling to the terminal, where the MAC-CE, DCI or RRC signaling contains a fourth sk-counter value or indication information for indicating a fourth sk-counter value.

In any of the embodiments of the present application, the operations further include:
sending an SCG addition or change indication to the terminal, where the SCG addition or change indication is used to indicate the terminal to access to the target SCG.

In any of the embodiments of the present application, the operations further include:
receiving second information sent from the terminal, where the second information is used to indicate that an sk-counter value or a number of accesses reaches a maximum threshold; and
performing one or more of the following based on the second information:
   releasing configuration information of a target SCG or target SN accessed by the terminal;
   releasing configuration information of all candidate SCGs;
   reconfiguring configuration information of a target SCG or target SN accessed by the terminal;
   reconfiguring configuration information of all candidate SCGs;
   reconfiguring an MN side security key; or
   reconfiguring an sk-counter value or first configuration information used to determine the SCG side security key.

An embodiment of the present application further provides a first secondary node (SN), including a memory, a transceiver and a processor,
where the memory is used for storing a computer program, the transceiver is used for receiving and sending data under control of the processor, and the processor is used for reading the computer program in the memory and performing the following operations:
receiving second configuration information sent from a master node (MN); and
determining a third security key used for data transmission with a terminal based on the second configuration information.

In any of the embodiments of the present application, the second configuration information contains one or more of the following:
a value of the third security key;
a security key list;
an index of the third security key;
a cell radio network temporary identifier (C-RNTI) list;
an SN key counter (sk-counter) value used to generate the third security key; or
third information used to determine the third security key.

In any of the embodiments of the present application, the third information contains one or more of the following:
first information reported from the terminal to the MN;
first configuration information configured by a network side for the terminal;
a first sk-counter value;
an MN side security key;
a maximum sk-counter value;
a maximum number of accesses;
a first step;
an sk-counter value list;
a C-RNTI list;
a cell group identifier or index of a first secondary cell group (SCG), where the first SCG is a candidate SCG corresponding to the first SN among multiple candidate SCGs configured by a network side for the terminal;
a primary secondary cell (PSCell) identifier or index of a first PSCell, where the first PSCell is a PSCell corresponding to a first SCG;
an SN identifier or index of the first SN;
a step generated by the terminal;
a number of accesses;
a first offset; or
a calculation way of an sk-counter value.

In any of the embodiments of the present application, determining the third security key used for data transmission with the terminal based on the second configuration information includes:
determining the third security key based on a mapping relationship between a cell radio network temporary identifier (C-RNTI) and an sk-counter value or a security key, and a C-RNTI sent from the terminal.

In any of the embodiments of the present application, the operations further include:
sending a media access control-control element (MAC-CE), downlink control information (DCI) or a radio resource control (RRC) signaling to the terminal, where the MAC-CE, DCI or RRC signaling contains a fourth sk-counter value or indication information for indicating the fourth sk-counter value.

An embodiment of the present application further provides an apparatus for determining secondary cell group (SCG) side security key, including:
a first receiving unit, used for receiving first configuration information sent from a master node (MN); and
a first security key determining unit, used for, in case of determining to access to a target SCG, based on the first configuration information, generating or updating or using a target SCG side security key or an SCG side security key used for at least one subsequent access to a candidate target SCG.

An embodiment of the present application further provides an apparatus for determining secondary cell group (SCG) side security key, including:
a second sending unit, used for sending first configuration information to a terminal, where the first configuration information is used for determining an SCG side security key used, by the terminal, for accessing a target SCG or for at least one subsequent access to a candidate target SCG; and
the second sending unit is further used for sending second configuration information to a first secondary node (SN), where the second configuration information is used for determining a third security key used for data transmission between the first SN and the terminal, where the first SN includes a target SN or a candidate target SN.

An embodiment of the present application further provides an apparatus for determining secondary cell group (SCG) side security key, including:
a third receiving unit, used for receiving second configuration information sent from a master node (MN); and
a second security key determining unit, used for determining a third security key used for data transmission with a terminal based on the second configuration information.

An embodiment of the present application further provides a computer-readable storage medium, where the computer-readable storage medium stores a computer program, and the computer program is used for causing a computer to perform any of the methods for determining SCG side security key described above.

An embodiment of the present application further provides a communication device, where the communication device stores a computer program, and the computer program is used for causing the communication device to perform any of the methods for determining SCG side security key described above.

An embodiment of the present application further provides a processor-readable storage medium, where the processor-readable storage medium stores a computer program, and the computer program is used for causing a processor to perform any of the methods for determining SCG side security key described above.

An embodiment of the present application further provides a chip product, where the chip product stores a computer program, and the computer program is used for causing the chip product to perform any of the methods for determining SCG side security key described above.

In the methods and apparatuses for determining SCG side security key, the devices, and the storage medium provided by the present application, the first configuration information is pre-configured by the MN for the terminal, where the first configuration information may be used to determine the SCG side security key used for accessing the target SCG or for at least one subsequent access to the candidate target SCG, which may effectively reduce an SCG change delay and save signaling overhead.

### BRIEF DESCRIPTION OF THE DRAWINGS

In order to illustrate the solutions disclosed in the embodiments of the present application more clearly, the drawings used in the description of the embodiments are briefly described below. The drawings in the following description are only some embodiments of the present application, and other drawings may be obtained according to these drawings without any creative work for those skilled in the art.
FIG. 1 is a first schematic flowchart of a method for determining secondary cell group (SCG) side security key according to an embodiment of the present application;
FIG. 2 is a second schematic flowchart of a method for determining SCG side security key according to an embodiment of the present application;
FIG. 3 is a third schematic flowchart of a method for determining SCG side security key according to an embodiment of the present application;
FIG. 4 is a schematic structural diagram of a terminal according to an embodiment of the present application;
FIG. 5 is a schematic structural diagram of a master node (MN) according to an embodiment of the present application;
FIG. 6 is a schematic structural diagram of a first secondary node (SN) according to an embodiment of the present application;
FIG. 7 is a first schematic structural diagram of an apparatus for determining SCG side security key according to an embodiment of the present application;
FIG. 8 is a second schematic structural diagram of an apparatus for determining SCG side security key according to an embodiment of the present application; and
FIG. 9 is a third schematic structural diagram of an apparatus for determining SCG side security key according to an embodiment of the present application.

### DETAILED DESCRIPTION

In the embodiments of the present application, the term "and/or" describes a related relationship of associated objects, and indicates that there may be three kinds of relationships. For example, A and/or B may represent that A exists alone, A and B exist simultaneously, and B exists alone. Character "/" generally indicates that the associated objects have an "or" relationship.

In the embodiments of the present application, the term "multiple" refers to two or more than two, and other quantifiers are similar.

The solutions in the embodiments of the present application are clearly and completely described in the following with reference to the accompanying drawings in the embodiments of the present application. These embodiments are only a part of the embodiments of the present application, and not all of the embodiments. All other embodiments obtained by those skilled in the art based on the embodiments of the present application without any creative effort belong to the scope of the present application.

In order to facilitate a more clearly understanding of the solutions of the embodiments of the present application, some contents related to the embodiments of the present application are first introduced.

### 1. Traditional strategy for determining a secondary cell group (SCG) side security key

In a traditional mechanism, a user equipment (UE) calculates an SCG side security key *S-K_{gNB}* through a secondary node (SN) key counter (sk-counter) configured by a network and a master cell group (MCG) side security key *K_{gNB}.* A master node (MN) sends the calculated security key *S-K_{gNB}* on the SCG side to an SN through an interface message. In case that the *S-K_{gNB}* needs to be updated, the network sends a new sk-counter value to the UE to calculate a new *S-K_{gNB}.*

Taking into account mobility of a terminal, in order to reduce an SCG change delay and save signaling overhead, in the present application, after performing addition/change of SCG, the UE may not delete multiple pieces of pre-configured candidate SCG configuration information, and continue to retain the pre-configured SCG configuration information for subsequent accesses to a candidate SCG. In this case, when the UE performs the addition/change of SCG, corresponding solutions are provided on how the UE and a target SN side update/obtain their SCG side security keys.

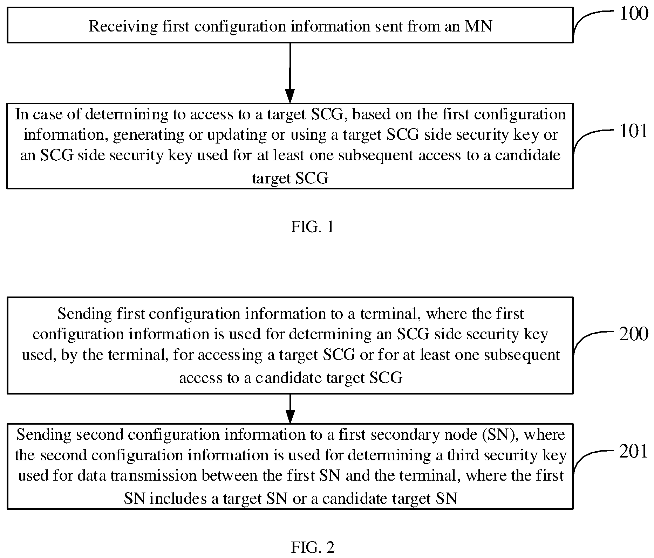

FIG. 1 is a first schematic flowchart of a method for determining secondary cell group (SCG) side security key according to an embodiment of the present application. The method is performed by a terminal. As shown in FIG. 1, the method includes the following steps.

Step 100: receiving first configuration information sent from a master node (MN).

Step 101: in case of determining to access to a target SCG, based on the first configuration information, generating or updating or using a target SCG side security key or an SCG side security key used for at least one subsequent access to a candidate target SCG.

In any of the embodiments of the present application, in case that a terminal is configured with multiple pieces of candidate SCG configuration information, and after each SCG addition/change is performed, the multiple pieces of candidate SCG configuration information may continue to be retained and used for subsequent SCG changes, it is necessary to define a method for determining SCG side security key when accessing a target SCG once or multiple times. An embodiment of the present application provides a method for determining SCG side security key. A network side may pre-configure first configuration information for the terminal, and the first configuration information may be used to determine the SCG side security key (*S-K_{gNB})* used for accessing the target SCG or at least one subsequent access to the candidate target SCG. That is, after the terminal performs the addition/change of SCG, the first configuration information may not be deleted, and the terminal may continue to save the first configuration information for key updates for subsequent SCG changes.

In any of the embodiments of the present application, the network side may pre-configure configuration information of multiple candidate SCGs for the terminal to access to the candidate SCGs. The configuration information of the multiple candidate SCGs may contain an execution condition, used for conditional handover for the candidate SCGs; or may not contain an execution condition, used for conditional handover for the candidate SCGs, and the network side indicates an execution SCG addition/change; or some candidate SCGs may be configured with an execution conditions for conditional handover, and some candidate SCGs may not be configured with the execution condition for conditional handover.

In any of the embodiments of the present application, the configuration information of the multiple candidate SCGs pre-configured by the network side may be contained in the first configuration information, or may be sent separately to the terminal.

After receiving the first configuration information configured by the MN, if the terminal determines to access to the target SCG, a target SCG side security key may be generated, updated or used based on the first configuration information. For example, in case that the terminal performs SCG addition, the target SCG side security key may be generated based on the first configuration information; in case that the terminal performs SCG change, the target SCG side security key may be updated based on the first configuration information; in case that the terminal performs SCG addition/change, a previously saved target SCG side security key may be used based on the first configuration information. Other specific situations are not limited here.

In any of the embodiments of the present application, determining to access to the target SCG may include one or more of the following.
(1) It is determined that an execution condition for the target SCG is satisfied. For example, in case that the network side configures an execution condition used for conditional handover for the candidate SCG, in case that the terminal evaluates that the execution condition for the candidate SCG is satisfied, the terminal may access the candidate SCG.
(2) An SCG addition or change indication sent from a network device is received, where the SCG addition or change indication is used to indicate the terminal to access to the target SCG. For example, in case that the network device determines that the terminal needs to access to the target SCG, the network device may send the SCG addition or change indication to the terminal, indicating the terminal to access to the target SCG.

In any of the embodiments of the present application, the first configuration information may include one or more of the following.

### (1) Security configuration information.

In any of the embodiments of the present application, the security configuration information may be used to determine an sk-counter value.

In any of the embodiments of the present application, the first configuration information may be configured with security configuration information of global variable attributes, that is, no matter which candidate SCG is accessed, the terminal may determine the sk-counter value based on the security configuration information, and then determine *S-K_{gNB}.* The security configuration information as a global variable belongs to per UE, per MN, template/common/reference cell group (CG) configuration.

(2) A security configuration information list, where the security configuration information list contains at least one security configuration information unit, and each security configuration information unit is associated with one or more candidate SCGs.

In any of the embodiments of the present application, each security configuration information unit contained in the security configuration information list is associated with one or more candidate SCGs, which may be understood as a local variable attribute, and is per SN, per CG (per SCG or SCG group), per primary secondary cell (PSCell) configuration.

In any of the embodiments of the present application, if a security configuration information unit is associated with multiple candidate SCGs, the multiple candidate SCGs may be SCGs under a same SN, such as a next generation node B (gNB), a same evolved Node B (eNB), a same distributed unit (DU), a same central unit (CU), etc.

In any of the embodiments of the present application, the security configuration information unit includes one or more of the following.
a. Security configuration information. The security configuration information contained in each security configuration information unit is a local variable, used to determine the S-K_{gNB} used to access to the candidate SCG or multiple candidate SCGs associated with the security configuration information unit.
b. An SN identifier or index, that is, an identifier (ID) or index of an SN associated with the security configuration information unit.
c. A cell group identifier or index, that is, an identifier (ID) or index of a cell group associated with the security configuration information unit.
d. A PSCell identifier or index, that is, an identifier (ID) or index of a PSCell associated with the security configuration information unit.
e. A security configuration information index, that is, an index number of the security configuration information contained in the security configuration information unit (such as a serial number or a sequence number value, etc.).

### (3) A cell group identifier or index.

In any of the embodiments of the present application, a cell group identifier or index of each candidate SCG may be configured in the first configuration information.

### (4) An SN identifier or index.

In any of the embodiments of the present application, an identifier or index of an SN corresponding to each candidate SCG may be configured in the first configuration information.

### (5) A calculation way of an sk-counter value.

In any of the embodiments of the present application, the calculation way of sk-counter value may be configured in the first configuration information, and the calculation way may be one or more.

In any of the embodiments of the present application, the above-mentioned security configuration information (global variable or local variable) may contain one or more of the following.
(1) A first sk-counter value. The first sk-counter value may be used as an initial value or as a fixed value. For example, the security configuration information as a local variable contains the first sk-counter value, and the terminal may use the first sk-counter value to calculate *S-K_{gNB}* each time the terminal accesses the candidate SCG associated with the security configuration information.
(2) A maximum sk-counter value. The maximum sk-counter value may refer to a maximum sk-counter value that the terminal may use.
(3) A maximum number of accesses. The maximum number of accesses may refer to a maximum number that the terminal performs SCG addition/change, or may refer to a maximum number that the terminal accesses the candidate SCG/SN/PSCell/CU, etc. associated with the security configuration information.
(4) A first step. The first step is a step configured by the network side. In case of calculating a new sk-counter value, a current sk-counter value may be increased based on the step, or a current sk-counter value may be decreased based on the step.
(5) An sk-counter value list. The sk-counter value list may contain multiple sk-counter values configured by the network side for the terminal.
(6) A cell radio network temporary identifier (C-RNTI) list. The C-RNTI list may contain multiple C-RNTIs configured by the network side for the terminal and/or a mapping relationship between C-RNTI and sk-counter or SCG side security key.

In any of the embodiments of the present application, SCGs under the same SN, such as SCGs under the same gNB, the same eNB, the same DU, or the same CU, may use a same SCG side security key. Whether the SCG belongs to the same SN/gNB/eNB/DU/CU may be identified based on a set of security configuration information shared by multiple SCGs during network configuration, or by introducing an SN identifier, or by other ways, which is not limited here.

In the method for determining SCG side security key provided by the embodiments of the present application, the MN pre-configures the first configuration information for the terminal, and the first configuration information may be used to determine the SCG side security key used for accessing the target SCG or for at least one subsequent access to the candidate target SCG, which may effectively reduce an SCG change delay and save signaling overhead.

In any of the embodiments of the present application, generating or updating or using the target SCG side security key includes one or more of the following.
(1) A first security key as the target SCG side security key is used, where the first security key is a security key used for a most recent access to the target SCG or a target secondary node (SN).
   For example, in case that the target SCG or target SN is accessed before and the *S-K_{gNB}* of the target SCG or target SN is saved, the *S-K_{gNB}* saved last time may be directly used as the *S-K_{gNB}* for accessing the target SCG this time.
(2) The target SCG side security key is determined based on a second SN key counter (sk-counter) value, where the second sk-counter value is an sk-counter value used to generate a first security key.
   For example, in case that the target SCG or target SN is accessed before and the sk-counter value of the target SCG or target SN is saved, an sk-counter value saved last time may be directly used, combined with an MCG side security key *K_{gNB},* to generate the *_{S-KgNB}* for accessing the target SCG this time.
(3) The target SCG side security key is determined based on a third sk-counter value, where the third sk-counter value is an sk-counter value determined in a first way based on the first configuration information.
   For example, a new *S-K_{gNB}* may be generated by determining a new sk-counter value. The new sk-counter value may be determined in a first way based on the first configuration information. The determination way is described in detail later.
(4) The target SCG side security key is determined based on a fourth sk-counter value, where the fourth sk-counter value is an sk-counter value indicated by a network device.

For example, a new *S-K_{gNB}* may be generated by a fourth sk-counter value indicated by a network device. The network device may be an MN or SN.

In any of the embodiments of the present application, a way for determining the fourth sk-counter value includes:
receiving a media access control-control element (MAC-CE), downlink control information (DCI) or a radio resource control (RRC) signaling sent from a network device, where the MAC-CE, DCI or RRC signaling contains the fourth sk-counter value or indication information for indicating the fourth sk-counter value (for example, the indication information may be an sk-counter value index).

In any of the embodiments of the present application, the fourth sk-counter value or the indication information (for example, the indication information may be an sk-counter value index) used to indicate the fourth sk-counter value may also be carried in an SCG addition or change indication sent from the MN.

(5) The target SCG side security key is determined based on a fifth sk-counter value, where the fifth sk-counter value is a first sk-counter value associated with the target SCG or a target SN.

For example, the security configuration information as a local variable contains the first sk-counter value, and the terminal can use the first sk-counter value to calculate *S-K_{gNB}* when accessing the candidate SCG associated with the security configuration information for a first time.

For example, the security configuration information as a local variable contains the first sk-counter value, and the terminal may use the first sk-counter value to calculate *S-K_{gNB}* each time the terminal accesses the candidate SCG associated with the security configuration information.

(6) The target SCG side security key is determined based on a sixth sk-counter value, where the sixth sk-counter value is an sk-counter value determined and saved for a current access to the target SCG after a most recent generation or update or use of the target SCG side security key.

For example, after a last SCG addition/change, the sk-counter value may be generated and saved in advance for a next SCG addition/change, and the sk-counter value generated and saved in advance may be directly used in the next SCG is addition/change. In this way, it may also be determined in advance whether a next sk-counter value exceeds a maximum sk-counter value, and processing may be performed in advance.

(7) A second security key is used as the target SCG side security key, where the second security key is a security key determined and saved for a current access to the target SCG after a most recent generation or update or use of the target SCG side security key.

For example, after a last SCG addition/change, *S-K_{gNB}* may be generated and saved in advance for a next SCG addition/change, so that the *S-K_{gNB}* generated and saved in advance may be directly used in a next SCG is addition / change.

In any of the embodiments of the present application, the method further includes one or more of the following:
determining a sixth sk-counter value in a first way based on the first configuration information; or,
generating the SCG side security key based on a sixth sk-counter value and saving the SCG side security key as a second security key.

In any of the embodiments of the present application, the sixth sk-counter value may be determined based on the first configuration information in a first way. A specific determination way is described in detail later.

In any of the embodiments of the present application, determining the third sk-counter value or the sixth sk-counter value in the first way based on the first configuration information includes one or more of the following:
determining the third sk-counter value or the sixth sk-counter value based on a sum of a seventh sk-counter value and a second step; or,
determining the third sk-counter value or the sixth sk-counter value based on a difference between a seventh sk-counter value and a second step; or,
determining the third sk-counter value or the sixth sk-counter value based on a sum of the three: a seventh sk-counter value, a product of a first value N and a second value M, and a first sequence number value; or,
determining the third sk-counter value or the sixth sk-counter value based on a sum of the two: a product of a seventh sk-counter value and a first sequence number value, and a second value M; or,
determining the third sk-counter value or the sixth sk-counter value based on a sum of the two: a product of a first sequence number value and a second value M, and a seventh sk-counter value; or,
determining the third sk-counter value or the sixth sk-counter value based on a sum of a first sk-counter value and a first offset; or,
determining the third sk-counter value or the sixth sk-counter value based on a difference between a first sk-counter value and a first offset; or,
determining the third sk-counter value or the sixth sk-counter value based on an sk-counter value list and a number of accesses;
where the seventh sk-counter value is an sk-counter value used for a most recent generation or update of the SCG side security key; the first value N indicates that a network side configures N candidate SCGs for the terminal; the second value M indicates that the third sk-counter value or the sixth sk-counter value determined this time corresponds to an M-th access to the target SCG or a target SN; the first sequence number value is one or more of a cell group identifier or index corresponding to the target SCG, an SN identifier or index corresponding to the target SCG, or a primary secondary cell (PSCell) identifier or index corresponding to the target SCG.

In any of the embodiments of the present application, the third sk-counter value or the sixth sk-counter value may be determined in a variety of different ways, including the following.
(1) The third sk-counter value or the sixth sk-counter value is determined based on a sum of a seventh sk-counter value and a second step.
   For example, the third sk-counter value or the sixth sk-counter value = the seventh sk-counter value + the second step.
(2) The third sk-counter value or the sixth sk-counter value is determined based on a difference between a seventh sk-counter value and a second step.
   For example, the third sk-counter value or the sixth sk-counter value = the seventh sk-counter value - the second step.
(3) The third sk-counter value or the sixth sk-counter value is determined based on a sum of the three: a seventh sk-counter value, a product of a first value N and a second value M, and a first sequence number value.
   For example, the third sk-counter value or the sixth sk-counter value = the seventh sk-counter value + N × M + the first value.
(4) The third sk-counter value or the sixth sk-counter value is determined based on a sum of the two: a product of a seventh sk-counter value and a first sequence number value, and a second value M.
   For example, the third sk-counter value or the sixth sk-counter value = the seventh sk-counter value × the first value + M.
(5)The third sk-counter value or the sixth sk-counter value is determined based on a sum of the two: a product of a first sequence number value and a second value M, and a seventh sk-counter value.
   For example, the third sk-counter value or the sixth sk-counter value = the seventh sk-counter value + the first value × M.
(6) The third sk-counter value or the sixth sk-counter value is determined based on a sum of a first sk-counter value and a first offset.
   For example, the third sk-counter value or the sixth sk-counter value = the first sk-counter value + the first offset.
(7) The third sk-counter value or the sixth sk-counter value is determined based on a difference between a first sk-counter value and a first offset.
   For example, the third sk-counter value or the sixth sk-counter value = the first sk-counter value - the first offset.
(8) The third sk-counter value or the sixth sk-counter value is determined based on an sk-counter value list and a number of accesses.

For example, the terminal may define a variable counter (this counter may be a global variable or a local variable), and set its initial value to 0. In case that the terminal accesses a candidate SCG or the terminal accesses a certain candidate SCG, counter++ is performed to calculate the number of accesses.

In any of the embodiments of the present application, the terminal may determine an sk-counter value corresponding to an n-th value in the sk-counter value list as the third sk-counter value or the sixth sk-counter value, where n is a number of times the terminal accesses the target SN/SCG/PSCell/CU, or a number of times the SCG addition/change is performed (regardless of whether the terminal accesses the same SN/SCG/PSCell/CU).

In any of the embodiments of the present application, the first offset is determined by one or more of the following ways:
determining the first offset based on a sum of a second offset and a second step; or,
determining the first offset based on a difference between a second offset and a second step; or,
determining the first offset based on a sum of the three: a second offset, a product of a first value N and a second value M, and a first sequence number value; or,
determining the first offset based on a sum of the two: a product of a second offset and a first sequence number value, and a second value M; or,
determining the first offset based on a sum of the two: a product of a first sequence number value and a second value M, and a second offset;
where the second offset is a most recently updated first offset.

In any of the embodiments of the present application, the terminal may define a variable offset, and set its initial value to 0. This offset may be a global variable or a local variable. After the sk-counter value or security key is generated using the first offset, the first offset used this time may be saved as the second offset, and the second offset is used when the first offset is calculated next time.

In any of the embodiments of the present application, the first offset may be determined in a variety of different ways, including the following.
(1) The first offset is determined based on a sum of a second offset and a second step.
   For example, the first offset = the second offset + the second step.
(2) The first offset is determined based on a difference between a second offset and a second step.
   For example, the first offset = the second offset - the second step.
(3) The first offset is determined based on a sum of the three: a second offset, a product of a first value N and a second value M, and a first sequence number value.
   For example, the first offset = the second offset + N × M + the first sequence number value.
(4) The first offset is determined based on a sum of the two: a product of a second offset and a first sequence number value, and a second value M.
   For example, the first offset = the second offset × the first sequence number value + M.
(5) The first offset is determined based on a sum of the two: a product of a first sequence number value and a second value M, and a second offset.

For example, the first offset = the second offset + the first sequence number value × M.

In any of the embodiments of the present application, the second step includes one or more of the following.
(1) A step specified by a protocol. The protocol may pre-define a step used to calculate the sk-counter value, such as a step value of 1 or 2.
(2) A step generated by the terminal. The terminal may generate a step used to calculate the sk-counter value by itself, and a step value may be randomly generated by the terminal.
(3) A first step. The terminal may use the first step configured by the network side to calculate the sk-counter value.

In any of the embodiments of the present application, the method further includes:
sending first information to the MN, where the first information contains one or more of the following:
a third sk-counter value;
a sixth sk-counter value;
a second step;
an sk-counter value index;
a number of accesses; or
a first offset.

In any of the embodiments of the present application, the terminal may notify the MN (such as reported in an RRC reconfiguration completion message or other messages) of the sk-counter value used or related parameters used to calculate the sk-counter value, such as the third sk-counter value, the sixth sk-counter value, the second step, the sk-counter value index, the number of access (counter value), the first offset, etc.

In any of the embodiments of the present application, the method further includes:
in case of determining that an sk-counter value used to generate the SCG side security key is greater than a maximum sk-counter value configured by a network side, or a number of accesses is greater than a maximum number of accesses configured by a network side, performing one or more of the following:
sending second information to the MN, where the second information is used to indicate that the sk-counter value or the number of accesses reaches a maximum threshold;
releasing configuration information of the target SCG or a target secondary node (SN);
releasing configuration information of all candidate SCGs; or
ending evaluation of an execution condition for the target SCG or a target SN.

In any of the embodiments of the present application, after the terminal determines the sk-counter value (such as the third sk-counter value, the sixth sk-counter value, etc.) or updates the number of accesses (counter value), the terminal may determine whether the sk-counter value is greater than the maximum sk-counter value configured by the network, or whether a new counter value is greater than the maximum number of accesses configured by the network.

If the terminal determines that the sk-counter value is greater than the maximum sk-counter value configured by the network, or the new counter value is greater than the maximum number of accesses configured by the network, the terminal may perform one or more of the following actions.
(1) The terminal may report indication information to the MN, indicating that the sk-counter value or the number of accesses reaches the maximum threshold.
(2) The terminal may automatically release the configuration information of the SCG/SN corresponding to the sk-counter value or the number of accesses that exceeds the maximum threshold.
(3) The terminal may automatically release the configuration information of all candidate SCGs.
(4) The terminal may end the evaluation of the execution condition for the SCG/SN corresponding to the sk-counter value or number of accesses that exceeds the maximum threshold.

FIG. 2 is a second schematic flowchart of a method for determining SCG side security key according to an embodiment of the present application. The method is performed by a master node (MN). As shown in FIG. 2, the method includes the following steps.

Step 200: sending first configuration information to a terminal, where the first configuration information is used for determining an SCG side security key used, by the terminal, for accessing a target SCG or for at least one subsequent access to a candidate target SCG.

Step 201: sending second configuration information to a first secondary node (SN), where the second configuration information is used for determining a third security key used for data transmission between the first SN and the terminal, where the first SN includes a target SN or a candidate target SN.

In any of the embodiments of the present application, in case that a terminal is configured with multiple pieces of candidate SCG configuration information, and after each SCG addition/change is performed, the multiple pieces of candidate SCG configuration information may continue to be retained and used for subsequent SCG changes. It is necessary to define a method for determining SCG side security key when accessing the candidate target SCG subsequently. An embodiment of the present application provides a method for determining SCG side security key. A network side may pre-configure first configuration information for the terminal, and the first configuration information may be used to determine the SCG side security key (*S-K_{gNB}*) used for accessing the target SCG or at least one subsequent access to the candidate target SCG. That is, after the terminal performs the addition/change of SCG, the first configuration information may not be deleted, and the terminal may continue to save the first configuration information for key updates for subsequent SCG changes.

In any of the embodiments of the present application, the network side may pre-configure configuration information of multiple candidate SCGs for the terminal to access to the candidate SCGs. The configuration information of the multiple candidate SCGs may contain an execution condition used for conditional handover for the candidate SCGs; or may not contain an execution condition used for conditional handover for the candidate SCGs, and the network side indicates an execution SCG addition/change; or some candidate SCGs may be configured with an execution conditions for conditional handover, and some candidate SCGs may not be configured with the execution condition for conditional handover.

In any of the embodiments of the present application, the configuration information of the multiple candidate SCGs pre-configured by the network side may be contained in the first configuration information, or may be sent separately to the terminal.

After receiving the first configuration information configured by the MN, if the terminal determines to access to the target SCG, a target SCG side security key may be generated, updated or used based on the first configuration information.

After sending the first configuration information to the terminal, the MN may send the second configuration information to the first SN (for example, the target SN or the candidate target SN). The second configuration information may be used by the first SN to determine the third security key *S-K_{gNB}* used for data transmission between the terminal.

In any of the embodiments of the present application, in case that the target SN is determined, the MN may send the second configuration information to the target SN, and the target SN may use the second configuration information to determine the *S-K_{gNB}* used for access by the terminal this time. For example, the MN may directly send an *S-K_{gNB}* value to the target SN, or send an *S-K_{gNB}* index value to the target SN, but before that, an *S-K_{gNB}* value list needs to be sent to the target SN.

In any of the embodiments of the present application, before determining the target SN, the MN may send the second configuration information to the candidate SN, and the candidate SN that receives the second configuration information may use the second configuration information to determine the *S-K_{gNB},* or use the second configuration information to determine the *S-K_{gNB}* in case that it is determined that the terminal is accessed subsequently. For example, the MN may send an *S-K_{gNB}* value or an *S-K_{gNB}* value list to each candidate SN, when the terminal accesses the target SN, the target SN may directly use the *S-K_{gNB}* value, or the MN may send an *S-K_{gNB}* index value to the target SN to indicate which *S-K_{gNB}* in the *S-K_{gNB}* list the target SN uses. The MN may also send a C-RNTI list to the target SN. When the terminal accesses the target SN, the terminal notifies the target SN of its own C-RNTI. The target SN knows the *S-K_{gNB}* value used by the terminal based on the C-RNTI sent by the terminal, the C-RNTI list, and a correspondence relationship between the C-RNTI and the sk-counter value or the *S-K_{gNB}.*

In any of the embodiments of the present application, the MN sends the second configuration information to the first SN before the terminal determines the sk-counter value or the SCG side security key, or after the terminal determines the sk-counter value or the SCG side security key. The two may have a time sequence or may be independent of each other.

In the method for determining SCG side security key provided by the embodiments of the present application, the MN pre-configures the first configuration information for the terminal, and the first configuration information may be used to determine the SCG side security key used for accessing the target SCG or for at least one subsequent access to the candidate target SCG, which may effectively reduce an SCG change delay and save signaling overhead.

In any of the embodiments of the present application, the first configuration information may include one or more of the following.

### (1) Security configuration information.

In any of the embodiments of the present application, the security configuration information may be used to determine an SN key counter (sk-counter) value.

In any of the embodiments of the present application, the first configuration information may be configured with security configuration information of global variable attributes, that is, no matter which candidate SCG is accessed, the terminal may determine the sk-counter value based on the security configuration information, and then determine *S-K_{gNB}.* The security configuration information as a global variable belongs to per UE, per MN, template/common/reference cell group (CG) configuration.

(2) A security configuration information list, where the security configuration information list contains at least one security configuration information unit, and each security configuration information unit is associated with one or more candidate SCGs.

In any of the embodiments of the present application, each security configuration information unit contained in the security configuration information list is associated with one or more candidate SCGs, which may be understood as a local variable attribute, and is per SN, per CG (per SCG or SCG group), per primary secondary cell (PSCell) configuration.

In any of the embodiments of the present application, if a security configuration information unit is associated with multiple candidate SCGs, the multiple candidate SCGs may be SCGs under a same SN, such as a next generation node B (gNB), a same evolved Node B (eNB), a same distributed unit (DU), a same central unit (CU), etc.

In any of the embodiments of the present application, the security configuration information unit includes one or more of the following.
a. Security configuration information. The security configuration information contained in each security configuration information unit is a local variable, used to determine the S-K_{gNB} used to access to the candidate SCG or multiple candidate SCGs associated with the security configuration information unit.
b. An SN identifier or index, that is, an identifier (ID) or index of an SN associated with the security configuration information unit.
c. A cell group identifier or index, that is, an identifier (ID) or index of a cell group associated with the security configuration information unit.
d. A PSCell identifier or index, that is, an identifier (ID) or index of a PSCell associated with the security configuration information unit.
e. A security configuration information index, that is, an index number of the security configuration information contained in the security configuration information unit (such as a serial number or a sequence number value, etc.).

### (3) A cell group identifier or index.

In any of the embodiments of the present application, a cell group identifier or index of each candidate SCG may be configured in the first configuration information.

### (4) An SN identifier or index.

In any of the embodiments of the present application, an identifier or index of an SN corresponding to each candidate SCG may be configured in the first configuration information.

### (5) A calculation way of an sk-counter value.

In any of the embodiments of the present application, the calculation way of sk-counter value may be configured in the first configuration information, and the calculation way may be one or more.

In any of the embodiments of the present application, the above-mentioned security configuration information (global variable or local variable) may contain one or more of the following.
(1) A first sk-counter value. The first sk-counter value may be used as an initial value or as a fixed value. For example, the security configuration information as a local variable contains the first sk-counter value, and the terminal may use the first sk-counter value to calculate *S-K_{gNB}* each time the terminal accesses the candidate SCG associated with the security configuration information.
(2) A maximum sk-counter value. The maximum sk-counter value may refer to a maximum sk-counter value that the terminal may use.
(3) A maximum number of accesses. The maximum number of accesses may refer to a maximum number that the terminal performs SCG addition/change, or may refer to a maximum number that the terminal accesses the candidate SCG/SN/PSCell/CU, etc. associated with the security configuration information.
(4) A first step. The first step is a step configured by the network side. In case of calculating a new sk-counter value, a current sk-counter value may be increased based on the step, or a current sk-counter value may be decreased based on the step.
(5) An sk-counter value list. The sk-counter value list may contain multiple sk-counter values configured by the network side for the terminal.
(6) A cell radio network temporary identifier (C-RNTI) list. The C-RNTI list may contain multiple C-RNTIs configured by the network side for the terminal and/or a mapping relationship between C-RNTI and sk-counter or SCG side security key.

In any of the embodiments of the present application, the second configuration information contains one or more of the following:
(1) A value of the third security key. The MN may send a specific *S-K_{gNB}* value to the first SN.
(2) A security key list. The MN may send an *S-K_{gNB}* list to the first SN, and the first SN may determine the corresponding *S-K_{gNB}* value from the S-KgNB list based on an index of the *S-K_{gNB}* (carried in the second configuration information or subsequently sent from the MN to the first SN).
(3) An index of the third security key.
(4) A cell radio network temporary identifier (C-RNTI) list. The C-RNTI list may include a mapping relationship between a C-RNTI and an sk-counter value or an *S-K_{gNB},* and the first SN may determine the corresponding *S-K_{gNB}* value based on the C-RNTI sent from the terminal. The C-RNTI list may also be generated by the first SN.
(5) An sk-counter value used to generate the third security key. The MN may send a specific sk-counter value to the first SN, and the first SN may directly generate the *S-K_{gNB}* based on the sk-counter value.
(6) Third information used to determine the third security key. The MN may send other third information, that may be used to generate the third security key, to the first SN, and the first SN may generate the *S-K_{gNB}* based on these pieces of information.

The third information may be sent from the MN to the target SN after target SN selected by the terminal is determined (carried together when forwarding an RRC reconfiguration completion message, or sent using other interface messages); or, the third information may also be sent to the candidate target SN after the MN sends the first configuration information to the terminal and before the target SN is determined.

It should be noted that in each embodiment of the present application, the second configuration information may also be sent from the MN to each candidate SN before sending the first configuration information to the terminal.

In any of the embodiments of the present application, the third information contains one or more of the following.
(1) First information reported from the terminal to the MN. For example, the third sk-counter value, the sixth sk-counter value, the second step, the sk-counter value index, the number of accesses (counter value), the first offset, etc., the first information may be contained in the third information in form of a container.
(2) First configuration information configured by a network side for the terminal, where the first configuration information may be contained in the third information in form of a container.
(3) A first sk-counter value.
(4) An MN side security key (may also be indicated in other forms to ensure security).
(5) A maximum sk-counter value.
(6) A maximum number of accesses.
(7) A first step.
(8) An sk-counter value list.
(9) A C-RNTI list. The C-RNTI list may include a mapping relationship between C-RNTI and sk-counter value or *S-K_{gNB}*, and the first SN may determine a corresponding *S-K_{gNB}* value based on the C-RNTI sent from the terminal.
(10) A cell group identifier or index of a first SCG, where the first SCG is a candidate SCG corresponding to the first SN among multiple candidate SCGs configured by a network side for the terminal.
(11) A primary secondary cell (PSCell) identifier or index of a first PSCell, where the first PSCell is a PSCell corresponding to a first SCG.
(12) An SN identifier or index of the first SN.
(13) A step generated by the terminal.
(14) A number of accesses.
(15) A first offset.
(16) A calculation way of an sk-counter value.

In any of the embodiments of the present application, the MN and SN may determine the sk-counter value or *S-K_{gNB}* in the same way as the terminal side, and the specific procedure is not repeated here.

In any of the embodiments of the present application, the MN may send an MAC-CE, DCI or RRC signaling to the terminal, and the MAC-CE, DCI or RRC signaling contains the fourth sk-counter value or indication information for indicating the fourth sk-counter value (for example, the indication information may be an sk-counter value index), and the terminal may generate a new *S-K_{gNB}* through the fourth sk-counter value indicated by the network device.

In any of the embodiments of the present application, the MN may send an SCG addition or change indication to the terminal, and the SCG addition or change indication is used to indicate the terminal to access to the target SCG. For example, in case that the network device determines that the terminal needs to access to the target SCG, the network device may send the SCG addition or change indication to the terminal to indicate the terminal to access to the target SCG.

In any of the embodiments of the present application, the fourth sk-counter value or the indication information (for example, the indication information may be an sk-counter value index) used to indicate the fourth sk-counter value may also be carried in an SCG addition or change indication sent from the MN.

In any of the embodiments of the present application, the method further includes:
receiving second information sent from the terminal, where the second information is used to indicate that an sk-counter value or a number of accesses reaches a maximum threshold; and
performing one or more of the following based on the second information:
   releasing configuration information of a target SCG or target SN accessed by the terminal;
   releasing configuration information of all candidate SCGs;
   reconfiguring configuration information of a target SCG or target SN accessed by the terminal;
   reconfiguring configuration information of all candidate SCGs;
   reconfiguring an MN side security key; or
   reconfiguring an sk-counter value or first configuration information used to determine the SCG side security key.

In any of the embodiments of the present application, after the terminal determines the sk-counter value (such as the third sk-counter value, the sixth sk-counter value, etc.) or updates the number of accesses (counter value), the terminal may determine whether the sk-counter value is greater than the maximum sk-counter value configured by the network, or whether a new counter value is greater than the maximum number of accesses configured by the network.

If the terminal determines that the sk-counter value is greater than the maximum sk-counter value configured by the network, or the new counter value is greater than the maximum number of accesses configured by the network, the terminal may send second information to the MN, where the second information is used to indicate that the sk-counter value or the number of accesses reaches a maximum threshold.

After receiving the second information, the MN may perform one or more of the following.
(1) Release of the configuration information of the SCG/SN corresponding to the sk-counter value or the number of accesses that exceeds the maximum threshold.
(2) Release of the configuration information of all candidate SCGs.
(3) Reconfiguration of the configuration information of the SCG/SN corresponding to the sk-counter value or the number of accesses that exceeds the maximum threshold.
(4) Reconfiguration of the configuration information of all candidate SCGs.
(5) Reconfiguration of the MN side security key.
(6) Reconfiguration of the sk-counter value (for example, the sk-counter value configured in the first configuration information or indicated by the network side) or the first configuration information used to determine the SCG side security key.

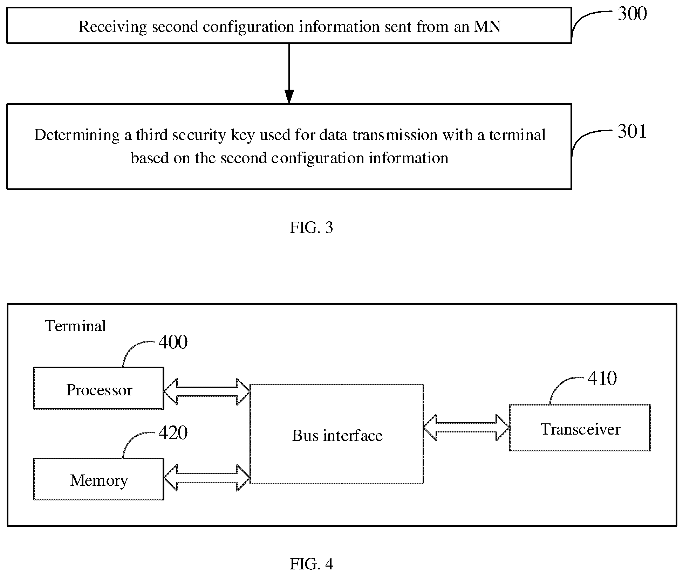

FIG. 3 is a third schematic flowchart of a method for determining SCG side security key according to an embodiment of the present application. The method is performed by a first secondary node (SN). As shown in FIG. 3, the method includes the following steps.

Step 300: receiving second configuration information sent from a master node (MN).

Step 301: determining a third security key used for data transmission with a terminal based on the second configuration information.

In any of the embodiments of the present application, in case that a terminal is configured with multiple pieces of candidate SCG configuration information, and after each SCG addition/change is performed, the multiple pieces of candidate SCG configuration information may continue to be retained and used for subsequent SCG changes, it is necessary to define a method for determining SCG side security key when accessing the candidate target SCG subsequently. An embodiment of the present application provides a method for determining SCG side security key. A network side may pre-configure first configuration information for the terminal, and the first configuration information may be used to determine the SCG side security key (*S-K_{gNB}*) used for accessing the target SCG or at least one subsequent access to the candidate target SCG. That is, after the terminal performs the addition/change of SCG, the first configuration information may not be deleted, and the terminal may continue to save the first configuration information for key updates for subsequent SCG changes.

After sending the first configuration information to the terminal, the MN may send the second configuration information to the first SN (for example, the target SN or the candidate target SN). The second configuration information may be used by the first SN to determine the third security key *S-K_{gNB}* used for data transmission between the terminal.

In any of the embodiments of the present application, in case that the target SN is determined, the MN may send the second configuration information to the target SN, and the target SN may use the second configuration information to determine the *S-K_{gNB}* used for access by the terminal this time. For example, the MN may directly send an *S-K_{gNB}* value to the target SN, or send an *S-K_{gNB}* index value to the target SN, but before that, an *S-K_{gNB}* value list needs to be sent to the target SN.

In any of the embodiments of the present application, before determining the target SN, the MN may send the second configuration information to the candidate SN, and the candidate SN that receives the second configuration information may use the second configuration information to determine the *S-K_{gNB},* or use the second configuration information to determine the *S-K_{gNB}* in case that it is determined that the terminal is accessed subsequently. For example, the MN may send an *S-K_{gNB}* value or an *S-K_{gNB}* value list to each candidate SN, when the terminal accesses the target SN, the target SN may directly use the *S-K_{gNB}* value, or the MN may send an *S-K_{gNB}* index value to the target SN to indicate which *S-K_{gNB}* in the *S-K_{gNB}* list the target SN uses. The MN may also send a C-RNTI list to the target SN. When the terminal accesses the target SN, the terminal notifies the target SN of its own C-RNTI. The target SN knows the *S-K_{gNB}* value used by the terminal based on the C-RNTI sent by the terminal, the C-RNTI list, and a correspondence relationship between the C-RNTI and the sk-counter value or the *S-K_{gNB}.*

In the method for determining SCG side security key provided by the embodiments of the present application, the MN sends the second configuration information to the first SN, and the first SN may determine the SCG side security key used by the terminal based on the second configuration information, which effectively supports the terminal to retain the configuration after performing SCG addition/change, and effectively reduces the SCG change delay and saves signaling overhead.

In any of the embodiments of the present application, the second configuration information contains one or more of the following:
(1) A value of the third security key. The MN may send a specific *S-K_{gNB}* value to the first SN.
(2) A security key list. The MN may send an *S-K_{gNB}* list to the first SN, and the first SN may determine the corresponding *S-K_{gNB}* value from the S-KgNB list based on an index of the S-*K_{gNB}* (carried in the second configuration information or subsequently sent from the MN to the first SN).
(3) An index of the third security key.
(4) A cell radio network temporary identifier (C-RNTI) list. The C-RNTI list may include a mapping relationship between a C-RNTI and an sk-counter value or an *S-K_{gNB},* and the first SN may determine the corresponding *S-K_{gNB}* value based on the C-RNTI sent from the terminal. The C-RNTI list may also be generated by the first SN.
(5) An sk-counter value used to generate the third security key. The MN may send a specific sk-counter value to the first SN, and the first SN may directly generate the *S-K_{gNB}* based on the sk-counter value.
(6) Third information used to determine the third security key. The MN may send other third information, that may be used to generate the third security key, to the first SN, and the first SN may generate the *S-K_{gNB}* based on these pieces of information.

The third information may be sent from the MN to the target SN after the target SN selected by the terminal is determined (carried together when forwarding an RRC reconfiguration completion message, or sent using other interface messages); or, the third information may also be sent to the candidate target SN after the MN sends the first configuration information to the terminal and before the target SN is determined.

It should be noted that in each embodiment of the present application, the second configuration information may also be sent from the MN to each candidate SN before sending the first configuration information to the terminal.

In any of the embodiments of the present application, the third information contains one or more of the following.
(1) First information reported from the terminal to the MN. For example, the third sk-counter value, the sixth sk-counter value, the second step, the sk-counter value index, the number of accesses (counter value), and the first offset, etc., and the first information may be contained in the third information in form of a container.
(2) First configuration information configured by a network side for the terminal, the first configuration information may be contained in the third information in form of a container.
(3) A first sk-counter value.
(4) An MN side security key (may also be indicated in other forms to ensure security).
(5) A maximum sk-counter value.
(6) A maximum number of accesses.
(7) A first step.
(8) An sk-counter value list.
(9) A C-RNTI list. The C-RNTI list may include a mapping relationship between C-RNTI and sk-counter value or *S-K_{gNB},* and the first SN may determine a corresponding *S-K_{gNB}* value based on the C-RNTI sent from the terminal.
(10) A cell group identifier or index of a first SCG, where the first SCG is a candidate SCG corresponding to the first SN among multiple candidate SCGs configured by a network side for the terminal.
(11) A primary secondary cell (PSCell) identifier or index of a first PSCell, where the first PSCell is a PSCell corresponding to a first SCG.
(12) An SN identifier or index of the first SN.
(13) A step generated by the terminal.
(14) A number of accesses.
(15) A first offset.
(16) A calculation way of an sk-counter value.

In any of the embodiments of the present application, the MN and SN may determine the sk-counter value or *S-K_{gNB}* in the same way as the terminal side, and the specific procedure is not repeated here.

In any of the embodiments of the present application, determining the third security key used for data transmission with the terminal based on the second configuration information includes:
determining the third security key based on a mapping relationship between a cell radio network temporary identifier (C-RNTI) and an sk-counter value or a security key, and a C-RNTI sent from the terminal.

In any of the embodiments of the present application, in case that the terminal accesses the target SN, the terminal may send the C-RNTI of the terminal to the target SN. After the target SN receives the C-RNTI sent from the terminal, the third security key may be determined based on the mapping relationship between each C-RNTI in the C-RNTI list and the sk-counter value or security key, and the C-RNTI sent from the terminal.

The C-RNTI list may be sent from the MN to the target SN, or may be generated by the target SN itself based on other information.

In any of the embodiments of the present application, the first SN may send an MAC-CE, DCI or RRC signaling to the terminal, and the MAC-CE, DCI or RRC signaling contains a fourth sk-counter value or indication information for indicating the fourth sk-counter value (for example, the indication information may be an sk-counter value index), and the terminal may generate a new *S-K_{gNB}* based on the fourth sk-counter value indicated by the network device.

The methods provided in the embodiments of the present application are based on the same concept, and the implementation of each method may refer to each other, and the repeated parts are not repeated.

The methods provided by each of the above embodiments of the present application are illustrated below through examples of specific application scenarios.

Embodiment 1: an MN configures security configuration information (global variable) for a UE, the UE performs SCG addition/change to access to a candidate SCG that has not been accessed, and a new SCG side security key *S-K_{gNB}* is generated by the UE and the MN.

Step 1-1: the MN sends multiple pieces of pre-configured candidate SCG configuration information to the UE.

Step 1-2: the MN sends one or more types of the following configuration information to the UE:
(1) a first sk-counter value *SKO;*
(2) a maximum sk-counter value *SK-Max;*
(3) a maximum number of accesses *Counter-Max;*
(4) a first step;
(5) a sk-counter list (may include sk-counter index);
(6) a C-RNTI list;
(7) a cell group identifier (ID)/index;
(8) an SN ID/index; or
(9) a selected calculation way.

A network configures an initial sk-counter value *SKO* for the UE. The initial sk-counter value may be a smaller value or a larger value, such as 0 (smaller value) or 6000 (larger value).

For the maximum sk-counter value *SK-Max,* the maximum value is a maximum sk-counter value that the UE may use.

For the maximum number of accesses *Counter-Max,* the maximum number of accesses is a maximum number of times the UE performs SCG addition/change.

The first step may be divided into two cases, as follows.

A step *step1* indicates a step that the network hopes the UE may increase based on a current sk-counter value when calculating a new sk-counter value. For example, when *step1* is configured as 2, it means that each time the UE performs addition/change to a new candidate SCG, the UE generates a new sk-counter value that is the current sk-counter value plus *step1.* Here, if the SCG addition/change is performed for a first time, the new sk-counter value generated by the UE is 2; if the SCG addition/change is performed for a second time, the new sk-counter value generated by the UE is 4; if the SCG addition/change is performed for a third time, the new sk-counter value generated by the UE is 6, and so on.

Step *step2* indicates a step that the network hopes the UE may decrease based on the current sk-counter value when calculating a new sk-counter value. For example, when *step2* is configured as 3, it means that each time the UE performs addition/change to a new candidate SCG, the UE generates a new sk-counter value that is the current sk-counter value minus *step2.* Here, if the SCG addition/change is performed for a first time, the new sk-counter value generated by the UE is 5997; if the SCG addition/change is performed for a second time, the new sk-counter value generated by the UE is 5994; if the SCG addition/change is performed for a third time, the new sk-counter value generated by the UE is 5991, and so on.

The sk-counter list is a plurality of sk-counter values configured by the MN for the UE, which is used when subsequently, the UE performs SCG addition/change.

The C-RNTI list is a plurality of C-RNTI values configured by the MN for the UE, which is used when subsequently the UE performs SCG addition/change.

The Cell group ID/index of the SCG configured by the network is mainly used for the UE to calculate a new sk-counter value. The cell group ID/index is a sequence number value configured by the network for multiple candidate SCGs, such as ID/index = 0, 1, 2, 3, 4, 5, etc.

The SN ID/index of the SN configured by the network is mainly used for the UE to calculate a new sk-counter value. The SN ID/index is a sequence number value configured by the network for multiple candidate SNs, such as ID/index = 0, 1, 2, 3, 4, 5, etc.

The network configures new calculation ways of sk-counter value for the UE. Each calculation way of the sk-counter value may be numbered. The network sends the corresponding number value to notify the UE of what calculation way to use to calculate the new sk-counter value when the SCG addition/change is performed.

Step 2: in case that the UE evaluates that a conditional PSCell addition/PSCell change execution condition is satisfied or the UE receives a PSCell addition/PSCell change indication sent from the network, the PSCell addition/PSCell change is performed, and the UE generates a new sk-counter value based on the network configuration, and the generation ways include one or more of the following.

Ways based on the sk-counter value are as follows.

Way 1: new sk-counter value = current sk-counter value + 1; if the current sk-counter value is 0, then the new sk-counter value is 1.

Way 2: new sk-counter value = current sk-counter value - 1; if the current sk-counter value is 6000, then the new sk-counter value is 5999.

Way 3: new sk-counter value = current sk-counter value + step *step1* configured by the network; if the current sk-counter value is 0 and *step1* is 2, then the new sk-counter value is 2.

Way 4: new sk-counter value = current sk-counter value - step *step2* configured by the network; if the current sk-counter value is 6000 and *step2* is 3, then the new sk-counter value is 5997.

Way 5: new sk-counter value = current sk-counter value + step *step3* automatically generated by UE; if the current sk-counter value is 0 and *step3* is 10, the new sk-counter value is 10.

Way 6: new sk-counter value = current sk-counter value - step *step4* automatically generated by UE; if the current sk-counter value is 6000 and *step4* is 20, then the new sk-counter value is 5980.

Way 7: new sk-counter value = current sk-counter value + N × a number of times to this SCG + cell group ID/index or SN ID/index or PSCell ID/index; if the current sk-counter value is 0, this is the first time adding/changing to this SCG, cell group ID/index or SN ID/index or PSCell ID/index is 3, and N (a number of configured candidate SCGs) is 5, then the new sk-counter value is 8.

Way 8: new sk-counter value = current sk-counter value × cell group ID/index or SN ID/index or PSCell ID/index + a number of times to this SCG; if the current sk-counter value is 0, this is the first time adding/changing to this SCG, cell group ID/index or SN ID/index or PSCell ID/index is 3, then the new sk-counter value is 1.

Way 9: new sk-counter value = cell group ID/index or SN ID/index or PSCell ID/index × a number of times to this SCG + current sk-counter value; if the current sk-counter value is 0, this is the first time adding/changing to this SCG, cell group ID/index or SN ID/index or PSCell ID/index is 3, then the new sk-counter value is 3.

Ways based on the offset are as follows.

New sk-counter value = *SKO* + offset; and an initial value of the offset is 0.

Way 1: new sk-counter value = *SKO* + offset; if *SKO* is 0, and offset = offset + 1, then the new sk-counter value is 1.

Way 2: new sk-counter value = *SKO* + offset; if *SKO* is 6000, and offset = offset-1, then the new sk-counter value is 5999.

Way 3: new sk-counter value = *SKO* + offset; if *SKO* is 0, offset = offset + step, and the step is 2, then the new sk-counter value is 2.

Way 4: new sk-counter value = *SKO* + offset; if *SKO* is 6000, offset = offset-step, and the step is 3, then the new sk-counter value is 5997.

Way 5: new sk-counter value = *SKO* + offset; if *SKO* is 0, offset = offset + step automatically generated by the UE, and the step automatically generated by the UE is 4, then the new sk-counter value is 4.

Way 6: new sk-counter value = *SKO* + offset; if *SKO* is 6000, offset = offset - step automatically generated by the UE, and the step automatically generated by the UE is 5, then the new sk-counter value is 5995.

Way 7: new sk-counter value = *SKO* + offset; if *SKO* is 0, offset = offset + N (number of configured candidate SCGs) × a number of times to this SCG + cell group ID/index or SN ID/index or PSCell ID/index, N is 5, the UE is added/changed to this SCG for a first time, and an index of this SCG is 3, then the new sk-counter value is 8.

Way 8: new sk-counter value = *SKO* + offset; if *SKO* is 0, offset = offset × cell group ID/index or SN ID/index or PSCell ID/index + a number of times to this SCG, the UE is added/changed to this SCG for a second time, and an index of this SCG 3, then the new sk-counter value is 2.

Way 9: new sk-counter value = *SKO* + offset; if *SKO* is 0, offset = cell group ID/index or SN ID/index or PSCell ID/index × a number of times to this SCG + offset, the UE is added/changed to this SCG for a third time, and an index of this SCG is 1, then the new sk-counter value is 3.

A way based on the sk-counter list is as follows.

Way 1: if the network configures the sk-counter list for the UE, the UE may use the sk-counter value in the sk-counter list.

A way based on the saved sk-counter value is as follows.

If the UE generates the sk-counter value used for this SCG addition/change based on the first configuration information and stores the sk-counter value after a previous SCG addition/change or after receiving the first configuration information, the UE uses the saved sk-counter value. It should be noted that the way for determining the sk-counter value may adopt various ways in step 2, and the specific way is not limited.

Other ways: the new sk-counter value is generated based on the sk-counter value carried in the SCG addition/change indication sent from the network.

In addition, the UE adds 1 to the counter value, and the initial value of the counter is 0 (the counter value records the number of times the UE accesses the SCG).

It should be noted that the selection of the above ways is used in accordance with a way agreed in advance or a way configured by the network (the calculation way configured by the network).

Step 3-1: the UE uses the new sk-counter value and an MN side *K_{gNB}* to generate a new SCG side security key *S-K_{gNB}.*

Step 3-2: the UE uses a saved *S-K_{gNB},* where the *S-K_{gNB},* used for this SCG addition/change, is generated based on the first configuration information after a previous SCG addition/change or after the UE receives the first configuration information.

It should be noted that a determination way of the *S-K_{gNB}* value may adopt various ways in steps 2 and 3 above, and is not specifically limited.

Step 4: the UE may notify the MN of the sk-counter value used by the UE, the sk-counter index, the counter value, the offset value, the step automatically generated by the UE, etc. in the uplink message, which may be reported in an RRC reconfiguration complete uplink message.

Step 5-1: the MN side may receive the sk-counter value, the sk-counter index, the counter value, the offset value, the step automatically generated by the UE, etc. sent from the UE, and also generate a new sk-counter value and a new SCG side security key *S-K_{gNB}* in the same way as the above-mentioned UE side, and send them to the target SN.

Step 5-2: the MN side may receive the sk-counter value, the sk-counter index, the counter value, the offset value, the step automatically generated by the UE, etc. sent from the UE, and also generate a new sk-counter value and a new SCG side security key *S-K_{gNB}* in the same way as the above-mentioned UE side, and send them to each candidate target SN (the sk-counter value of each candidate target SCG may be the same or different, depending on a calculation way of the selected new sk-counter value).

It should be noted that in step 5-1, the new sk-counter value and the new SCG side security key *S-K_{gNB}* are sent after the MN determines the candidate target SCG selected by the UE (it may be sent along with the RRC reconfiguration complete message or other RRC messages), and in step 5-2, the new sk-counter value and the new SCG side security key *S-K_{gNB}* are sent when the MN is not sure of the candidate target SCG selected by the UE (it can be sent after the MN sends the configuration to the UE).

In step 5-1, the *S-K_{gNB}* may be sent to the candidate target SN in one or more of the following ways:
(1) a direct *S-K_{gNB}* value; or
(2) an *S-K_{gNB}* index.

In step 5-2, the *S-K_{gNB}* may be sent to the candidate target SN in one or more of the following ways:
(1) a specific *S-K_{gNB}* value;
(2) an *S-K_{gNB}* list; or
(3) a C-RNTI list.

For step 5-1, when the UE is added/changed to a candidate target SCG, the MN may directly send a new *S-K_{gNB}* value to the target SN, or send an *S-K_{gNB}* index to the target SN, but before that, the *S-K_{gNB}* list needs to be sent to the target SN.

For step 5-2, similarly, after the MN sends the security configuration information to the UE, the MN may send a new *S-K_{gNB}* value and *S-K_{gNB}* list to each candidate target SN. When the UE is added/changed to a candidate target SCG, the target SN may directly use the new *S-K_{gNB}* value, or the MN sends the *S-K_{gNB}* index to the target SN to indicate which *S-K_{gNB}* in the *S-K_{gNB}* list the target SN uses. For the C-RNTI list in step 5-2, the MN may send the C-RNTI list and a correspondence relationship between the C-RNTI and the *S-K_{gNB}* to the target SN, so that when the UE accesses the target SN, the target SN knows the C-RNTI used by the UE, and then knows the *S-K_{gNB}* value used by the UE.

Step 6-1: the target SCG receives the new *S-K_{gNB}* or *S-K_{gNB}* index, etc. sent from the MN. When the UE accesses the target SCG, the target SCG and the UE use the new *S-K_{gNB}* for data transmission.

Step 6-2: each candidate target SCG receives the new *S-K_{gNB}* or *S-K_{gNB}* list, etc. sent from the MN. When the UE accesses the candidate target SCG, the candidate target SCG and the UE use the new *S-K_{gNB}* for data transmission.

In addition, in any of the embodiments of the present application, when the UE performs SCG addition/change and generates a new sk-counter value or counter value, the UE needs to determine, that is, to determine whether the new sk-counter value is greater than the maximum sk-counter value *SK-Max* configured by the network, and whether the new counter value is greater than the maximum counter value *Counter-Max* configured by the network. If one of them is true, the UE may perform one or more of the following actions:
(1) the UE may report indication information to the MN, indicating that the maximum threshold is reached;
(2) the UE may automatically release the configuration information of this SCG/SN;
(3) the UE releases the configuration information of all candidate SCGs;
(4) the UE no longer uses this SN as a candidate; or
(5) the UE ends an evaluation of an execution conditional for this SCG/SN.

After the network receives the indication reported from the UE, the network may perform one or more of the following:
(1) the network releases the configuration information of this SCG/SN/CU;
(2) the network releases the configuration information of all candidate SCGs;
(3) the network reconfigures the configuration information of this candidate SCG/SN/CU;
(4) the network reconfigures the configuration information of all candidate SCGs;
(5) the network reconfigures an MN key; or
(6) the network reconfigures the sk-counter value or security information of this candidate SCG/SN/CU.

Embodiment 2: an MN configures security configuration information (global variable) for a UE, and the UE performs SCG addition/change to access to a candidate SCG that has not been accessed before, and a new SCG side security key *S-K_{gNB}* is generated by the UE and each candidate target SN.

Step **1-1:** the MN sends multiple pieces of pre-configured candidate SCG configuration information to the UE.

Step 1-2: the MN sends one or more types of the following configuration information to the UE:
(1) a first sk-counter value *SKO;*
(2) a maximum sk-counter value *SK-Max;*
(3) a maximum number of accesses *Counter-Max;*
(4) a first step;
(5) a sk-counter list (may include sk-counter index);
(6) a C-RNTI list;
(7) a cell group ID/index;
(8) an SN ID/index; or
(9) a selected calculation way.

A network configures an initial sk-counter value *SKO* for the UE. The initial sk-counter value may be a smaller value or a larger value, such as 0 (smaller value) or 6000 (larger value).

For the maximum sk-counter value *SK-Max,* the maximum value is a maximum sk-counter value that the UE may use.

For the maximum number of accesses *Counter-Max,* the maximum number of accesses is a maximum number of times the UE performs SCG addition/change.

The first step may be divided into two cases, as follows.

A step *step1* indicates a step that the network hopes the UE may increase based on a current sk-counter value when calculating a new sk-counter value. For example, when *step1* is configured as 2, it means that each time the UE performs addition/change to a new candidate SCG, the UE generates a new sk-counter value that is the current sk-counter value plus *step1.* Here, if the SCG addition/change is performed for a first time, the new sk-counter value generated by the UE is 2; if the SCG addition/change is performed for a second time, the new sk-counter value generated by the UE is 4; if the SCG addition/change is performed for a third time, the new sk-counter value generated by the UE is 6, and so on.

Step *step2* indicates a step that the network hopes the UE may decrease based on the current sk-counter value when calculating a new sk-counter value. For example, when *step2* is configured as 3, it means that each time the UE performs addition/change to a new candidate SCG, the UE generates a new sk-counter value that is the current sk-counter value minus *step2.* Here, if the SCG addition/change is performed for a first time, the new sk-counter value generated by the UE is 5997; if the SCG addition/change is performed for a second time, the new sk-counter value generated by the UE is 5994; if the SCG addition/change is performed for a third time, the new sk-counter value generated by the UE is 5991, and so on.

The sk-counter list is a plurality of sk-counter values configured by the MN for the UE, which is used when subsequently, the UE performs SCG addition/change.

The C-RNTI list is a plurality of C-RNTI values configured by the MN for the UE, which is used when subsequently, the UE performs SCG addition/change.

The Cell group ID/index of the SCG configured by the network is mainly used for the UE to calculate a new sk-counter value. The cell group ID/index is a sequence number value configured by the network for multiple candidate SCGs, such as id/index = 0, 1, 2, 3, 4, 5, etc.

The SN ID/index of the SN configured by the network is mainly used for the UE to calculate a new sk-counter value. The SN ID/index is a sequence number value configured by the network for multiple candidate SNs, such as id/index = 0, 1, 2, 3, 4, 5, etc.

The network configures new calculation ways of sk-counter value for the UE. Each calculation way of the sk-counter value may be numbered. The network sends the corresponding number value to notify the UE of what calculation way to use to calculate the new sk-counter value when the SCG addition/change is performed.

Step 2: in case that the UE evaluates that a conditional PSCell addition/PSCell change execution condition is satisfied or the UE receives a PSCell addition/PSCell change indication sent from the network, the PSCell addition/PSCell change is perofrmed, and the UE generates a new sk-counter value based on the network configuration, and the generation ways include one or more of the following.

Ways based on the sk-counter value are as follows.

Way 1: new sk-counter value = current sk-counter value + 1; if the current sk-counter value is 0, then the new sk-counter value is 1.

Way 2: new sk-counter value = current sk-counter value - 1; if the current sk-counter value is 6000, then the new sk-counter value is 5999.

Way 3: new sk-counter value = current sk-counter value + step *step1* configured by the network; if the current sk-counter value is 0 and *step1* is 2, then the new sk-counter value is 2.

Way 4: new sk-counter value = current sk-counter value - step *step2* configured by the network; if the current sk-counter value is 6000 and *step2* is 3, then the new sk-counter value is 5997.

Way 5: new sk-counter value = current sk-counter value + step *step3* automatically generated by UE; if the current sk-counter value is 0 and *step3* is 10, then the new sk-counter value is 10.

Way 6: new sk-counter value = current sk-counter value - step *step4* automatically generated by UE; if the current sk-counter value is 6000 and *step4* is 20, then the new sk-counter value is 5980.

Way 7: new sk-counter value = current sk-counter value + N × a number of times back to this SCG + cell group ID/index or SN ID/index or PSCell ID/index; if the current sk-counter value is 0, this is the first time adding/changing to this SCG, cell group ID/index or SN ID/index or PSCell ID/index is 3, and N (a number of configured candidate SCGs) is 5, then the new sk-counter value is 8.

Way 8: new sk-counter value = current sk-counter value × cell group ID/index or SN ID/index or PSCell ID/index + a number of times back to this SCG; if the current sk-counter value is 0, this is the first time adding/changing to this SCG, cell group ID/index or SN ID/index or PSCell ID/index is 3, then the new sk-counter value is 1.

Way 9: new sk-counter value = cell group ID/index or SN ID/index or PSCell ID/index × a number of times back to this SCG + current sk-counter value; if the current sk-counter value is 0, this is the first time adding/changing to this SCG, cell group ID/index or SN ID/index or PSCell ID/index is 3, then the new sk-counter value is 3.

Ways based on the offset are as follows.

New sk-counter value = *SKO* + offset; and an initial value of the offset is 0.

Way 1: new sk-counter value = *SKO* + offset; if *SKO* is 0, and offset = offset + 1, then the new sk-counter value is 1.

Way 2: new sk-counter value = *SKO* + offset; if *SKO* is 6000, and offset = offset-1, then the new sk-counter value is 5999.

Way 3: new sk-counter value = *SKO* + offset; if *SKO* is 0, offset = offset + step, and the step is 2, then the new sk-counter value is 2.

Way 4: new sk-counter value = *SKO* + offset; if *SKO* is 6000, offset = offset-step, and the step is 3, then the new sk-counter value is 5997.

Way 5: new sk-counter value = *SKO* + offset; if *SKO* is 0, offset = offset + step automatically generated by the UE, and the step automatically generated by the UE is 4, then the new sk-counter value is 4.

Way 6: new sk-counter value = *SKO* + offset; if *SKO* is 6000, offset = offset - step automatically generated by the UE, and the step automatically generated by the UE is 5, then the new sk-counter value is 5995.

Way 7: new sk-counter value = *SKO* + offset; if *SKO* is 0, offset = offset + N (number of configured candidate SCGs) × a number of times back to this SCG + cell group ID/index or SN ID/index or PSCell ID/index, N is 5, the UE is added/changed to this SCG for a first time, and an index of this SCG is 3, then the new sk-counter value is 8.

Way 8: new sk-counter value = *SKO* + offset; if *SKO* is 0, offset = offset × cell group ID/index or SN ID/index or PSCell ID/index + a number of times back to this SCG, the UE is added/changed to this SCG for a second time, and an index of this SCG 3, then the new sk-counter value is 2.

Way 9: new sk-counter value = *SKO* + offset; if *SKO* is 0, offset = cell group ID/index or SN ID/index or PSCell ID/index × a number of times back to this SCG + offset, the UE is added/changed to this SCG for a third time, and an index of this SCG is 1, then the new sk-counter value is 3.

A way based on the sk-counter list is as follows.

Way 1: if the network configures the sk-counter list for the UE, the UE may use the sk-counter value in the sk-counter list.

A way based on the saved sk-counter value is as follows.

If the UE generates the sk-counter value used for this SCG addition/change based on the first configuration information and stores the sk-counter value after a previous SCG addition/change or after receiving the first configuration information, the UE uses the saved sk-counter value. It should be noted that the way for determining the sk-counter value may adopt various ways in step 2, and the specific way is not limited.

Other ways: the new sk-counter value is generated based on the sk-counter value carried in the SCG addition/change indication sent from the network.

In addition, the UE adds 1 to the counter value, and the initial value of the counter is 0.

It should be noted that the selection of the above ways is used in accordance with a way agreed in advance or a way configured by the network (the calculation way configured by the network).

Step 3-1: the UE uses the new sk-counter value and an MN side *K_{gNB}* to generate a new SCG side security key *S-K_{gNB}.*

Step 3-2: the UE uses a saved *S-K_{gNB},* where the *S-K_{gNB},* used for this SCG addition/change, is generated based on the first configuration information after a previous SCG addition/change or after the UE receives the first configuration information.

It should be noted that a determination way of the *S-K_{gNB}* value may adopt various ways in steps 2 and 3 above, and is not specifically limited.

Step 4: the UE may notify the MN of the sk-counter value used by the UE, the sk-counter index, the counter value, the offset value, the step automatically generated by the UE, etc. in the uplink message, which may be reported in an RRC reconfiguration complete uplink message.

Step 5-1: the MN sends the following security configuration related information to the target SN:
(1) an sk-counter value; and
(2) key associated (configuration) information, i.e. all feedback information received from the UE.

Step 5-2: the MN sends the following security configuration related information to the target SN:
(1) a C-RNTI list;
(2) key associated (configuration) information, i.e. configuration information of the UE.

In step 5-1 and step 5-2, the key associated (configuration) information contains one or more types of the following information:
(1) a first sk-counter value *SKO;*
(2) an MN side security key *K_{gNB}* (or provided in other forms to ensure security);
(3) a maximum sk-counter value *SK-Max;*
(4) a maximum number of accesses *Counter-Max;*
(5) a first step;
(6) an sk-counter list (which may include an sk-counter index);
(7) a C-RNTI list (and a mapping relationship with the sk-counter);
(8) a cell group ID/index of this SCG;
(9) an SN ID/index of this SN;
(10) a step automatically generated by the UE, or a counter value reported by the UE, or an offset value reported by the UE; or
(11) a selected calculation way.

It should be noted that in step 5-1, the security configuration related information is sent after the MN determines the candidate target SCG selected by the UE (it may be sent along with the RRC reconfiguration complete message or other RRC messages), and in step 5-2, the security configuration related information is sent when the MN is not sure of the candidate target SCG selected by the UE (it can be sent after the MN sends the configuration to the UE).

It should be noted that for the C-RNTI list in step 5-2, the MN may send the C-RNTI list to the target SN, as well as a correspondence relationship between the C-RNTI and the sk-counter, so that when the UE accesses the target SN, the target SN knows the C-RNTI used by the UE, and then knows the sk-counter value used by the UE.

Step 6-1: the SN side also generates a new sk-counter value and a new SCG side security key *S-K_{gNB}* in the same way as the UE side, where the new sk-counter value and the new SCG side security key *S-K_{gNB}* are used for data transmission with the UE after the UE accesses.

Step 6-2: the SN side also generates a new sk-counter value and a new SCG side security key *S-K_{gNB}* in the same way as the UE side, where the new sk-counter value and the new SCG side security key *S-K_{gNB}* are used for data transmission with the UE after the UE accesses.

In addition, in any of the embodiments of the present application, when the UE performs SCG addition/change and generates a new sk-counter value or counter value, the UE needs to determine, that is, to determine whether the new sk-counter value is greater than the maximum sk-counter value *SK-Max* configured by the network, and whether the new counter value is greater than the maximum counter value *Counter-Max* configured by the network. If one of them is true, the UE may perform one or more of the following actions:
(1) the UE may report indication information to the MN, indicating that the maximum threshold is reached;
(2) the UE may automatically release the configuration information of this SCG/SN;
(3) the UE releases the configuration information of all candidate SCGs;
(4) the UE no longer uses this SN as a candidate; or
(5) the UE ends an evaluation of an execution conditional for this SCG/SN.

After the network receives the indication reported from the UE, the network may perform one or more of the following:
(1) the network releases the configuration information of this SCG/SN/CU;
(2) the network releases the configuration information of all candidate SCGs;
(3) the network reconfigures the configuration information of this candidate SCG/SN/CU;
(4) the network reconfigures the configuration information of all candidate SCGs;
(4) the network reconfigures an MN key; or
(5) the network reconfigures the sk-counter value or security information of this candidate SCG/SN/CU.

Embodiment 3: an MN configures security configuration information (global variable) for a UE, and the UE performs SCG change to access to a candidate SCG that has been accessed before.

Step 1-1: the MN sends multiple pieces of pre-configured candidate SCG configuration information to the UE.

Step 1-2: the MN sends one or more types of the following configuration information to the UE:
(1) a first sk-counter value *SKO;*
(2) a maximum sk-counter value *SK-Max;*
(3) a maximum number of accesses *Counter-Max;*
(4) a first step;
(5) a sk-counter list (may include sk-counter index);
(6) a C-RNTI list;
(7) a cell group ID/index;
(8) an SN ID/index; or
(9) a selected calculation way.

A network configures an initial sk-counter value *SKO* for the UE. The initial sk-counter value may be a smaller value or a larger value, such as 0 (smaller value) or 6000 (larger value).

For the maximum sk-counter value *SK-Max,* the maximum value is a maximum sk-counter value that the UE may use.

For the maximum number of accesses *Counter-Max,* the maximum number of accesses is a maximum number of times the UE performs SCG addition/change.

The first step may be divided into two cases, as follows.

A step *step1* indicates a step that the network hopes the UE may increase based on a current sk-counter value when calculating a new sk-counter value. For example, when *step1* is configured as 2, it means that each time the UE performs addition/change to a new candidate SCG, the UE generates a new sk-counter value that is the current sk-counter value plus *step1.* Here, if the SCG addition/change is performed for a first time, the new sk-counter value generated by the UE is 2; if the SCG addition/change is performed for a second time, the new sk-counter value generated by the UE is 4; if the SCG addition/change is performed for a third time, the new sk-counter value generated by the UE is 6, and so on.

Step *step2* indicates a step that the network hopes the UE may decrease based on the current sk-counter value when calculating a new sk-counter value. For example, when *step2* is configured as 3, it means that each time the UE performs addition/change to a new candidate SCG, the UE generates a new sk-counter value that is the current sk-counter value minus *step2.* Here, if the SCG addition/change is performed for a first time, the new sk-counter value generated by the UE is 5997; if the SCG addition/change is performed for a second time, the new sk-counter value generated by the UE is 5994; if the SCG addition/change is performed for a third time, the new sk-counter value generated by the UE is 5991, and so on.

The sk-counter list is a plurality of sk-counter values configured by the MN for the UE, which is used when subsequently, the UE performs SCG addition/change.

The C-RNTI list is a plurality of C-RNTI values configured by the MN for the UE, which is used when subsequently, the UE performs SCG addition/change.

The Cell group ID/index of the SCG configured by the network is mainly used for the UE to calculate a new sk-counter value. The cell group ID/index is a sequence number value configured by the network for multiple candidate SCGs, such as id/index = 0, 1, 2, 3, 4, 5, etc.

The SN ID/index of the SN configured by the network is mainly used for the UE to calculate a new sk-counter value. The SN ID/index is a sequence number value configured by the network for multiple candidate SNs, such as id/index = 0, 1, 2, 3, 4, 5, etc.

The network configures new calculation ways of sk-counter value for the UE. Each calculation way of the sk-counter value may be numbered. The network sends the corresponding number value to notify the UE of what calculation way to use to calculate the new sk-counter value when the SCG addition/change is performed.

Step 2: in case that the UE evaluates that a conditional PSCell change execution condition is satisfied or the UE receives a PSCell change indication sent from the network, the PSCell change is performed.

Step 3: ways for the UE to generate the new sk-counter value include the following:
(1) using a previous sk-counter value;
(2) using a new sk-counter value; or
(3) using a fixed sk-counter value.

It should be noted that when the UE uses the previous sk-counter value, the UE saves the *S-K_{gNB}* value used when the UE first accesses each candidate SCG in the past, and when leaving the candidate SCG, the UE saves the *S-K_{gNB}* value for use when the UE accesses the candidate SCG again in the future. The saved *S-K_{gNB}* value may be saved in format of a list.

Step 4: in case that the UE uses the new sk-counter value, the UE generates the new sk-counter value based on a network configuration, and the generation ways include one or more of the following.

Ways based on the sk-counter value are as follows.

Way 1: new sk-counter value = current sk-counter value + 1; if the current sk-counter value is 0, then the new sk-counter value is 1.

Way 2: new sk-counter value = current sk-counter value - 1; if the current sk-counter value is 6000, then the new sk-counter value is 5999.

Way 3: new sk-counter value = current sk-counter value + step *step1* configured by the network; if the current sk-counter value is 0 and *step1* is 2, then the new sk-counter value is 2.

Way 4: new sk-counter value = current sk-counter value - step *step2* configured by the network; if the current sk-counter value is 6000 and *step2* is 3, then the new sk-counter value is 5997.

Way 5: new sk-counter value = current sk-counter value + step *step3* automatically generated by UE; if the current sk-counter value is 0 and *step3* is 10, then the new sk-counter value is 10.

Way 6: new sk-counter value = current sk-counter value - step *step4* automatically generated by UE; if the current sk-counter value is 6000 and *step4* is 20, then the new sk-counter value is 5980.

Way 7: new sk-counter value = current sk-counter value + N × a number of times back to this SCG + cell group ID/index or SN ID/index or PSCell ID/index; if the current sk-counter value is 0, this is the first time adding/changing to this SCG, cell group ID/index or SN ID/index or PSCell ID/index is 3, and N (a number of configured candidate SCGs) is 5, then the new sk-counter value is 8.

Way 8: new sk-counter value = current sk-counter value × cell group ID/index or SN ID/index or PSCell ID/index + a number of times back to this SCG; if the current sk-counter value is 0, this is the first time adding/changing to this SCG, cell group ID/index or SN ID/index or PSCell ID/index is 3, then the new sk-counter value is 1.

Way 9: new sk-counter value = cell group ID/index or SN ID/index or PSCell ID/index × a number of times back to this SCG + current sk-counter value; if the current sk-counter value is 0, this is the first time adding/changing to this SCG, cell group ID/index or SN ID/index or PSCell ID/index is 3, then the new sk-counter value is 3.

Ways based on the offset are as follows.

New sk-counter value = *SKO* + offset; and an initial value of the offset is 0.

Way 1: new sk-counter value = *SKO* + offset; if *SKO* is 0, and offset = offset + 1, then the new sk-counter value is 1.

Way 2: new sk-counter value = *SKO* + offset; if *SKO* is 6000, and offset = offset-1, then the new sk-counter value is 5999.

Way 3: new sk-counter value = *SKO* + offset; if *SKO* is 0, offset = offset + step, and the step is 2, then the new sk-counter value is 2.

Way 4: new sk-counter value = *SKO* + offset; if *SKO* is 6000, offset = offset-step, and the step is 3, then the new sk-counter value is 5997.

Way 5: new sk-counter value = *SKO* + offset; if *SKO* is 0, offset = offset + step automatically generated by the UE, and the step automatically generated by the UE is 4, then the new sk-counter value is 4.

Way 6: new sk-counter value = *SKO* + offset; if *SKO* is 6000, offset = offset - step automatically generated by the UE, and the step automatically generated by the UE is 5, then the new sk-counter value is 5995.

Way 7: new sk-counter value = *SKO* + offset; if *SKO* is 0, offset = offset + N (number of configured candidate SCGs) × a number of times back to this SCG + cell group ID/index or SN ID/index or PSCell ID/index, N is 5, the UE is added/changed to this SCG for a first time, and an index of this SCG is 3, then the new sk-counter value is 8.

Way 8: new sk-counter value = *SKO* + offset; if *SKO* is 0, offset = offset × cell group ID/index or SN ID/index or PSCell ID/index + a number of times back to this SCG, the UE is added/changed to this SCG for a second time, and an index of this SCG 3, then the new sk-counter value is 2.

Way 9: new sk-counter value = *SKO* + offset; if *SKO* is 0, offset = cell group ID/index or SN ID/index or PSCell ID/index × a number of times back to this SCG + offset, the UE is added/changed to this SCG for a third time, and an index of this SCG is 1, then the new sk-counter value is 3.

A way based on the sk-counter list is as follows.

Way 1: if the network configures the sk-counter list for the UE, the UE may use the sk-counter value in the sk-counter list.

A way based on the saved sk-counter value is as follows.

If the UE generates the sk-counter value used for this SCG addition/change and saves the sk-counter value after the previous SCG addition/change, the UE uses the saved sk-counter value. It should be noted that the sk-counter value may be determined by various ways in steps 3 and 4, and the specific way is not limited.

Other ways: the new sk-counter value is generated based on the sk-counter value carried in the SCG addition/change indication sent from the network.

In addition, the UE adds 1 to the counter value, and the initial value of the counter is 0.

It should be noted that the selection of the above ways is used in accordance with a way agreed in advance or a way configured by the network (the calculation way configured by the network).

Step 5-1: the UE uses the new sk-counter value and an MN side *K_{gNB}* to generate a new SCG side security key *S-K_{gNB}.*

Step 5-2: the UE uses the saved *S-K_{gNB},* where the *S-K_{gNB},* used for this SCG addition/change is generated after a previous SCG addition/change is performed by the UE.

It should be noted that the way for determining the *S-K_{gNB}* value may adopt various ways in the above steps 4 and 5, and is not specifically limited.

Step 6: the UE may notify the MN of the sk-counter value used by the UE, the sk-counter index, the counter value, the offset value, the step automatically generated by the UE, etc. in the uplink message, which may be reported in an RRC reconfiguration complete uplink message.

Step 7: if the UE uses the previous sk-counter value, the MN and/or SN side also needs to save the *S-K_{gNB}* value, used by the UE when the UE leaves a candidate SCG that the UE accesses for a first time, and save the *S-K_{gNB}* value for use when the UE accesses the candidate SCG again in the future.

Step 8: the MN and/or SN generates a new SCG side security key *S-K_{gNB}* in the same way as the UE side.

In addition, in any of the embodiments of the present application, when the UE performs SCG addition/change and generates a new sk-counter value or counter value, the UE needs to determine, that is, to determine whether the new sk-counter value is greater than the maximum sk-counter value *SK-Max* configured by the network, and whether the new counter value is greater than the maximum counter value *Counter-Max* configured by the network. If one of them is true, the UE may perform one or more of the following actions:
(1) the UE may report indication information to the MN, indicating that the maximum threshold is reached;
(2) the UE may automatically release the configuration information of this SCG/SN;
(3) the UE releases the configuration information of all candidate SCGs;
(4) the UE no longer uses this SN as a candidate; or
(5) the UE ends an evaluation of an execution conditional for this SCG/SN.

After the network receives the indication reported from the UE, the network may perform one or more of the following:
(1) the network releases the configuration information of this SCG/SN/CU;
(2) the network releases the configuration information of all candidate SCGs;
(3) the network reconfigures the configuration information of this candidate SCG/SN/CU;
(4) the network reconfigures the configuration information of all candidate SCGs;
(4) the network reconfigures an MN key; or
(5) the network reconfigures the sk-counter value or security information of this candidate SCG/SN/CU.

Embodiment 4: the MN configures a security configuration information list (local variable) for a UE, and the UE performs SCG addition/change to access to a candidate SCG that has not been accessed before. A new SCG side security key *S-K_{gNB}* is generated by the UE and the MN.

Step **1-1:** the MN sends multiple pieces of pre-configured candidate SCG configuration information to the UE.

Step 1-2: the MN sends one or more types of the following configuration information to the UE:
(1) a first sk-counter value *SKO;*
(2) a maximum sk-counter value *SK-Max;*
(3) a maximum number of accesses *Counter-Max;*
(4) a first step;
(5) a sk-counter list (may include sk-counter index);
(6) a C-RNTI list;
(7) a cell group ID/index;
(8) an SN ID/index; or
(9) a selected calculation way.

It should be noted that the above configuration information is content that each security configuration information in the security configuration information list may contain. If necessary, in case that the security configuration information list is configured, the above information may also be configured as a global variable.

The network configures multiple sk-counter (initial) values for the UE, and the multiple sk-counter (initial) values are configured for multiple SN/SCG/PSCells respectively, that is, the sk-counter (initial) value is configured per SN or per CG or per Cell. For example, if the MN configures a total of 5 pieces of candidate SCG configuration information to the UE, taking the security configuration information as per SCG configuration as an example, the multiple sk-counter values may be 0 for candidate SCGO, 10 for candidate SCG1, 20 for candidate SCG2, 30 for candidate SCG3, 40 for candidate SCG4, and 50 for candidate SCGS; the multiple sk-counter values may also be 9 for candidate SCGO, 19 for candidate SCG1, 29 for candidate SCG2, 39 for candidate SCG3, 49 for candidate SCG4, and 59 for candidate SCGS; the multiple sk-counter values may be fixed sk-counter values configured by the network for each SN/SCG/PSCell.

For the maximum sk-counter value *SK-Max,* the maximum value is a maximum value of sk-counter that the UE may use for each candidate SN.

For the maximum number of accesses *Counter-Max,* the maximum number of accesses is a maximum number of accesses that the UE performs SCG addition/change for each candidate SN.

The first step may be divided into two cases, as follows.

Step *step1* indicates a step that the network hopes the UE may increase based on a current sk-counter value of this candidate target SN when calculating a new sk-counter value of this candidate target SN. For example, when *step1* is configured as 2, it means that each time the UE is added/changed to this candidate SCG, the UE generates a new sk-counter value of the current sk-counter value plus *step1.* Here, if the UE is added/changed to SCG3 for a first time, the new sk-counter value is 32; if the UE is added/changed to SCG3 for a second time, the new new sk-counter value is 34; if the UE is added/changed to SCG3 for a third time, the new sk-counter value is 36, and so on.

Step *step2* indicates a step that the network hopes the UE may decrement based on a current sk-counter value of this candidate target SN when calculating a new sk-counter value of this candidate target SN. For example, when *step2* is configured as 3, it means that each time the UE is added/changed to a new candidate SCG, the UE generates a new sk-counter value of the current sk-counter value minus *step2.* Here, if the UE is added/changed to SCG3 for a first time, the new sk-counter value is 36; if the UE is added/changed to SCG3 for a second time, the new sk-counter value is 33; if the UE is added/changed to SCG3 for a third time, the new sk-counter value is 30, and so on.

The sk-counter list is a plurality of sk-counter values for each candidate target SN configured by the MN for the UE, the sk-counter list is used when subsequently, the UE performs SCG addition/change to this SCG.

The C-RNTI list is a plurality of C-RNTI values for each candidate target SN configured by the MN for the UE, the C-RNTI list is used when subsequently, the UE performs SCG addition/change to this SCG.

The Cell group ID/index of the SCG configured by the network is mainly used for the UE to calculate a new sk-counter value. The cell group ID/index is a sequence number value configured by the network for multiple candidate SCGs, such as id/index = 0, 1, 2, 3, 4, 5, etc.

The SN ID/index of the SN configured by the network is mainly used for the UE to calculate a new sk-counter value. The SN ID/index is a sequence number value configured by the network for multiple candidate SNs, such as id/index = 0, 1, 2, 3, 4, 5, etc.

The network configures new calculation ways of sk-counter value for the UE. Each calculation way of the sk-counter value may be numbered. The network sends the corresponding number value to notify the UE of what calculation way to use to calculate the new sk-counter value when the SCG addition/change is performed.

Step 2: in case that the UE evaluates that a conditional PSCell addition/PSCell change execution condition is satisfied or the UE receives a PSCell addition/PSCell change indication sent from the network, the PSCell addition/PSCell change is perofrmed, and the UE generates a new sk-counter value based on the network configuration, and ways for the UE to generate the new sk-counter value include the following:
(1) using a fixed sk-counter value configured by the network; or
(2) using a new sk-counter value (which may be an initial sk-counter value).

Step 3: in case that the UE uses the new sk-counter value, if the initial sk-counter value is not used, the new sk-counter value may be generated in one or more of the following ways.

Ways based on the sk-counter value are as follows.

Way 1: new sk-counter value = current sk-counter value + 1; if the current sk-counter value of SCG3 is 33, then the new sk-counter value is 34.

Way 2: new sk-counter value = current sk-counter value - 1; if the current sk-counter value of SCG3 is 33, then the new sk-counter value is 32.

Way 3: new sk-counter value = current sk-counter value + step *step1* configured by the network; if the current sk-counter value of SCG3 is 30 and *step1* is 2, then the new sk-counter value is 32.

Way 4: new sk-counter value = current sk-counter value - step *step2* configured by network; if the current sk-counter value of SCG3 is 39 and *step2* is 3, then the new sk-counter value is 36.

Way 5: new sk-counter value = current sk-counter value + step *step3* automatically generated by the UE; if the current sk-counter value of SCG3 is 30 and *step3* is 4, then the new sk-counter value is 34.

Way 6: new sk-counter value = current sk-counter value - step *step4* automatically generated by the UE; if the current sk-counter value of SCG3 is 39 and *step4* is 4, then the new sk-counter value is 35.

Way 7: new sk-counter value = current sk-counter value + N × a number of times back to this SCG + cell group ID/index or SN ID/index or PSCell ID/index; if the current sk-counter value of SCG3 is 30, this is the first time adding/changing to this SCG, the cell group ID/index or SN ID/index or PSCell ID/index is 3, and N (a number of configured candidate SCGs) is 5, then the new sk-counter value is 38.

Way 8: new sk-counter value = current sk-counter value × cell group ID/index or SN ID/index or PSCell ID/index + a number of times back to this SCG; if the current sk-counter value is 30, this is the first time adding/changing to this SCG, and the cell group ID/index or SN ID/index or PSCell ID/index is 3, then the new sk-counter value is 61, which exceeds an sk-counter value range of SCG3, so this sk-counter value cannot be used.

Way 9: new sk-counter value = cell group ID/index or SN ID/index or PSCell ID/index × a number of times back to this SCG + current sk-counter value; if the current sk-counter value is 30, this is the first time adding/changing to this SCG, and the cell group ID/index or SN ID/index or PSCell ID/index is 3, then the new sk-counter value is 33.

Ways based on the offset are as follows.

New sk-counter value = *SKO* + offset; and an initial value of the offset is 0.

Way 1: new sk-counter value = *SKO* + offset; if *SKO* of SCG1 is 10, and offset = offset + 1, then the new sk-counter value is 11.

Way 2: new sk-counter value = *SKO* + offset; if *SKO* of SCG1 is 19, and offset = offset - 1, then the new sk-counter value is 18.

Way 3: new sk-counter value = *SKO* + offset; if *SKO* of SCG1 is 10, offset = offset + step, and step is 2, then the new sk-counter value is 12.

Way 4: new sk-counter value = *SKO* + offset; if SK0 of SCG1 is 19, offset = offset - step, and step is 3, then the new sk-counter value is 16.

Way 5: new sk-counter value = *SKO* + offset; if *SKO* of SCG1 is 10, offset = offset + step automatically generated by the UE, and the step automatically generated by the UE is 4, then the new sk-counter value is 14.

Way 6: new sk-counter value = *SKO* + offset; if *SKO* of SCG1 is 19, offset = offset - step automatically generated by the UE, and the step automatically generated by the UE is 5, then the new sk-counter value is 14.

Way 7: new sk-counter value = *SKO* + offset; if *SKO* of SCG1 is 10, offset = offset + N (a number of configured candidate SCGs) × a number of times back to this SCG + cell group ID/index or SN ID/index or PSCell ID/index, N is 5, the UE is added/changed to SCG1 for a first time, and an index of this SCG is 1, then the new sk-counter value is 16.

Way 8: new sk-counter value = *SKO* + offset; if *SKO* is 10, offset = offset × cell group ID/index or SN ID/index or PSCell ID/index + a number of times back to this SCG, the UE is added/changed to SCG1 for a second time, and an index of this SCG is 1, then the new sk-counter value is 12.

Way 9: new sk-counter value = *SKO* + offset; if *SKO* is 10, offset = cell group ID/index or SN ID/index or PSCell ID/index × a number of times back to this SCG + offset, the UE is added/changed to SCG1 for a third time, and in index of this SCG is 1, then the new sk-counter value is 13.

A way based on the sk-counter list is as follows.

Way 1: if the network configures the sk-counter list used by each candidate target SCG for the UE, the UE may use the sk-counter value in the sk-counter list.

A way based on the saved sk-counter value is as follows.

When the UE receives the first configuration information, the UE generates the sk-counter value used for this SCG addition/change based on the first configuration information and saves the sk-counter value, and the UE uses the saved sk-counter value. It should be noted that the determination way of the sk-counter value may adopt various ways in step 3, and is not specifically limited.

Other ways: the new sk-counter value is generated based on the sk-counter value carried in the SCG addition/change indication sent from the network.

In addition, the UE adds 1 to the counter value, and the initial value of the counter is 0.

It should be noted that the selection of the above ways is used in accordance with a way agreed in advance or a way configured by the network.

Step 4-1: the UE uses the new sk-counter value and an MN side *K_{gNB}* to generate a new SCG side security key *S-K_{gNB}.*

Step 4-2: the UE uses the saved *S-K_{gNB},* where the *S-K_{gNB}* used for this SCG addition/change is generated by the UE based on the first configuration information after receiving the first configuration information.

It should be noted that the way for determining the *S-K_{gNB}* value may adopt various ways in the above steps 3 and 4, and is not specifically limited.

Step 5: the UE may notify the MN of the sk-counter value used by each candidate target SCG, the sk-counter index, the counter value, the offset value, the step automatically generated by the UE, etc. in an uplink message, which may be reported in an RRC reconfiguration complete uplink message.

Step 6-1: the MN side may receive the sk-counter value, the sk-counter index, the counter value, the offset value, the step automatically generated by the UE, etc. for this candidate target SCG sent from the UE, and also generate a new sk-counter value and a new SCG side security key *S-K_{gNB}* for this candidate target SCG in the same way as the above UE side, and send them to the target SN.

Step 6-2: The MN side may receive the sk-counter value, the sk-counter index, the counter value, the offset value, and the step automatically generated by the UE for each candidate target SCG sent from the UE, and also generate a new sk-counter value and a new SCG side security key *S-K_{gNB}* for each candidate target SCG in the same way as the above UE side, and send them to each candidate target SN.

It should be noted that in step 6-1, the new sk-counter value and the new SCG side security key *S-K_{gNB}* are sent after the MN determines the candidate target SCG selected by the UE (it may be sent along with the RRC reconfiguration complete message, or other RRC messages), and in step 6-2, the new sk-counter value and the new SCG side security key *S-K_{gNB}* are sent when the MN is not sure of the candidate target SCG selected by the UE (it may be sent after the MN sends the configuration to the UE).

In step 6-1, the *S-K_{gNB}* may be sent to the candidate target SN in one or more of the following ways:
(1) a direct *S-K_{gNB}* value; or
(2) an *S-K_{gNB}* index.

In step 6-2, the *S-K_{gNB}* may be sent to the candidate target SN in one or more of the following ways:
(1) a specific *S-K_{gNB}* value;
(2) an *S-K_{gNB}* list; or
(3) a C-RNTI list.

For step 6-1, when the UE is added/changed to a candidate target SCG, the MN may directly send a new *S-K_{gNB}* value to the target SN, or send an *S-K_{gNB}* index to the target SN, but before that, the *S-K_{gNB}* list needs to be sent to the target SN.

For step 6-2, similarly, after the MN sends the security configuration information to the UE, the MN may send a new *S-K_{gNB}* value and *S-K_{gNB}* list to each candidate target SN. When the UE is added/changed to a candidate target SCG, the target SN may directly use the new *S-K_{gNB}* value, or the MN sends the *S-K_{gNB}* index to the target SN to indicate which *S-K_{gNB}* in the *S-K_{gNB}* list the target SN uses. For the C-RNTI list in 6-2, the MN may send the C-RNTI list and a correspondence relationship between the C-RNTI and the *S-K_{gNB}* to the target SN, so that when the UE accesses the target SN, the target SN knows the C-RNTI used by the UE, and then knows the *S-K_{gNB}* value used by the UE.

Step 7-1: the target SCG receives the new *S-K_{gNB}* or *S-K_{gNB}* index sent from the MN. When the UE accesses the target SCG, the target SCG and the UE use the new *S-K_{gNB}* for data transmission.

Step 7-2: Each candidate target SCG receives the new *S-K_{gNB}* or *S-K_{gNB}* list sent from the MN. When the UE accesses the candidate target SCG, the candidate target SCG and the UE use the new *S-K_{gNB}* for data transmission.

In addition, in any of the embodiments of the present application, when the UE performs SCG addition/change and generates a new sk-counter value or counter value, the UE needs to determine, that is, to determine whether the new sk-counter value is greater than the maximum sk-counter value *SK-Max* configured by the network, and whether the new counter value is greater than the maximum counter value *Counter-Max* configured by the network. If one of them is true, the UE may perform one or more of the following actions:
(1) the UE may report indication information to the MN, indicating that the maximum threshold is reached;
(2) the UE may automatically release the configuration information of this SCG/SN;
(3) the UE releases the configuration information of all candidate SCGs;
(4) the UE no longer uses this SN as a candidate; or
(5) the UE ends an evaluation of an execution conditional for this SCG/SN.

After the network receives the indication reported from the UE, the network may perform one or more of the following:
(1) the network releases the configuration information of this SCG/SN/CU;
(2) the network releases the configuration information of all candidate SCGs;
(3) the network reconfigures the configuration information of this candidate SCG/SN/CU;
(4) the network reconfigures the configuration information of all candidate SCGs;
(4) the network reconfigures an MN key; or
(5) the network reconfigures the sk-counter value or security information of this candidate SCG/SN/CU.

Embodiment 5: an MN configures a security configuration information list (local variable) for a UE, and the UE performs SCG addition/change to a candidate SCG that has not been accessed. A new SCG side security key is generated by the UE and each candidate target SN.

Step **1-1:** the MN sends multiple pieces of pre-configured candidate SCG configuration information to the UE.

Step 1-2: the MN sends one or more types of the following configuration information to the UE:
(1) a first sk-counter value *SKO;*
(2) a maximum sk-counter value *SK-Max;*
(3) a maximum number of accesses *Counter-Max;*
(4) a first step;
(5) a sk-counter list (may include sk-counter index);
(6) a C-RNTI list;
(7) a cell group ID/index;
(8) an SN ID/index; or
(9) a selected calculation way.

It should be noted that the above configuration information is content that each security configuration information in the security configuration information list may contain. If necessary, in case that the security configuration information list is configured, the above information may also be configured as a global variable.

The network configures multiple sk-counter (initial) values for the UE, and the multiple sk-counter (initial) values are configured for multiple SN/SCG/PSCells respectively, that is, the sk-counter (initial) value is configured per SN or per CG or per Cell. For example, if the MN configures a total of 5 pieces of candidate SCG configuration information to the UE, taking the security configuration information as per SCG configuration as an example, the multiple sk-counter values may be 0 for candidate SCGO, 10 for candidate SCG1, 20 for candidate SCG2, 30 for candidate SCG3, 40 for candidate SCG4, and 50 for candidate SCGS; the multiple sk-counter values may also be 9 for candidate SCGO, 19 for candidate SCG1, 29 for candidate SCG2, 39 for candidate SCG3, 49 for candidate SCG4, and 59 for candidate SCGS; the multiple sk-counter values may be fixed sk-counter values configured by the network for each SN/SCG/PSCell.

For the maximum sk-counter value *SK-Max,* the maximum value is a maximum value of sk-counter that the UE may use for each candidate SN.

For the maximum number of accesses *Counter-Max,* the maximum number of accesses is a maximum number of accesses that the UE performs SCG addition/change for each candidate SN.

The first step may be divided into two cases, as follows.

Step *step1* indicates a step that the network hopes the UE may increase based on a current sk-counter value of this candidate target SN when calculating a new sk-counter value of this candidate target SN. For example, when *step1* is configured as 2, it means that each time the UE is added/changed to this candidate SCG, the UE generates a new sk-counter value of the current sk-counter value plus *step1.*Here, if the UE is added/changed to SCG3 for a first time, the new sk-counter value is 32; if the UE is added/changed to SCG3 for a second time, the new new sk-counter value is 34; if the UE is added/changed to SCG3 for a third time, the new sk-counter value is 36, and so on.

Step *step2* indicates a step that the network hopes the UE may decrement based on a current sk-counter value of this candidate target SN when calculating a new sk-counter value of this candidate target SN. For example, when *step2* is configured as 3, it means that each time the UE is added/changed to a new candidate SCG, the UE generates a new sk-counter value of the current sk-counter value minus *step2.* Here, if the UE is added/changed to SCG3 for a first time, the new sk-counter value is 36; if the UE is added/changed to SCG3 for a second time, the new sk-counter value is 33; if the UE is added/changed to SCG3 for a third time, the new sk-counter value is 30, and so on.

The sk-counter list is a plurality of sk-counter values for each candidate target SN configured by the MN for the UE, the sk-counter list is used when subsequently, the UE performs SCG addition/change to this SCG.

The C-RNTI list is a plurality of C-RNTI values for each candidate target SN configured by the MN for the UE, the C-RNTI list is used when subsequently, the UE performs SCG addition/change to this SCG.

The Cell group ID/index of the SCG configured by the network is mainly used for the UE to calculate a new sk-counter value. The cell group ID/index is a sequence number value configured by the network for multiple candidate SCGs, such as id/index = 0, 1, 2, 3, 4, 5, etc.

The SN ID/index of the SN configured by the network is mainly used for the UE to calculate a new sk-counter value. The SN ID/index is a sequence number value configured by the network for multiple candidate SNs, such as id/index = 0, 1, 2, 3, 4, 5, etc.

The network configures new calculation ways of sk-counter value for the UE. Each calculation way of the sk-counter value may be numbered. The network sends the corresponding number value to notify the UE of what calculation way to use to calculate the new sk-counter value when the SCG addition/change is performed.

Step 2: in case that the UE evaluates that a conditional PSCell addition/PSCell change execution condition is satisfied or the UE receives a PSCell addition/PSCell change indication sent from the network, the PSCell addition/PSCell change is perofrmed, and the UE generates a new sk-counter value based on the network configuration, and ways for the UE to generate the new sk-counter value include the following:
(1) using a fixed sk-counter value configured by the network; or
(2) using a new sk-counter value (which may be an initial sk-counter value).

Step 3: in case that the UE uses the new sk-counter value, if the initial sk-counter value is not used, the new sk-counter value may be generated in one or more of the following ways.

Ways based on the sk-counter value are as follows.

Way 1: new sk-counter value = current sk-counter value + 1; if the current sk-counter value of SCG3 is 33, then the new sk-counter value is 34.

Way 2: new sk-counter value = current sk-counter value - 1; if the current sk-counter value of SCG3 is 33, then the new sk-counter value is 32.

Way 3: new sk-counter value = current sk-counter value + step *step1* configured by the network; if the current sk-counter value of SCG3 is 30 and *step1* is 2, then the new sk-counter value is 32.

Way 4: new sk-counter value = current sk-counter value - step *step2* configured by network; if the current sk-counter value of SCG3 is 39 and *step2* is 3, then the new sk-counter value is 36.

Way 5: new sk-counter value = current sk-counter value + step *step3* automatically generated by the UE; if the current sk-counter value of SCG3 is 30 and *step3* is 4, then the new sk-counter value is 34.

Way 6: new sk-counter value = current sk-counter value - step *step4* automatically generated by the UE; if the current sk-counter value of SCG3 is 39 and *step4* is 4, then the new sk-counter value is 35.

Way 7: new sk-counter value = current sk-counter value + N × a number of times back to this SCG + cell group ID/index or SN ID/index or PSCell ID/index; if the current sk-counter value of SCG3 is 30, this is the first time adding/changing to this SCG, the cell group ID/index or SN ID/index or PSCell ID/index is 3, and N (a number of configured candidate SCGs) is 5, then the new sk-counter value is 38.

Way 8: new sk-counter value = current sk-counter value × cell group ID/index or SN ID/index or PSCell ID/index + a number of times back to this SCG; if the current sk-counter value is 30, this is the first time adding/changing to this SCG, and the cell group ID/index or SN ID/index or PSCell ID/index is 3, then the new sk-counter value is 61, which exceeds an sk-counter value range of SCG3, so this sk-counter value cannot be used.

Way 9: new sk-counter value = cell group ID/index or SN ID/index or PSCell ID/index × a number of times back to this SCG + current sk-counter value; if the current sk-counter value is 30, this is the first time adding/changing to this SCG, and the cell group ID/index or SN ID/index or PSCell ID/index is 3, then the new sk-counter value is 33.

Ways based on the offset are as follows.

New sk-counter value = *SKO* + offset; and an initial value of the offset is 0.

Way 1: new sk-counter value = *SKO* + offset; if *SKO* of SCG1 is 10, and offset = offset + 1, then the new sk-counter value is 11.

Way 2: new sk-counter value = *SKO* + offset; if *SKO* of SCG1 is 19, and offset = offset - 1, then the new sk-counter value is 18.

Way 3: new sk-counter value = *SKO* + offset; if *SKO* of SCG1 is 10, offset = offset + step, and step is 2, then the new sk-counter value is 12.

Way 4: new sk-counter value = *SKO* + offset; if SK0 of SCG1 is 19, offset = offset - step, and step is 3, then the new sk-counter value is 16.

Way 5: new sk-counter value = *SKO* + offset; if *SKO* of SCG1 is 10, offset = offset + step automatically generated by the UE, and the step automatically generated by the UE is 4, then the new sk-counter value is 14.

Way 6: new sk-counter value = *SKO* + offset; if *SKO* of SCG1 is 19, offset = offset - step automatically generated by the UE, and the step automatically generated by the UE is 5, then the new sk-counter value is 14.

Way 7: new sk-counter value = *SKO* + offset; if *SKO* of SCG1 is 10, offset = offset + N (a number of configured candidate SCGs) × a number of times back to this SCG + cell group ID/index or SN ID/index or PSCell ID/index, N is 5, the UE is added/changed to SCG1 for a first time, and an index of this SCG is 1, then the new sk-counter value is 16.

Way 8: new sk-counter value = *SKO* + offset; if *SKO* is 10, offset = offset × cell group ID/index or SN ID/index or PSCell ID/index + a number of times back to this SCG, the UE is added/changed to SCG1 for a second time, and an index of this SCG is 1, then the new sk-counter value is 12.

Way 9: new sk-counter value = *SKO* + offset; if *SKO* is 10, offset = cell group ID/index or SN ID/index or PSCell ID/index × a number of times back to this SCG + offset, the UE is added/changed to SCG1 for a third time, and in index of this SCG is 1, then the new sk-counter value is 13.

A way based on the sk-counter list is as follows.

Way 1: if the network configures the sk-counter list used by each candidate target SCG for the UE, the UE may use the sk-counter value in the sk-counter list.

A way based on the saved sk-counter value is as follows.

When the UE receives the first configuration information, the UE generates the sk-counter value used for this SCG addition/change based on the first configuration information and saves the sk-counter value, and the UE uses the saved sk-counter value. It should be noted that the determination way of the sk-counter value may adopt various ways in step 3, and is not specifically limited.

In addition, the UE adds 1 to the counter value, and the initial value of the counter is 0.

It should be noted that the selection of the above ways is used in accordance with a way agreed in advance or a way configured by the network.

Step 4-1: the UE uses the new sk-counter value and an MN side *K_{gNB}* to generate a new SCG side security key *S-K_{gNB}.*

Step 4-2: the UE uses the saved *S-K_{gNB},* where the *S-K_{gNB}* used for this SCG addition/change is generated by the UE based on the first configuration information after receiving the first configuration information.

It should be noted that the way for determining the *S-K_{gNB}* value may adopt various ways in the above steps 3 and 4, and is not specifically limited.

Step 5: the UE may notify the MN of the sk-counter value used by each candidate target SCG, the sk-counter index, the counter value, the offset value, the step automatically generated by the UE, etc. in a UL message, which may be reported in an RRC reconfiguration complete uplink message.

Step 6-1: the MN sends the following security configuration related information to the target SN:
(1) an sk-counter value; and
(2) key associated (configuration) information, i.e. all feedback information received from the UE.

Step 6-2: the MN sends the following security configuration related information to the target SN:
(1) a C-RNTI list;
(2) key associated (configuration) information, i.e. configuration information of the UE.

In step 6-1 and step 6-2, the key associated (configuration) information contains one or more types of the following information:
(1) a first sk-counter value *SKO;*
(2) an MN side security key *K_{gNB}* (or provided in other forms to ensure security);
(3) a maximum sk-counter value *SK-Max;*
(4) a maximum number of accesses *Counter-Max;*
(5) a first step;
(6) an sk-counter list (which may include an sk-counter index);
(7) a C-RNTI list (and a mapping relationship with the sk-counter);
(8) a cell group ID/index of this SCG;
(9) an SN ID/index of this SN;
(10) a step automatically generated by the UE, or a counter value reported by the UE, or an offset value reported by the UE; or
(11) a selected calculation way.

It should be noted that in step 6-1, the security configuration related information is sent after the MN determines the candidate target SCG selected by the UE (it may be sent along with the RRC reconfiguration complete message or other RRC messages), and in step 6-2, the security configuration related information is sent when the MN is not sure of the candidate target SCG selected by the UE (it can be sent after the MN sends the configuration to the UE).

It should be noted that for the C-RNTI list in step 6-2, the MN may send the C-RNTI list to the target SN, as well as a correspondence relationship between the C-RNTI and the sk-counter, so that when the UE accesses the target SN, the target SN knows the C-RNTI used by the UE, and then knows the sk-counter value used by the UE.

Step 7-1: the SN side also generates a new sk-counter value and a new SCG side security key *S-K_{gNB}* in the same way as the UE side, where the new sk-counter value and the new SCG side security key *S-K_{gNB}* are used for data transmission with the UE after the UE accesses.

Step 7-2: The SN side also generates a new sk-counter value and a new SCG side security key *S-K_{gNB}* in the same way as the UE side, where the new sk-counter value and the new SCG side security key *S-K_{gNB}* are used for data transmission with the UE after the UE accesses.

In addition, in any of the embodiments of the present application, when the UE performs SCG addition/change and generates a new sk-counter value or counter value, the UE needs to determine, that is, to determine whether the new sk-counter value is greater than the maximum sk-counter value *SK-Max* configured by the network, and whether the new counter value is greater than the maximum counter value *Counter-Max* configured by the network. If one of them is true, the UE may perform one or more of the following actions:
(1) the UE may report indication information to the MN, indicating that the maximum threshold is reached;
(2) the UE may automatically release the configuration information of this SCG/SN;
(3) the UE releases the configuration information of all candidate SCGs;
(4) the UE no longer uses this SN as a candidate; or
(5) the UE ends an evaluation of an execution conditional for this SCG/SN.

After the network receives the indication reported from the UE, the network may perform one or more of the following:
(1) the network releases the configuration information of this SCG/SN/CU;
(2) the network releases the configuration information of all candidate SCGs;
(3) the network reconfigures the configuration information of this candidate SCG/SN/CU;
(4) the network reconfigures the configuration information of all candidate SCGs;
(4) the network reconfigures an MN key; or
(5) the network reconfigures the sk-counter value or security information of this candidate SCG/SN/CU.

Embodiment 6: an MN configures a security configuration information list (local variable) for a UE, and the UE performs SCG change to a candidate SCG that has been accessed.

Step **1-1:** the MN sends multiple pieces of pre-configured candidate SCG configuration information to the UE.

Step 1-2: the MN sends one or more types of the following configuration information to the UE:
(1) a first sk-counter value *SKO;*
(2) a maximum sk-counter value *SK-Max;*
(3) a maximum number of accesses *Counter-Max;*
(4) a first step;
(5) a sk-counter list (may include sk-counter index);
(6) a C-RNTI list;
(7) a cell group ID/index;
(8) an SN ID/index; or
(9) a selected calculation way.

It should be noted that the above configuration information is content that each security configuration information in the security configuration information list may contain. If necessary, in case that the security configuration information list is configured, the above information may also be configured as a global variable.

The network configures multiple sk-counter (initial) values for the UE, and the multiple sk-counter (initial) values are configured for multiple SN/SCG/PSCells respectively, that is, the sk-counter (initial) value is configured per SN or per CG or per Cell. For example, if the MN configures a total of 5 pieces of candidate SCG configuration information to the UE, taking the security configuration information as per SCG configuration as an example, the multiple sk-counter values may be 0 for candidate SCGO, 10 for candidate SCG1, 20 for candidate SCG2, 30 for candidate SCG3, 40 for candidate SCG4, and 50 for candidate SCGS; the multiple sk-counter values may also be 9 for candidate SCGO, 19 for candidate SCG1, 29 for candidate SCG2, 39 for candidate SCG3, 49 for candidate SCG4, and 59 for candidate SCGS; the multiple sk-counter values may be fixed sk-counter values configured by the network for each SN/SCG/PSCell.

For the maximum sk-counter value *SK-Max,* the maximum value is a maximum value of sk-counter that the UE may use for each candidate SN.

For the maximum number of accesses *Counter-Max,* the maximum number of accesses is a maximum number of accesses that the UE performs SCG addition/change for each candidate SN.

The first step may be divided into two cases, as follows.

Step *step1* indicates a step that the network hopes the UE may increase based on a current sk-counter value of this candidate target SN when calculating a new sk-counter value of this candidate target SN. For example, when *step1* is configured as 2, it means that each time the UE is added/changed to this candidate SCG, the UE generates a new sk-counter value of the current sk-counter value plus *step1.*Here, if the UE is added/changed to SCG3 for a first time, the new sk-counter value is 32; if the UE is added/changed to SCG3 for a second time, the new new sk-counter value is 34; if the UE is added/changed to SCG3 for a third time, the new sk-counter value is 36, and so on.

Step *step2* indicates a step that the network hopes the UE may decrement based on a current sk-counter value of this candidate target SN when calculating a new sk-counter value of this candidate target SN. For example, when *step2* is configured as 3, it means that each time the UE is added/changed to a new candidate SCG, the UE generates a new sk-counter value of the current sk-counter value minus *step2.* Here, if the UE is added/changed to SCG3 for a first time, the new sk-counter value is 36; if the UE is added/changed to SCG3 for a second time, the new sk-counter value is 33; if the UE is added/changed to SCG3 for a third time, the new sk-counter value is 30, and so on.

The sk-counter list is a plurality of sk-counter values for each candidate target SN configured by the MN for the UE, the sk-counter list is used when subsequently, the UE performs SCG addition/change to this SCG.

The C-RNTI list is a plurality of C-RNTI values for each candidate target SN configured by the MN for the UE, the C-RNTI list is used when subsequently, the UE performs SCG addition/change to this SCG.

The Cell group ID/index of the SCG configured by the network is mainly used for the UE to calculate a new sk-counter value. The cell group ID/index is a sequence number value configured by the network for multiple candidate SCGs, such as id/index = 0, 1, 2, 3, 4, 5, etc.

The SN ID/index of the SN configured by the network is mainly used for the UE to calculate a new sk-counter value. The SN ID/index is a sequence number value configured by the network for multiple candidate SNs, such as id/index = 0, 1, 2, 3, 4, 5, etc.

The network configures new calculation ways of sk-counter value for the UE. Each calculation way of the sk-counter value may be numbered. The network sends the corresponding number value to notify the UE of what calculation way to use to calculate the new sk-counter value when the SCG addition/change is performed.

Step 2: in case that the UE evaluates that a conditional PSCell change execution condition is satisfied or the UE receives a PSCell change indication sent from the network, the PSCell change is performed.

Step 3: Step 3: ways for the UE to generate the new sk-counter value include the following:
(1) using a fixed sk-counter value configured by the network;
(2) using a new sk-counter value; or
(3) using a previous sk-counter value.

Step 4: in case that the UE uses the new sk-counter value, the UE generates the new sk-counter value based on a network configuration, and the generation ways include one or more of the following.

Ways based on the sk-counter value are as follows.

Way 1: new sk-counter value = current sk-counter value + 1; if the current sk-counter value of SCG3 is 33, then the new sk-counter value is 34.

Way 2: new sk-counter value = current sk-counter value - 1; if the current sk-counter value of SCG3 is 33, then the new sk-counter value is 32.

Way 3: new sk-counter value = current sk-counter value + step *step1* configured by the network; if the current sk-counter value of SCG3 is 30 and *step1* is 2, then the new sk-counter value is 32.

Way 4: new sk-counter value = current sk-counter value - step *step2* configured by network; if the current sk-counter value of SCG3 is 39 and *step2* is 3, then the new sk-counter value is 36.

Way 5: new sk-counter value = current sk-counter value + step *step3* automatically generated by the UE; if the current sk-counter value of SCG3 is 30 and *step3* is 4, then the new sk-counter value is 34.

Way 6: new sk-counter value = current sk-counter value - step *step4* automatically generated by the UE; if the current sk-counter value of SCG3 is 39 and *step4* is 4, then the new sk-counter value is 35.

Way 7: new sk-counter value = current sk-counter value + N × a number of times back to this SCG + cell group ID/index or SN ID/index or PSCell ID/index; if the current sk-counter value of SCG3 is 30, this is the first time adding/changing to this SCG, the cell group ID/index or SN ID/index or PSCell ID/index is 3, and N (a number of configured candidate SCGs) is 5, then the new sk-counter value is 38.

Way 8: new sk-counter value = current sk-counter value × cell group ID/index or SN ID/index or PSCell ID/index + a number of times back to this SCG; if the current sk-counter value is 30, this is the first time adding/changing to this SCG, and the cell group ID/index or SN ID/index or PSCell ID/index is 3, then the new sk-counter value is 61, which exceeds an sk-counter value range of SCG3, so this sk-counter value cannot be used.

Way 9: new sk-counter value = cell group ID/index or SN ID/index or PSCell ID/index × a number of times back to this SCG + current sk-counter value; if the current sk-counter value is 30, this is the first time adding/changing to this SCG, and the cell group ID/index or SN ID/index or PSCell ID/index is 3, then the new sk-counter value is 33.

Ways based on the offset are as follows.

New sk-counter value = *SKO* + offset; and an initial value of the offset is 0.

Way 1: new sk-counter value = *SKO* + offset; if *SKO* of SCG1 is 10, and offset = offset + 1, then the new sk-counter value is 11.

Way 2: new sk-counter value = *SKO* + offset; if *SKO* of SCG1 is 19, and offset = offset - 1, then the new sk-counter value is 18.

Way 3: new sk-counter value = *SKO* + offset; if *SKO* of SCG1 is 10, offset = offset + step, and step is 2, then the new sk-counter value is 12.

Way 4: new sk-counter value = *SKO* + offset; if SK0 of SCG1 is 19, offset = offset - step, and step is 3, then the new sk-counter value is 16.

Way 5: new sk-counter value = *SKO* + offset; if *SKO* of SCG1 is 10, offset = offset + step automatically generated by the UE, and the step automatically generated by the UE is 4, then the new sk-counter value is 14.

Way 6: new sk-counter value = *SKO* + offset; if *SKO* of SCG1 is 19, offset = offset - step automatically generated by the UE, and the step automatically generated by the UE is 5, then the new sk-counter value is 14.

Way 7: new sk-counter value = *SKO* + offset; if *SKO* of SCG1 is 10, offset = offset + N (a number of configured candidate SCGs) × a number of times back to this SCG + cell group ID/index or SN ID/index or PSCell ID/index, N is 5, the UE is added/changed to SCG1 for a first time, and an index of this SCG is 1, then the new sk-counter value is 16.

Way 8: new sk-counter value = *SKO* + offset; if *SKO* is 10, offset = offset × cell group ID/index or SN ID/index or PSCell ID/index + a number of times back to this SCG, the UE is added/changed to SCG1 for a second time, and an index of this SCG is 1, then the new sk-counter value is 12.

Way 9: new sk-counter value = *SKO* + offset; if *SKO* is 10, offset = cell group ID/index or SN ID/index or PSCell ID/index × a number of times back to this SCG + offset, the UE is added/changed to SCG1 for a third time, and in index of this SCG is 1, then the new sk-counter value is 13.

A way based on the sk-counter list is as follows.

Way 1: if the network configures the sk-counter list used by each candidate target SCG for the UE, the UE may use the sk-counter value in the sk-counter list.

A way based on the saved sk-counter value is as follows.

If the UE generates the sk-counter value used for this SCG addition/change and saves the sk-counter value after the previous SCG addition/change, the UE uses the saved sk-counter value. It should be noted that the sk-counter value may be determined by various ways in step 4, and the specific way is not limited.

Other ways: the new sk-counter value is generated based on the sk-counter value carried in the SCG addition/change indication sent from the network.

In addition, the UE adds 1 to the counter value, and the initial value of the counter is 0.

It should be noted that the selection of the above ways is used in accordance with a way agreed in advance or a way configured by the network.

Step 5-1: the UE uses the new sk-counter value and an MN side *K_{gNB}* to generate a new SCG side security key *S-K_{gNB}.*

Step 5-2: the UE uses the saved *S-K_{gNB},* where the *S-K_{gNB},* used for this SCG addition/change is generated after a previous SCG addition/change is performed by the UE.

It should be noted that the way for determining the *S-K_{gNB}* value may adopt various ways in the above steps 4 and 5, and is not specifically limited.

Step 6: the UE may notify the MN of the sk-counter value used by each candidate target SCG, the sk-counter index, the counter value, the offset value, the step automatically generated by the UE, etc. in a UL message, which may be reported in an RRC reconfiguration complete uplink message.

Step 7: if the UE uses the previous sk-counter value, the MN and/or SN side also needs to save the *S-K_{gNB}* value, used by the UE when the UE leaves a candidate SCG that the UE accesses for a first time, and save the *S-K_{gNB}* value for use when the UE accesses the candidate SCG again in the future.

Step 8: the MN and/or SN generates a new SCG side security key *S-K_{gNB}* in the same way as the UE side.

In addition, in any of the embodiments of the present application, when the UE performs SCG addition/change and generates a new sk-counter value or counter value, the UE needs to determine, that is, to determine whether the new sk-counter value is greater than the maximum sk-counter value *SK-Max* configured by the network, and whether the new counter value is greater than the maximum counter value *Counter-Max* configured by the network. If one of them is true, the UE may perform one or more of the following actions:
(1) the UE may report indication information to the MN, indicating that the maximum threshold is reached;
(2) the UE may automatically release the configuration information of this SCG/SN;
(3) the UE releases the configuration information of all candidate SCGs;
(4) the UE no longer uses this SN as a candidate; or
(5) the UE ends an evaluation of an execution conditional for this SCG/SN.

After the network receives the indication reported from the UE, the network may perform one or more of the following:
(1) the network releases the configuration information of this SCG/SN/CU;
(2) the network releases the configuration information of all candidate SCGs;
(3) the network reconfigures the configuration information of this candidate SCG/SN/CU;
(4) the network reconfigures the configuration information of all candidate SCGs;
(4) the network reconfigures an MN key; or
(5) the network reconfigures the sk-counter value or security information of this candidate SCG/SN/CU.

Embodiment 7: an MN/SN sends a new sk-counter to a UE through an MAC CE and/or DCI.

When the UE performs SCG addition/change, a SCG side security key *S-K_{gNB}* needs to be updated. When the MN and/or SN receives an RRC reconfiguration complete message sent from the UE, that is, when the MN/SN knows that the UE is going to add/change the SCG (the SN may also know that the UE is going to access this SCG through a random access procedure of the UE), the MN and/or SN may send a new sk-counter value to the UE through the MAC CE and/or DCI, that is, replace an original MN RRC signaling to send an updated sk-counter value to the UE.

The methods and devices provided in the various embodiments of the present application are based on the same concept. Since the methods and devices solve problems based on similar principles, the implementation of the devices and methods may refer to each other, and the repeated parts are not be repeated.

FIG. 4 is a schematic structural diagram of a terminal according to an embodiment of the present application. As shown in FIG. 4, the terminal includes a memory 420, a transceiver 410 and a processor 400, where the processor 400 and memory 420 may be physically arranged separately.

The memory 420 is used for storing a computer program, and the transceiver 410 is used for receiving and sending data under control of the processor 400.

In any of the embodiments of the present application, the transceiver 410 is used for receiving and sending data under control of the processor 400.

In FIG. 4, a bus architecture may include any number of interconnected buses and bridges, which are linked together through various circuits of one or more processors represented by the processor 400 and one or more memories represented by the memory 420. The bus architecture may also link together various other circuits, such as peripherals, voltage regulators, and power management circuits, etc., which are well known in the art, and therefore are not further described in the present application. The bus interface provides an interface. The transceiver 410 may include multiple elements, i.e., including a transmitter and a receiver, units for providing communication with various other devices over transmission media including wireless channels, wired channels, fiber optic cables, and the like.

The processor 400 is responsible for managing the bus architecture and general processing, and the memory 420 may store data used by the processor 400 when performing operations.

The processor 400 may be a central processing unit (CPU), an application specific integrated circuit (ASIC), a field-programmable gate array (FPGA), or a complex programmable logic device (CPLD), the processor may also use a multi-core architecture.

The processor 400 calls the computer program stored in the memory 420 to execute any of the methods provided by the embodiments of the present application in accordance with the obtained executable instructions. For example, the method includes: receiving first configuration information sent from a master node (MN); and in case of determining to access to a target secondary cell group (SCG), based on the first configuration information, generating or updating or using a target SCG side security key or an SCG side security key used for at least one subsequent access to a candidate target SCG.

In any of the embodiments of the present application, the first configuration information includes one or more of the following:
security configuration information;
a security configuration information list, where the security configuration information list contains at least one security configuration information unit, and each security configuration information unit is associated with one or more candidate SCGs;
a cell group identifier or index;
a secondary node (SN) identifier or index; or
a calculation way of an SN key counter (sk-counter) value.

In any of the embodiments of the present application, the security configuration information unit contains one or more of the following:
security configuration information;
a secondary node (SN) identifier or index;
a cell group identifier or index;
a primary secondary cell (PSCell) identifier or index; or
a security configuration information index.

In any of the embodiments of the present application, the security configuration information contains one or more of the following:
a first SN key counter (sk-counter) value;
a maximum sk-counter value;
a maximum number of accesses;
a first step;
an sk-counter value list; or
a cell radio network temporary identifier (C-RNTI) list.

In any of the embodiments of the present application, generating or updating or using the target SCG side security key includes one or more of the following:
using a first security key as the target SCG side security key, where the first security key is a security key used for a most recent access to the target SCG or a target secondary node (SN); or,
determining the target SCG side security key based on a second SN key counter (sk-counter) value, where the second sk-counter value is an sk-counter value used to generate a first security key; or,
determining the target SCG side security key based on a third sk-counter value, where the third sk-counter value is an sk-counter value determined in a first way based on the first configuration information; or,
determining the target SCG side security key based on a fourth sk-counter value, where the fourth sk-counter value is an sk-counter value indicated by a network device; or,
determining the target SCG side security key based on a fifth sk-counter value, where the fifth sk-counter value is a first sk-counter value associated with the target SCG or a target SN; or,
determining the target SCG side security key based on a sixth sk-counter value, where the sixth sk-counter value is an sk-counter value determined and saved for a current access to the target SCG after a most recent generation or update or use of the target SCG side security key; or,
using a second security key as the target SCG side security key, where the second security key is a security key determined and saved for a current access to the target SCG after a most recent generation or update or use of the target SCG side security key.

In any of the embodiments of the present application, the method further includes one or more of the following:
determining a sixth sk-counter value in a first way based on the first configuration information; or,
generating the SCG side security key based on a sixth sk-counter value and saving the SCG side security key as a second security key.

In any of the embodiments of the present application, determining the third sk-counter value or the sixth sk-counter value in the first way based on the first configuration information includes one or more of the following:
determining the third sk-counter value or the sixth sk-counter value based on a sum of a seventh sk-counter value and a second step; or,
determining the third sk-counter value or the sixth sk-counter value based on a difference between a seventh sk-counter value and a second step; or,
determining the third sk-counter value or the sixth sk-counter value based on a sum of the three: a seventh sk-counter value, a product of a first value N and a second value M, and a first sequence number value; or,
determining the third sk-counter value or the sixth sk-counter value based on a sum of the two: a product of a seventh sk-counter value and a first sequence number value, and a second value M; or,
determining the third sk-counter value or the sixth sk-counter value based on a sum of the two: a product of a first sequence number value and a second value M, and a seventh sk-counter value; or,
determining the third sk-counter value or the sixth sk-counter value based on a sum of a first sk-counter value and a first offset; or,
determining the third sk-counter value or the sixth sk-counter value based on a difference between a first sk-counter value and a first offset; or,
determining the third sk-counter value or the sixth sk-counter value based on an sk-counter value list and a number of accesses;
where the seventh sk-counter value is an sk-counter value used for a most recent generation or update of the SCG side security key; the first value N indicates that a network side configures N candidate SCGs for the terminal; the second value M indicates that the third sk-counter value or the sixth sk-counter value determined this time corresponds to an M-th access to the target SCG or a target SN; the first sequence number value is one or more of a cell group identifier or index corresponding to the target SCG, an SN identifier or index corresponding to the target SCG, or a primary secondary cell (PSCell) identifier or index corresponding to the target SCG.

In any of the embodiments of the present application, the second step includes one or more of the following:
a step specified by a protocol;
a step generated by the terminal; or
a first step.

In any of the embodiments of the present application, the first offset is determined by one or more of the following ways:
determining the first offset based on a sum of a second offset and a second step; or,
determining the first offset based on a difference between a second offset and a second step; or,
determining the first offset based on a sum of the three: a second offset, a product of a first value N and a second value M, and a first sequence number value; or,
determining the first offset based on a sum of the two: a product of a second offset and a first sequence number value, and a second value M; or,
determining the first offset based on a sum of the two: a product of a first sequence number value and a second value M, and a second offset;
where the second offset is a most recently updated first offset.

In any of the embodiments of the present application, the method further includes:
sending first information to the MN, where the first information contains one or more of the following:
a third sk-counter value;
a sixth sk-counter value;
a second step;
an sk-counter value index;
a number of accesses; or
a first offset.

In any of the embodiments of the present application, the method further includes:
in case of determining that an sk-counter value used to generate the SCG side security key is greater than a maximum sk-counter value configured by a network side, or a number of accesses is greater than a maximum number of accesses configured by a network side, performing one or more of the following:
sending second information to the MN, where the second information is used to indicate that the sk-counter value or the number of accesses reaches a maximum threshold;
releasing configuration information of the target SCG or a target secondary node (SN);
releasing configuration information of all candidate SCGs; or
ending evaluation of an execution condition for the target SCG or a target SN.

In any of the embodiments of the present application, determining to access to the target SCG includes one or more of the following:
determining that an execution condition for the target SCG is satisfied; or,
receiving an SCG addition or change indication sent from a network device, where the SCG addition or change indication is used to indicate the terminal to access to the target SCG.

In any of the embodiments of the present application, a way for determining the fourth sk-counter value includes:
receiving a media access control-control element (MAC-CE), downlink control information (DCI) or a radio resource control (RRC) signaling sent from a network device, where the MAC-CE, DCI or RRC signaling contains the fourth sk-counter value or indication information for indicating the fourth sk-counter value.

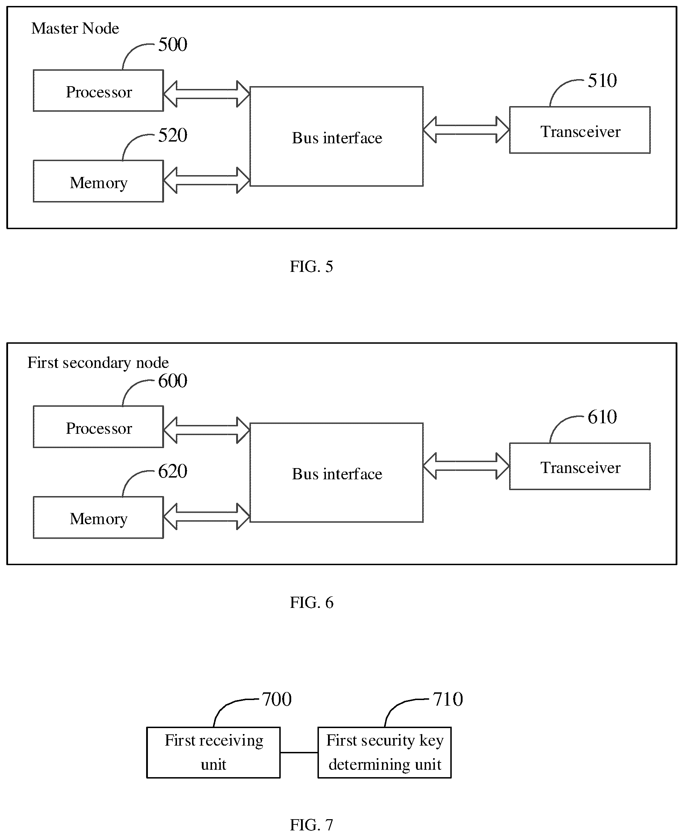

FIG. 5 is a schematic structural diagram of a master node (MN) according to an embodiment of the present application. As shown in FIG. 5, the MN includes a memory 520, a transceiver 510 and a processor 500, where the processor 500 and memory 520 may be physically arranged separately.

The memory 520 is used for storing a computer program, and the transceiver 510 is used for receiving and sending data under control of the processor 500.

In any of the embodiments of the present application, the transceiver 510 is used for receiving and sending data under control of the processor 500.

In FIG. 5, a bus architecture may include any number of interconnected buses and bridges, which are linked together through various circuits of one or more processors represented by the processor 500 and one or more memories represented by the memory 520. The bus architecture may also link together various other circuits, such as peripherals, voltage regulators, and power management circuits, etc., which are well known in the art, and therefore are not further described in the present application. The bus interface provides an interface. The transceiver 510 may include multiple elements, i.e., including a transmitter and a receiver, units for providing communication with various other devices over transmission media including wireless channels, wired channels, fiber optic cables, and the like.

The processor 500 is responsible for managing the bus architecture and general processing, and the memory 520 may store data used by the processor 500 when performing operations.

The processor 500 may be a central processing unit (CPU), an application specific integrated circuit (ASIC), a field-programmable gate array (FPGA), or a complex programmable logic device (CPLD), the processor may also use a multi-core architecture.

The processor 500 calls the computer program stored in the memory 520 to execute any of the methods provided by the embodiments of the present application in accordance with the obtained executable instructions. For example, the method includes: sending first configuration information to a terminal, where the first configuration information is used for determining an SCG side security key used, by the terminal, for accessing a target SCG or for at least one subsequent access to a candidate target SCG; and sending second configuration information to a first secondary node (SN), where the second configuration information is used for determining a third security key used for data transmission between the first SN and the terminal, where the first SN includes a target SN or a candidate target SN.

In any of the embodiments of the present application, the first configuration information includes one or more of the following:
security configuration information;
a security configuration information list, where the security configuration information list contains at least one security configuration information unit, and each security configuration information unit is associated with one or more candidate SCGs;
a cell group identifier or index;
a secondary node (SN) identifier or index; or
a calculation way of an SN key counter (sk-counter) value.

In any of the embodiments of the present application, the security configuration information unit contains one or more of the following:
security configuration information;
a secondary node (SN) identifier or index;
a cell group identifier or index;
a primary secondary cell (PSCell) identifier or index; or
a security configuration information index.

In any of the embodiments of the present application, the security configuration information contains one or more of the following:
a first SN key counter (sk-counter) value;
a maximum sk-counter value;
a maximum number of accesses;
a first step;
an sk-counter value list; or
a cell radio network temporary identifier (C-RNTI) list.

In any of the embodiments of the present application, the second configuration information contains one or more of the following:
a value of the third security key;
a security key list;
an index of the third security key;
a cell radio network temporary identifier (C-RNTI) list;
an sk-counter value used to generate the third security key; or
third information used to determine the third security key.

In any of the embodiments of the present application, the third information contains one or more of the following:
first information reported from the terminal to the MN;
first configuration information configured by a network side for the terminal;
a first sk-counter value;
an MN side security key;
a maximum sk-counter value;
a maximum number of accesses;
a first step;
an sk-counter value list;
a C-RNTI list;
a cell group identifier or index of a first SCG, where the first SCG is a candidate SCG corresponding to the first SN among multiple candidate SCGs configured by a network side for the terminal;
a primary secondary cell (PSCell) identifier or index of a first PSCell, where the first PSCell is a PSCell corresponding to a first SCG;
an SN identifier or index of the first SN;
a step generated by the terminal;
a number of accesses;
a first offset; or
a calculation way of an sk-counter value.

In any of the embodiments of the present application, the method further includes:
sending a media access control-control element (MAC-CE), downlink control information (DCI) or a radio resource control (RRC) signaling to the terminal, where the MAC-CE, DCI or RRC signaling contains a fourth sk-counter value or indication information for indicating a fourth sk-counter value.

In any of the embodiments of the present application, the method further includes:
sending an SCG addition or change indication to the terminal, where the SCG addition or change indication is used to indicate the terminal to access to the target SCG.

In any of the embodiments of the present application, the method further includes:
receiving second information sent from the terminal, where the second information is used to indicate that an sk-counter value or a number of accesses reaches a maximum threshold; and
performing one or more of the following based on the second information:
   releasing configuration information of a target SCG or target SN accessed by the terminal;
   releasing configuration information of all candidate SCGs;
   reconfiguring configuration information of a target SCG or target SN accessed by the terminal;
   reconfiguring configuration information of all candidate SCGs;
   reconfiguring an MN side security key; or
   reconfiguring an sk-counter value or first configuration information used to determine the SCG side security key.

FIG. 6 is a schematic structural diagram of a first secondary node (SN) according to an embodiment of the present application. As shown in FIG. 6, the first SN includes a memory 620, a transceiver 610 and a processor 600, where the processor 600 and memory 620 may be physically arranged separately.

The memory 620 is used for storing a computer program, and the transceiver 610 is used for receiving and sending data under control of the processor 600.

In any of the embodiments of the present application, the transceiver 610 is used for receiving and sending data under control of the processor 600.

In FIG. 6, a bus architecture may include any number of interconnected buses and bridges, which are linked together through various circuits of one or more processors represented by the processor 600 and one or more memories represented by the memory 620. The bus architecture may also link together various other circuits, such as peripherals, voltage regulators, and power management circuits, etc., which are well known in the art, and therefore are not further described in the present application. The bus interface provides an interface. The transceiver 610 may include multiple elements, i.e., including a transmitter and a receiver, units for providing communication with various other devices over transmission media including wireless channels, wired channels, fiber optic cables, and the like.

The processor 600 is responsible for managing the bus architecture and general processing, and the memory 620 may store data used by the processor 600 when performing operations.

The processor 600 may be a central processing unit (CPU), an application specific integrated circuit (ASIC), a field-programmable gate array (FPGA), or a complex programmable logic device (CPLD), the processor may also use a multi-core architecture.

The processor 600 calls the computer program stored in the memory 620 to execute any of the methods provided by the embodiments of the present application in accordance with the obtained executable instructions. For example, the method includes: receiving second configuration information sent from a master node (MN); and determining a third security key used for data transmission with a terminal based on the second configuration information.

In any of the embodiments of the present application, the second configuration information contains one or more of the following:
a value of the third security key;
a security key list;
an index of the third security key;
a cell radio network temporary identifier (C-RNTI) list;
an SN key counter (sk-counter) value used to generate the third security key; or
third information used to determine the third security key.

In any of the embodiments of the present application, the third information contains one or more of the following:
first information reported from the terminal to the MN;
first configuration information configured by a network side for the terminal;
a first sk-counter value;
an MN side security key;
a maximum sk-counter value;
a maximum number of accesses;
a first step;
an sk-counter value list;
a C-RNTI list;
a cell group identifier or index of a first SCG, where the first SCG is a candidate SCG corresponding to the first SN among multiple candidate SCGs configured by a network side for the terminal;
a primary secondary cell (PSCell) identifier or index of a first PSCell, where the first PSCell is a PSCell corresponding to a first SCG;
an SN identifier or index of the first SN;
a step generated by the terminal;
a number of accesses;
a first offset; or
a calculation way of an sk-counter value.

In any of the embodiments of the present application, determining the third security key used for data transmission with the terminal based on the second configuration information includes:
determining the third security key based on a mapping relationship between a cell radio network temporary identifier (C-RNTI) and an sk-counter value or a security key, and a C-RNTI sent from the terminal.

In any of the embodiments of the present application, the method further includes:
sending a media access control-control element (MAC-CE), downlink control information (DCI) or a radio resource control (RRC) signaling to the terminal, where the MAC-CE, DCI or RRC signaling contains a fourth sk-counter value or indication information for indicating the fourth sk-counter value.

It should be noted here that the above terminal, the MN and the first SN provided by the embodiments of the present application may implement all the method steps implemented by the above method embodiments, and may achieve the same effect. The same parts and beneficial effects as the same method embodiments are not repeated here.

FIG. 7 is a first schematic structural diagram of an apparatus for determining SCG side security key according to an embodiment of the present application. As shown in FIG. 7, the apparatus includes:
a first receiving unit 700, used for receiving first configuration information sent from a master node (MN); and
a first security key determining unit 710, used for, in case of determining to access to a target SCG, based on the first configuration information, generating or updating or using a target SCG side security key or an SCG side security key used for at least one subsequent access to a candidate target SCG.

In any of the embodiments of the present application, the first configuration information includes one or more of the following:
security configuration information;
a security configuration information list, where the security configuration information list contains at least one security configuration information unit, and each security configuration information unit is associated with one or more candidate SCGs;
a cell group identifier or index;
a secondary node (SN) identifier or index; or
a calculation way of an SN key counter (sk-counter) value.

In any of the embodiments of the present application, the security configuration information unit contains one or more of the following:
security configuration information;
a secondary node (SN) identifier or index;
a cell group identifier or index;
a primary secondary cell (PSCell) identifier or index; or
a security configuration information index.

In any of the embodiments of the present application, the security configuration information contains one or more of the following:
a first SN key counter (sk-counter) value;
a maximum sk-counter value;
a maximum number of accesses;
a first step;
an sk-counter value list; or
a cell radio network temporary identifier (C-RNTI) list.

In any of the embodiments of the present application, generating or updating or using the target SCG side security key includes one or more of the following:
using a first security key as the target SCG side security key, where the first security key is a security key used for a most recent access to the target SCG or a target secondary node (SN); or,
determining the target SCG side security key based on a second SN key counter (sk-counter) value, where the second sk-counter value is an sk-counter value used to generate a first security key; or,
determining the target SCG side security key based on a third sk-counter value, where the third sk-counter value is an sk-counter value determined in a first way based on the first configuration information; or,
determining the target SCG side security key based on a fourth sk-counter value, where the fourth sk-counter value is an sk-counter value indicated by a network device; or,
determining the target SCG side security key based on a fifth sk-counter value, where the fifth sk-counter value is a first sk-counter value associated with the target SCG or a target SN; or,
determining the target SCG side security key based on a sixth sk-counter value, where the sixth sk-counter value is an sk-counter value determined and saved for a current access to the target SCG after a most recent generation or update or use of the target SCG side security key; or,
using a second security key as the target SCG side security key, where the second security key is a security key determined and saved for a current access to the target SCG after a most recent generation or update or use of the target SCG side security key.

In any of the embodiments of the present application, the first security key determining unit 710 is further used for one or more of the following:
determining a sixth sk-counter value in a first way based on the first configuration information; or,
generating the SCG side security key based on a sixth sk-counter value and saving the SCG side security key as a second security key.

In any of the embodiments of the present application, determining the third sk-counter value or the sixth sk-counter value in the first way based on the first configuration information includes one or more of the following:
determining the third sk-counter value or the sixth sk-counter value based on a sum of a seventh sk-counter value and a second step; or,
determining the third sk-counter value or the sixth sk-counter value based on a difference between a seventh sk-counter value and a second step; or,
determining the third sk-counter value or the sixth sk-counter value based on a sum of the three: a seventh sk-counter value, a product of a first value N and a second value M, and a first sequence number value; or,
determining the third sk-counter value or the sixth sk-counter value based on a sum of the two: a product of a seventh sk-counter value and a first sequence number value, and a second value M; or,
determining the third sk-counter value or the sixth sk-counter value based on a sum of the two: a product of a first sequence number value and a second value M, and a seventh sk-counter value; or,
determining the third sk-counter value or the sixth sk-counter value based on a sum of a first sk-counter value and a first offset; or,
determining the third sk-counter value or the sixth sk-counter value based on a difference between a first sk-counter value and a first offset; or,
determining the third sk-counter value or the sixth sk-counter value based on an sk-counter value list and a number of accesses;
where the seventh sk-counter value is an sk-counter value used for a most recent generation or update of the SCG side security key; the first value N indicates that a network side configures N candidate SCGs for the terminal; the second value M indicates that the third sk-counter value or the sixth sk-counter value determined this time corresponds to an M-th access to the target SCG or a target SN; the first sequence number value is one or more of a cell group identifier or index corresponding to the target SCG, an SN identifier or index corresponding to the target SCG, or a primary secondary cell (PSCell) identifier or index corresponding to the target SCG.

In any of the embodiments of the present application, the second step includes one or more of the following:
a step specified by a protocol;
a step generated by the terminal; or
a first step.

In any of the embodiments of the present application, the first offset is determined by one or more of the following ways:
determining the first offset based on a sum of a second offset and a second step; or,
determining the first offset based on a difference between a second offset and a second step; or,
determining the first offset based on a sum of the three: a second offset, a product of a first value N and a second value M, and a first sequence number value; or,
determining the first offset based on a sum of the two: a product of a second offset and a first sequence number value, and a second value M; or,
determining the first offset based on a sum of the two: a product of a first sequence number value and a second value M, and a second offset;
where the second offset is a most recently updated first offset.

In any of the embodiments of the present application, the apparatus further includes:
a first sending unit, used for sending first information to the MN, where the first information contains one or more of the following:
a third sk-counter value;
a sixth sk-counter value;
a second step;
an sk-counter value index;
a number of accesses; or
a first offset.

In any of the embodiments of the present application, the first security key determining unit 710 is further used for:
in case of determining that an sk-counter value used to generate the SCG side security key is greater than a maximum sk-counter value configured by a network side, or a number of accesses is greater than a maximum number of accesses configured by a network side, performing one or more of the following:
sending second information to the MN, where the second information is used to indicate that the sk-counter value or the number of accesses reaches a maximum threshold;
releasing configuration information of the target SCG or a target secondary node (SN);
releasing configuration information of all candidate SCGs; or
ending evaluation of an execution condition for the target SCG or a target SN.

In any of the embodiments of the present application, determining to access to the target SCG includes one or more of the following:
determining that an execution condition for the target SCG is satisfied; or,
receiving an SCG addition or change indication sent from a network device, where the SCG addition or change indication is used to indicate the terminal to access to the target SCG.

In any of the embodiments of the present application, a way for determining the fourth sk-counter value includes:
receiving a media access control-control element (MAC-CE), downlink control information (DCI) or a radio resource control (RRC) signaling sent from a network device, where the MAC-CE, DCI or RRC signaling contains the fourth sk-counter value or indication information for indicating the fourth sk-counter value.

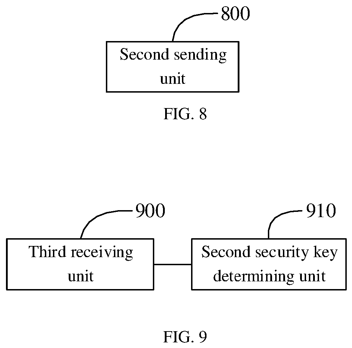

FIG. 8 is a second schematic structural diagram of an apparatus for determining SCG side security key according to an embodiment of the present application. As shown in FIG. 8, the apparatus includes:
a second sending unit 800, used for sending first configuration information to a terminal, where the first configuration information is used for determining an SCG side security key used, by the terminal, for accessing a target SCG or for at least one subsequent access to a candidate target SCG; and the second sending unit 800 is further used for sending second configuration information to a first secondary node (SN), where the second configuration information is used for determining a third security key used for data transmission between the first SN and the terminal, where the first SN includes a target SN or a candidate target SN.

In any of the embodiments of the present application, the first configuration information includes one or more of the following:
security configuration information;
a security configuration information list, where the security configuration information list contains at least one security configuration information unit, and each security configuration information unit is associated with one or more candidate SCGs;
a cell group identifier or index;
a secondary node (SN) identifier or index; or
a calculation way of an SN key counter (sk-counter) value.

In any of the embodiments of the present application, the security configuration information unit contains one or more of the following:
security configuration information;
a secondary node (SN) identifier or index;
a cell group identifier or index;
a primary secondary cell (PSCell) identifier or index; or
a security configuration information index.

In any of the embodiments of the present application, the security configuration information contains one or more of the following:
a first SN key counter (sk-counter) value;
a maximum sk-counter value;
a maximum number of accesses;
a first step;
an sk-counter value list; or
a cell radio network temporary identifier (C-RNTI) list.

In any of the embodiments of the present application, the second configuration information contains one or more of the following:
a value of the third security key;
a security key list;
an index of the third security key;
a cell radio network temporary identifier (C-RNTI) list;
an sk-counter value used to generate the third security key; or
third information used to determine the third security key.

In any of the embodiments of the present application, the third information contains one or more of the following:
first information reported from the terminal to the MN;
first configuration information configured by a network side for the terminal;
a first sk-counter value;
an MN side security key;
a maximum sk-counter value;
a maximum number of accesses;
a first step;
an sk-counter value list;
a C-RNTI list;
a cell group identifier or index of a first SCG, where the first SCG is a candidate SCG corresponding to the first SN among multiple candidate SCGs configured by a network side for the terminal;
a primary secondary cell (PSCell) identifier or index of a first PSCell, where the first PSCell is a PSCell corresponding to a first SCG;
an SN identifier or index of the first SN;
a step generated by the terminal;
a number of accesses;
a first offset; or
a calculation way of an sk-counter value.

In any of the embodiments of the present application, the second sending unit 800 is further used for:
sending a media access control-control element (MAC-CE), downlink control information (DCI) or a radio resource control (RRC) signaling to the terminal, where the MAC-CE, DCI or RRC signaling contains a fourth sk-counter value or indication information for indicating a fourth sk-counter value.

In any of the embodiments of the present application, the second sending unit 800 is further used for:
sending an SCG addition or change indication to the terminal, where the SCG addition or change indication is used to indicate the terminal to access to the target SCG.

In any of the embodiments of the present application, the apparatus further includes a second receiving unit, used for:
receiving second information sent from the terminal, where the second information is used to indicate that an sk-counter value or a number of accesses reaches a maximum threshold; and
performing one or more of the following based on the second information:
   releasing configuration information of a target SCG or target SN accessed by the terminal;
   releasing configuration information of all candidate SCGs;
   reconfiguring configuration information of a target SCG or target SN accessed by the terminal;
   reconfiguring configuration information of all candidate SCGs;
   reconfiguring an MN side security key; or
   reconfiguring an sk-counter value or first configuration information used to determine the SCG side security key.

FIG. 9 is a third schematic structural diagram of an apparatus for determining SCG side security key according to an embodiment of the present application. As shown in FIG. 9, the apparatus includes:
a third receiving unit 900, used for receiving second configuration information sent from a master node (MN); and
a second security key determining unit 910, used for determining a third security key used for data transmission with a terminal based on the second configuration information.

In any of the embodiments of the present application, the second configuration information contains one or more of the following:
a value of the third security key;
a security key list;
an index of the third security key;
a cell radio network temporary identifier (C-RNTI) list;
an SN key counter (sk-counter) value used to generate the third security key; or
third information used to determine the third security key.

In any of the embodiments of the present application, the third information contains one or more of the following:
first information reported from the terminal to the MN;
first configuration information configured by a network side for the terminal;
a first sk-counter value;
an MN side security key;
a maximum sk-counter value;
a maximum number of accesses;
a first step;
an sk-counter value list;
a C-RNTI list;
a cell group identifier or index of a first secondary cell group (SCG), where the first SCG is a candidate SCG corresponding to the first SN among multiple candidate SCGs configured by a network side for the terminal;
a primary secondary cell (PSCell) identifier or index of a first PSCell, where the first PSCell is a PSCell corresponding to a first SCG;
an SN identifier or index of the first SN;
a step generated by the terminal;
a number of accesses;
a first offset; or
a calculation way of an sk-counter value.

In any of the embodiments of the present application, determining the third security key used for data transmission with the terminal based on the second configuration information includes:
determining the third security key based on a mapping relationship between a cell radio network temporary identifier (C-RNTI) and an sk-counter value or a security key, and a C-RNTI sent from the terminal.

In any of the embodiments of the present application, the apparatus further includes:
a third sending unit, used for sending a media access control-control element (MAC-CE), downlink control information (DCI) or a radio resource control (RRC) signaling to the terminal, where the MAC-CE, DCI or RRC signaling contains a fourth sk-counter value or indication information for indicating the fourth sk-counter value.

It should be noted that, the division of units in the embodiments of the present application is schematic, and is only a logical function division, and there may be other division manners in actual implementation. In addition, the functional units in the various embodiments of the present application may be integrated into one processing unit, or each unit may exist alone physically, or two or more units may be integrated into one unit. The above-mentioned integrated unit may be implemented in the form of hardware or software functional unit.

If the integrated unit is implemented in the form of a software functional unit and sold or used as an independent product, it may be stored in a processor readable storage medium. Based on such understanding, the solutions of the present application in essence or a part of the solutions that contributes to the prior art, or all or part of the solutions, may be embodied in the form of a software product, which is stored in a storage medium, including several instructions to cause a computer device (which may be a personal computer, server, or network device, etc.) or a processor to perform all or part of the steps of the methods described in the respective embodiments of the present application. The storage medium described above includes various media that may store program codes such as a flash disk, a mobile hard disk, a read-only memory (ROM), a random access memory (RAM), a magnetic disk, or a compact disk.

It should be noted here that the above apparatus according to the embodiments of the present application may implement all the method steps implemented by the above method embodiments, and may achieve the same effect. The same parts and beneficial effects as the same method embodiments are not repeated here.

An embodiment of the present application further provides a computer-readable storage medium, where the computer-readable storage medium stores a computer program, and the computer program is used for causing a computer to perform any of the methods for determining SCG side security key provided by the above embodiments.

It should be noted here that the computer-readable storage medium according to the embodiments of the present application may implement all the method steps implemented by the above method embodiments, and may achieve the same effect. The same parts and beneficial effects as the same method embodiments are not repeated here.

The computer-readable storage medium may be any available medium or data storage device that may be accessed by the computer, including but not limited to, a magnetic storage (e.g., a floppy disk, a hard disk, a magnetic tape, a magneto-optical disk (MO), etc.), an optical memory (such as CD, DVD, BD, HVD, etc.), and a semiconductor memory (such as ROM, EPROM, EEPROM, a non-volatile memory (NAND FLASH), a solid-state drive (SSD)), etc.

The solutions according to the embodiments of the present application may be applicable to various systems, for example, 5G systems. For example, the applicable systems may be a global system of mobile communication (GSM) system, a code division multiple access (CDMA) system, a wideband code division multiple access (WCDMA) general packet radio service (GPRS) system, a long term evolution (LTE) system, an LTE frequency division duplex (FDD) system, an LTE time division duplex (TDD) system, a long term evolution advanced (LTE-A) system, a universal mobile telecommunication system (UMTS), a worldwide interoperability for microwave access (WiMAX) system, a 5G new radio (NR) system, etc. These various systems include a terminal device and a network device, and may further include a core network part, such as an evolved packet system (EPS), a 5G system (5GS), and the like.

The terminal in the embodiments of the present application may be a device that provides voice and/or data connectivity to a user, a handheld device with a wireless connection function, or other processing devices connected to a wireless modem. In different systems, the names of the terminal may be different. For example, in the 5G system, the terminal may be called as a user equipment (UE). A wireless terminal device may communicate with one or more core networks (CNs) via a radio access network (RAN), and the wireless terminal device may be a mobile terminal device, such as a mobile phone (or cellular phone), a computer with mobile terminal device, e.g., a portable mobile device, a pocket-sized mobile device, a handheld mobile device, a computer-built mobile device or a vehicle-mounted mobile device, which exchange language and/or data with the radio access network. For example, a personal communication service (PCS) phone, a radio phone, a session initiated protocol (SIP) phone, a wireless local loop (WLL) station, a personal digital assistant (PDA) and other devices. A wireless terminal device may also be called a system, a subscriber unit, a subscriber station, a mobile station, a mobile, a remote station, an access point, a remote terminal, an access terminal, a user terminal, a user agent, or a user device, which is not limited in the embodiments of the present application.

The network device in the embodiments of the present application may be a base station, and the base station may include multiple cells providing services for the terminal device. Depending on the specific scenario, the base station may be called an access point, or a device communicating with a wireless terminal device through one or more sectors on the air interface in the access network, or other names. The network device may be used for exchanging received air frames with internet protocol (IP) packets, and acting as a router between the wireless terminal device and the rest of the access network, where the rest of the access network may include an IP communication network. The network device may also coordinate attribute management for the air interface. For example, the network device in the embodiments of the present application may be a base transceiver station (BTS) in a global system for mobile communications (GSM) or a code division multiple access (CDMA), a node B in a wide-band code division multiple access (WCDMA), an evolutional node B (eNB or e-Node B) in a long term evolution (LTE) system, a 5G base station (gNB) in 5G network architecture (next generation system), a home evolved node B (HeNB), a relay node, a femto, or a pico base station (pico), etc., which is not limited in the embodiments of the present application. In some network structures, the network device may include a centralized unit (CU) node and a distributed unit (DU) node, and the centralized unit and the distributed unit may be geographically separated.

A multi-input multi-output (MIMO) transmission may be performed between the network device and the terminal device by using one or more antennas. The MIMO transmission may be single-user MIMO (SU-MIMO) or multi-user MIMO (MU-MIMO). Depending on the form and number of antenna combinations, MIMO transmission may be 2D-MIMO, 3D-MIMO, FD-MIMO or massive-MIMO, and may also be diversity transmission, precoding transmission, beamforming transmission, etc.

As is appreciated by those skilled in the art, embodiments of the present application may be provided as a method, system, or computer program product. Accordingly, the present application may take the form of an entirely hardware embodiment, an entirely software embodiment, or an embodiment combining software and hardware aspects. Furthermore, the present application may take the form of a computer program product embodied on one or more computer-usable storage media having computer-usable program code embodied therein, including but not limited to disk storage, optical storage, and the like.

The present application is described with reference to flow charts and/or block diagrams of methods, apparatus (systems), and computer program products according to embodiments of the present application. It is understood that each flow and/or block in the flow charts and/or block diagrams, and combinations thereof may be implemented by computer-executable instructions. These computer-executable instructions may be provided to processors of a general purpose computer, a special purpose computer, an embedded processor or other programmable data processing device to produce a machine and the instructions executed by the processor of the computer or other programmable data processing device form a means for performing the functions specified in one or more flows in a flowchart and/or one or more blocks of a block diagram.

These processor-executable instructions may also be stored in a processor-readable memory capable of directing a computer or other programmable data processing apparatus to operate in a particular manner, and the instructions stored in the processor-readable memory may result in a manufacture including instruction means, the instruction means may perform the functions specified in one or more flows of the flowchart and/or one or more blocks of the block diagram.

These processor-executable instructions may also be loaded onto a computer or other programmable data processing device to cause a series of operational steps to be performed on the computer or other programmable device to produce a computer-implemented process and instructions performed on the computer or other programmable devices provide steps for performing the functions specified in one or more flows of the flowchart and/or one or more blocks of the block diagram.

It is apparent to those skilled in the art that various modifications and variations may be made in the present application without departing from the scope of the present application. Thus, provided that these modifications and variations of the present application fall within the scope of the claims of the present application and their equivalents, the present application is also intended to cover such modifications and variations.

## Claims

1. A method for determining secondary cell group (SCG) side security key, performed by a terminal, comprising:
receiving first configuration information sent from a master node (MN); and
in case of determining to access to a target SCG, based on the first configuration information, generating or updating or using a target SCG side security key or an SCG side security key used for at least one subsequent access to a candidate target SCG.

2. The method of claim 1, wherein the first configuration information comprises one or more of the following:
security configuration information;
a security configuration information list, wherein the security configuration information list contains at least one security configuration information unit, and each security configuration information unit is associated with one or more candidate SCGs;
a cell group identifier or index;
a secondary node (SN) identifier or index; or
a calculation way of an SN key counter (sk-counter) value.

3. The method of claim 2, wherein the security configuration information unit contains one or more of the following:
security configuration information;
a secondary node (SN) identifier or index;
a cell group identifier or index;
a primary secondary cell (PSCell) identifier or index; or
a security configuration information index.

4. The method of claim 2 or 3, wherein the security configuration information contains one or more of the following:
a first SN key counter (sk-counter) value;
a maximum sk-counter value;
a maximum number of accesses;
a first step;
an sk-counter value list; or
a cell radio network temporary identifier (C-RNTI) list.

5. The method of any of claims 1 to 4, wherein generating or updating or using the target SCG side security key comprises one or more of the following:
using a first security key as the target SCG side security key, wherein the first security key is a security key used for a most recent access to the target SCG or a target secondary node (SN); or,
determining the target SCG side security key based on a second SN key counter (sk-counter) value, wherein the second sk-counter value is an sk-counter value used to generate a first security key; or,
determining the target SCG side security key based on a third sk-counter value, wherein the third sk-counter value is an sk-counter value determined in a first way based on the first configuration information; or,
determining the target SCG side security key based on a fourth sk-counter value, wherein the fourth sk-counter value is an sk-counter value indicated by a network device; or,
determining the target SCG side security key based on a fifth sk-counter value, wherein the fifth sk-counter value is a first sk-counter value associated with the target SCG or a target SN; or,
determining the target SCG side security key based on a sixth sk-counter value, wherein the sixth sk-counter value is an sk-counter value determined and saved for a current access to the target SCG after a most recent generation or update or use of the target SCG side security key; or,
using a second security key as the target SCG side security key, wherein the second security key is a security key determined and saved for a current access to the target SCG after a most recent generation or update or use of the target SCG side security key.

6. The method of claim 5, further comprising one or more of the following:
determining a sixth sk-counter value in a first way based on the first configuration information; or,
generating the SCG side security key based on a sixth sk-counter value and saving the SCG side security key as a second security key.

7. The method of claim 5 or 6, wherein determining the third sk-counter value or the sixth sk-counter value in the first way based on the first configuration information comprises one or more of the following:
determining the third sk-counter value or the sixth sk-counter value based on a sum of a seventh sk-counter value and a second step; or,
determining the third sk-counter value or the sixth sk-counter value based on a difference between a seventh sk-counter value and a second step; or,
determining the third sk-counter value or the sixth sk-counter value based on a sum of the three: a seventh sk-counter value, a product of a first value N and a second value M, and a first sequence number value; or,
determining the third sk-counter value or the sixth sk-counter value based on a sum of the two: a product of a seventh sk-counter value and a first sequence number value, and a second value M; or,
determining the third sk-counter value or the sixth sk-counter value based on a sum of the two: a product of a first sequence number value and a second value M, and a seventh sk-counter value; or,
determining the third sk-counter value or the sixth sk-counter value based on a sum of a first sk-counter value and a first offset; or,
determining the third sk-counter value or the sixth sk-counter value based on a difference between a first sk-counter value and a first offset; or,
determining the third sk-counter value or the sixth sk-counter value based on an sk-counter value list and a number of accesses;
wherein the seventh sk-counter value is an sk-counter value used for a most recent generation or update of the SCG side security key; the first value N indicates that a network side configures N candidate SCGs for the terminal; the second value M indicates that the third sk-counter value or the sixth sk-counter value determined this time corresponds to an M-th access to the target SCG or a target SN; the first sequence number value is one or more of a cell group identifier or index corresponding to the target SCG, an SN identifier or index corresponding to the target SCG, or a primary secondary cell (PSCell) identifier or index corresponding to the target SCG.

8. The method of claim 7, wherein the second step comprises one or more of the following:
a step specified by a protocol;
a step generated by the terminal; or
a first step.

9. The method of claim 7, wherein the first offset is determined by one or more of the following ways:
determining the first offset based on a sum of a second offset and a second step; or,
determining the first offset based on a difference between a second offset and a second step; or,
determining the first offset based on a sum of the three: a second offset, a product of a first value N and a second value M, and a first sequence number value; or,
determining the first offset based on a sum of the two: a product of a second offset and a first sequence number value, and a second value M; or,
determining the first offset based on a sum of the two: a product of a first sequence number value and a second value M, and a second offset;
wherein the second offset is a most recently updated first offset.

10. The method of any of claims 5 to 9, further comprising:
sending first information to the MN, wherein the first information contains one or more of the following:
a third sk-counter value;
a sixth sk-counter value;
a second step;
an sk-counter value index;
a number of accesses; or
a first offset.

11. The method of any of claims 5 to 9, further comprising:
in case of determining that an sk-counter value used to generate the SCG side security key is greater than a maximum sk-counter value configured by a network side, or a number of accesses is greater than a maximum number of accesses configured by a network side, performing one or more of the following:
sending second information to the MN, wherein the second information is used to indicate that the sk-counter value or the number of accesses reaches a maximum threshold;
releasing configuration information of the target SCG or a target secondary node (SN);
releasing configuration information of all candidate SCGs; or
ending evaluation of an execution condition for the target SCG or a target SN.

12. The method of claim 1, wherein determining to access to the target SCG comprises one or more of the following:
determining that an execution condition for the target SCG is satisfied; or,
receiving an SCG addition or change indication sent from a network device, wherein the SCG addition or change indication is used to indicate the terminal to access to the target SCG.

13. The method of claim 5, wherein a way for determining the fourth sk-counter value comprises:
receiving a media access control-control element (MAC-CE), downlink control information (DCI) or a radio resource control (RRC) signaling sent from a network device, wherein the MAC-CE, DCI or RRC signaling contains the fourth sk-counter value or indication information for indicating the fourth sk-counter value.

14. A method for determining secondary cell group (SCG) side security key, performed by a master node (MN), comprising:
sending first configuration information to a terminal, wherein the first configuration information is used for determining an SCG side security key used, by the terminal, for accessing a target SCG or for at least one subsequent access to a candidate target SCG; and
sending second configuration information to a first secondary node (SN), wherein the second configuration information is used for determining a third security key used for data transmission between the first SN and the terminal, wherein the first SN comprises a target SN or a candidate target SN.

15. The method of claim 14, wherein the first configuration information comprises one or more of the following:
security configuration information;
a security configuration information list, wherein the security configuration information list contains at least one security configuration information unit, and each security configuration information unit is associated with one or more candidate SCGs;
a cell group identifier or index;
a secondary node (SN) identifier or index; or
a calculation way of an SN key counter (sk-counter) value.

16. The method of claim 15, wherein the security configuration information unit contains one or more of the following:
security configuration information;
a secondary node (SN) identifier or index;
a cell group identifier or index;
a primary secondary cell (PSCell) identifier or index; or
a security configuration information index.

17. The method of claim 15 or 16, wherein the security configuration information contains one or more of the following:
a first SN key counter (sk-counter) value;
a maximum sk-counter value;
a maximum number of accesses;
a first step;
an sk-counter value list; or
a cell radio network temporary identifier (C-RNTI) list.

18. The method of claim 14, wherein the second configuration information contains one or more of the following:
a value of the third security key;
a security key list;
an index of the third security key;
a cell radio network temporary identifier (C-RNTI) list;
an sk-counter value used to generate the third security key; or
third information used to determine the third security key.

19. The method of claim 18, wherein the third information contains one or more of the following:
first information reported from the terminal to the MN;
first configuration information configured by a network side for the terminal;
a first sk-counter value;
an MN side security key;
a maximum sk-counter value;
a maximum number of accesses;
a first step;
an sk-counter value list;
a C-RNTI list;
a cell group identifier or index of a first SCG, wherein the first SCG is a candidate SCG corresponding to the first SN among multiple candidate SCGs configured by a network side for the terminal;
a primary secondary cell (PSCell) identifier or index of a first PSCell, wherein the first PSCell is a PSCell corresponding to a first SCG;
an SN identifier or index of the first SN;
a step generated by the terminal;
a number of accesses;
a first offset; or
a calculation way of an sk-counter value.

20. The method of claim 14, further comprising:
sending a media access control-control element (MAC-CE), downlink control information (DCI) or a radio resource control (RRC) signaling to the terminal, wherein the MAC-CE, DCI or RRC signaling contains a fourth sk-counter value or indication information for indicating a fourth sk-counter value.

21. The method of claim 14, further comprising:
sending an SCG addition or change indication to the terminal, wherein the SCG addition or change indication is used to indicate the terminal to access to the target SCG.

22. The method of claim 14, further comprising:
receiving second information sent from the terminal, wherein the second information is used to indicate that an sk-counter value or a number of accesses reaches a maximum threshold; and
performing one or more of the following based on the second information:
releasing configuration information of a target SCG or target SN accessed by the terminal;
releasing configuration information of all candidate SCGs;
reconfiguring configuration information of a target SCG or target SN accessed by the terminal;
reconfiguring configuration information of all candidate SCGs;
reconfiguring an MN side security key; or
reconfiguring an sk-counter value or first configuration information used to determine the SCG side security key.

23. A method for determining secondary cell group (SCG) side security key, performed by a first secondary node (SN), comprising:
receiving second configuration information sent from a master node (MN); and
determining a third security key used for data transmission with a terminal based on the second configuration information.

24. The method of claim 23, wherein the second configuration information contains one or more of the following:
a value of the third security key;
a security key list;
an index of the third security key;
a cell radio network temporary identifier (C-RNTI) list;
an SN key counter (sk-counter) value used to generate the third security key; or
third information used to determine the third security key.

25. The method of claim 24, wherein the third information contains one or more of the following:
first information reported from the terminal to the MN;
first configuration information configured by a network side for the terminal;
a first sk-counter value;
an MN side security key;
a maximum sk-counter value;
a maximum number of accesses;
a first step;
an sk-counter value list;
a C-RNTI list;
a cell group identifier or index of a first SCG, wherein the first SCG is a candidate SCG corresponding to the first SN among multiple candidate SCGs configured by a network side for the terminal;
a primary secondary cell (PSCell) identifier or index of a first PSCell, wherein the first PSCell is a PSCell corresponding to a first SCG;
an SN identifier or index of the first SN;
a step generated by the terminal;
a number of accesses;
a first offset; or
a calculation way of an sk-counter value.

26. The method of claim 23, wherein determining the third security key used for data transmission with the terminal based on the second configuration information comprises:
determining the third security key based on a mapping relationship between a cell radio network temporary identifier (C-RNTI) and an sk-counter value or a security key, and a C-RNTI sent from the terminal.

27. The method of claim 23, further comprising:
sending a media access control-control element (MAC-CE), downlink control information (DCI) or a radio resource control (RRC) signaling to the terminal, wherein the MAC-CE, DCI or RRC signaling contains a fourth sk-counter value or indication information for indicating the fourth sk-counter value.

28. A terminal, comprising a memory, a transceiver and a processor,
wherein the memory is used for storing a computer program, the transceiver is used for receiving and sending data under control of the processor, and the processor is used for reading the computer program in the memory and performing the following operations:
receiving first configuration information sent from a master node (MN); and
in case of determining to access to a target secondary cell group (SCG), based on the first configuration information, generating or updating or using a target SCG side security key or an SCG side security key used for at least one subsequent access to a candidate target SCG.

29. The terminal of claim 28, wherein the first configuration information comprises one or more of the following:
security configuration information;
a security configuration information list, wherein the security configuration information list contains at least one security configuration information unit, and each security configuration information unit is associated with one or more candidate SCGs;
a cell group identifier or index;
a secondary node (SN) identifier or index; or
a calculation way of an SN key counter (sk-counter) value.

30. The terminal of claim 29, wherein the security configuration information unit contains one or more of the following:
security configuration information;
a secondary node (SN) identifier or index;
a cell group identifier or index;
a primary secondary cell (PSCell) identifier or index; or
a security configuration information index.

31. The terminal of claim 29 or 30, wherein the security configuration information contains one or more of the following:
a first SN key counter (sk-counter) value;
a maximum sk-counter value;
a maximum number of accesses;
a first step;
an sk-counter value list; or
a cell radio network temporary identifier (C-RNTI) list.

32. The terminal of any of claims 28 to 31, wherein generating or updating or using the target SCG side security key comprises one or more of the following:
using a first security key as the target SCG side security key, wherein the first security key is a security key used for a most recent access to the target SCG or a target secondary node (SN); or,
determining the target SCG side security key based on a second SN key counter (sk-counter) value, wherein the second sk-counter value is an sk-counter value used to generate a first security key; or,
determining the target SCG side security key based on a third sk-counter value, wherein the third sk-counter value is an sk-counter value determined in a first way based on the first configuration information; or,
determining the target SCG side security key based on a fourth sk-counter value, wherein the fourth sk-counter value is an sk-counter value indicated by a network device; or,
determining the target SCG side security key based on a fifth sk-counter value, wherein the fifth sk-counter value is a first sk-counter value associated with the target SCG or a target SN; or,
determining the target SCG side security key based on a sixth sk-counter value, wherein the sixth sk-counter value is an sk-counter value determined and saved for a current access to the target SCG after a most recent generation or update or use of the target SCG side security key; or,
using a second security key as the target SCG side security key, wherein the second security key is a security key determined and saved for a current access to the target SCG after a most recent generation or update or use of the target SCG side security key.

33. The terminal of claim 32, wherein the operations further comprise one or more of the following:
determining a sixth sk-counter value in a first way based on the first configuration information; or,
generating the SCG side security key based on a sixth sk-counter value and saving the SCG side security key as a second security key.

34. The terminal of claim 32 or 33, wherein determining the third sk-counter value or the sixth sk-counter value in the first way based on the first configuration information comprises one or more of the following:
determining the third sk-counter value or the sixth sk-counter value based on a sum of a seventh sk-counter value and a second step; or,
determining the third sk-counter value or the sixth sk-counter value based on a difference between a seventh sk-counter value and a second step; or,
determining the third sk-counter value or the sixth sk-counter value based on a sum of the three: a seventh sk-counter value, a product of a first value N and a second value M, and a first sequence number value; or,
determining the third sk-counter value or the sixth sk-counter value based on a sum of the two: a product of a seventh sk-counter value and a first sequence number value, and a second value M; or,
determining the third sk-counter value or the sixth sk-counter value based on a sum of the two: a product of a first sequence number value and a second value M, and a seventh sk-counter value; or,
determining the third sk-counter value or the sixth sk-counter value based on a sum of a first sk-counter value and a first offset; or,
determining the third sk-counter value or the sixth sk-counter value based on a difference between a first sk-counter value and a first offset; or,
determining the third sk-counter value or the sixth sk-counter value based on an sk-counter value list and a number of accesses;
wherein the seventh sk-counter value is an sk-counter value used for a most recent generation or update of the SCG side security key; the first value N indicates that a network side configures N candidate SCGs for the terminal; the second value M indicates that the third sk-counter value or the sixth sk-counter value determined this time corresponds to an M-th access to the target SCG or a target SN; the first sequence number value is one or more of a cell group identifier or index corresponding to the target SCG, an SN identifier or index corresponding to the target SCG, or a primary secondary cell (PSCell) identifier or index corresponding to the target SCG.

35. The terminal of claim 34, wherein the second step comprises one or more of the following:
a step specified by a protocol;
a step generated by the terminal; or
a first step.

36. The terminal of claim 34, wherein the first offset is determined by one or more of the following ways:
determining the first offset based on a sum of a second offset and a second step; or,
determining the first offset based on a difference between a second offset and a second step; or,
determining the first offset based on a sum of the three: a second offset, a product of a first value N and a second value M, and a first sequence number value; or,
determining the first offset based on a sum of the two: a product of a second offset and a first sequence number value, and a second value M; or,
determining the first offset based on a sum of the two: a product of a first sequence number value and a second value M, and a second offset;
wherein the second offset is a most recently updated first offset.

37. The terminal of any of claims 32 to 36, wherein the operations further comprise:
sending first information to the MN, wherein the first information contains one or more of the following:
a third sk-counter value;
a sixth sk-counter value;
a second step;
an sk-counter value index;
a number of accesses; or
a first offset.

38. The terminal of any of claims 32 to 36, wherein the operations further comprise:
in case of determining that an sk-counter value used to generate the SCG side security key is greater than a maximum sk-counter value configured by a network side, or a number of accesses is greater than a maximum number of accesses configured by a network side, performing one or more of the following:
sending second information to the MN, wherein the second information is used to indicate that the sk-counter value or the number of accesses reaches a maximum threshold;
releasing configuration information of the target SCG or a target secondary node (SN);
releasing configuration information of all candidate SCGs; or
ending evaluation of an execution condition for the target SCG or a target SN.

39. The terminal of claim 28, wherein determining to access to the target SCG comprises one or more of the following:
determining that an execution condition for the target SCG is satisfied; or,
receiving an SCG addition or change indication sent from a network device, wherein the SCG addition or change indication is used to indicate the terminal to access to the target SCG.

40. The terminal of claim 32, wherein a way for determining the fourth sk-counter value comprises:
receiving a media access control-control element (MAC-CE), downlink control information (DCI) or a radio resource control (RRC) signaling sent from a network device, wherein the MAC-CE, DCI or RRC signaling contains the fourth sk-counter value or indication information for indicating the fourth sk-counter value.

41. A master node (MN), comprising a memory, a transceiver and a processor,
wherein the memory is used for storing a computer program, the transceiver is used for receiving and sending data under control of the processor, and the processor is used for reading the computer program in the memory and performing the following operations:
sending first configuration information to a terminal, wherein the first configuration information is used for the terminal to determine a secondary cell group (SCG) side security key used for accessing a target SCG or for at least one subsequent access to a candidate target SCG; and
sending second configuration information to a first secondary node (SN), wherein the second configuration information is used by the first SN to determine a third security key used for data transmission between the first SN and the terminal, wherein the first SN comprises a target SN or a candidate target SN.

42. The MN of claim 41, wherein the first configuration information comprises one or more of the following:
security configuration information;
a security configuration information list, wherein the security configuration information list contains at least one security configuration information unit, and each security configuration information unit is associated with one or more candidate SCGs;
a cell group identifier or index;
a secondary node (SN) identifier or index; or
a calculation way of an SN key counter (sk-counter) value.

43. The MN of claim 42, wherein the security configuration information unit contains one or more of the following:
security configuration information;
a secondary node (SN) identifier or index;
a cell group identifier or index;
a primary secondary cell (PSCell) identifier or index; or
a security configuration information index.

44. The MN of claim 42 or 43, wherein the security configuration information contains one or more of the following:
a first SN key counter (sk-counter) value;
a maximum sk-counter value;
a maximum number of accesses;
a first step;
an sk-counter value list; or
a cell radio network temporary identifier (C-RNTI) list.

45. The MN of claim 41, wherein the second configuration information contains one or more of the following:
a value of the third security key;
a security key list;
an index of the third security key;
a cell radio network temporary identifier (C-RNTI) list;
an sk-counter value used to generate the third security key; or
third information used to determine the third security key.

46. The MN of claim 45, wherein the third information contains one or more of the following:
first information reported from the terminal to the MN;
first configuration information configured by a network side for the terminal;
a first sk-counter value;
an MN side security key;
a maximum sk-counter value;
a maximum number of accesses;
a first step;
an sk-counter value list;
a C-RNTI list;
a cell group identifier or index of a first SCG, wherein the first SCG is a candidate SCG corresponding to the first SN among multiple candidate SCGs configured by a network side for the terminal;
a primary secondary cell (PSCell) identifier or index of a first PSCell, wherein the first PSCell is a PSCell corresponding to a first SCG;
an SN identifier or index of the first SN;
a step generated by the terminal;
a number of accesses;
a first offset; or
a calculation way of an sk-counter value.

47. The MN of claim 41, wherein the operations further comprise:
sending a media access control-control element (MAC-CE), downlink control information (DCI) or a radio resource control (RRC) signaling to the terminal, wherein the MAC-CE, DCI or RRC signaling contains a fourth sk-counter value or indication information for indicating a fourth sk-counter value.

48. The MN of claim 41, wherein the operations further comprise:
sending an SCG addition or change indication to the terminal, wherein the SCG addition or change indication is used to indicate the terminal to access to the target SCG.

49. The MN of claim 41, wherein the operations further comprise:
receiving second information sent from the terminal, wherein the second information is used to indicate that an sk-counter value or a number of accesses reaches a maximum threshold; and
performing one or more of the following based on the second information:
releasing configuration information of a target SCG or target SN accessed by the terminal;
releasing configuration information of all candidate SCGs;
reconfiguring configuration information of a target SCG or target SN accessed by the terminal;
reconfiguring configuration information of all candidate SCGs;
reconfiguring an MN side security key; or
reconfiguring an sk-counter value or first configuration information used to determine the SCG side security key.

50. A first secondary node (SN), comprising a memory, a transceiver and a processor,
wherein the memory is used for storing a computer program, the transceiver is used for receiving and sending data under control of the processor, and the processor is used for reading the computer program in the memory and performing the following operations:
receiving second configuration information sent from a master node (MN); and
determining a third security key used for data transmission with a terminal based on the second configuration information.

51. The first SN of claim 50, wherein the second configuration information contains one or more of the following:
a value of the third security key;
a security key list;
an index of the third security key;
a cell radio network temporary identifier (C-RNTI) list;
an SN key counter (sk-counter) value used to generate the third security key; or
third information used to determine the third security key.

52. The first SN of claim 51, wherein the third information contains one or more of the following:
first information reported from the terminal to the MN;
first configuration information configured by a network side for the terminal;
a first sk-counter value;
an MN side security key;
a maximum sk-counter value;
a maximum number of accesses;
a first step;
an sk-counter value list;
a C-RNTI list;
a cell group identifier or index of a first secondary cell group (SCG), wherein the first SCG is a candidate SCG corresponding to the first SN among multiple candidate SCGs configured by a network side for the terminal;
a primary secondary cell (PSCell) identifier or index of a first PSCell, wherein the first PSCell is a PSCell corresponding to a first SCG;
an SN identifier or index of the first SN;
a step generated by the terminal;
a number of accesses;
a first offset; or
a calculation way of an sk-counter value.

53. The first SN of claim 50, wherein determining the third security key used for data transmission with the terminal based on the second configuration information comprises:
determining the third security key based on a mapping relationship between a cell radio network temporary identifier (C-RNTI) and an sk-counter value or a security key, and a C-RNTI sent from the terminal.

54. The first SN of claim 50, wherein the operations further comprise:
sending a media access control-control element (MAC-CE), downlink control information (DCI) or a radio resource control (RRC) signaling to the terminal, wherein the MAC-CE, DCI or RRC signaling contains a fourth sk-counter value or indication information for indicating the fourth sk-counter value.

55. An apparatus for determining secondary cell group (SCG) side security key, comprising:
a first receiving unit, used for receiving first configuration information sent from a master node (MN); and
a first security key determining unit, used for, in case of determining to access to a target SCG, based on the first configuration information, generating or updating or using a target SCG side security key or an SCG side security key used for at least one subsequent access to a candidate target SCG.

56. The apparatus of claim 55, wherein the first configuration information comprises one or more of the following:
security configuration information;
a security configuration information list, wherein the security configuration information list contains at least one security configuration information unit, and each security configuration information unit is associated with one or more candidate SCGs;
a cell group identifier or index;
a secondary node (SN) identifier or index; or
a calculation way of an SN key counter (sk-counter) value.

57. The apparatus of claim 56, wherein the security configuration information unit contains one or more of the following:
security configuration information;
a secondary node (SN) identifier or index;
a cell group identifier or index;
a primary secondary cell (PSCell) identifier or index; or
a security configuration information index.

58. The apparatus of claim 56 or 57, wherein the security configuration information contains one or more of the following:
a first SN key counter (sk-counter) value;
a maximum sk-counter value;
a maximum number of accesses;
a first step;
an sk-counter value list; or
a cell radio network temporary identifier (C-RNTI) list.

59. The apparatus of any of claims 55 to 58, wherein generating or updating or using the target SCG side security key comprises one or more of the following:
using a first security key as the target SCG side security key, wherein the first security key is a security key used for a most recent access to the target SCG or a target secondary node (SN); or,
determining the target SCG side security key based on a second SN key counter (sk-counter) value, wherein the second sk-counter value is an sk-counter value used to generate a first security key; or,
determining the target SCG side security key based on a third sk-counter value, wherein the third sk-counter value is an sk-counter value determined in a first way based on the first configuration information; or,
determining the target SCG side security key based on a fourth sk-counter value, wherein the fourth sk-counter value is an sk-counter value indicated by a network device; or,
determining the target SCG side security key based on a fifth sk-counter value, wherein the fifth sk-counter value is a first sk-counter value associated with the target SCG or a target SN; or,
determining the target SCG side security key based on a sixth sk-counter value, wherein the sixth sk-counter value is an sk-counter value determined and saved for a current access to the target SCG after a most recent generation or update or use of the target SCG side security key; or,
using a second security key as the target SCG side security key, wherein the second security key is a security key determined and saved for a current access to the target SCG after a most recent generation or update or use of the target SCG side security key.

60. The apparatus of claim 59, wherein the first security key determining unit is further used for one or more of the following:
determining a sixth sk-counter value in a first way based on the first configuration information; or,
generating the SCG side security key based on a sixth sk-counter value and saving the SCG side security key as a second security key.

61. The apparatus of claim 59 or 60, wherein determining the third sk-counter value or the sixth sk-counter value in the first way based on the first configuration information comprises one or more of the following:
determining the third sk-counter value or the sixth sk-counter value based on a sum of a seventh sk-counter value and a second step; or,
determining the third sk-counter value or the sixth sk-counter value based on a difference between a seventh sk-counter value and a second step; or,
determining the third sk-counter value or the sixth sk-counter value based on a sum of the three: a seventh sk-counter value, a product of a first value N and a second value M, and a first sequence number value; or,
determining the third sk-counter value or the sixth sk-counter value based on a sum of the two: a product of a seventh sk-counter value and a first sequence number value, and a second value M; or,
determining the third sk-counter value or the sixth sk-counter value based on a sum of the two: a product of a first sequence number value and a second value M, and a seventh sk-counter value; or,
determining the third sk-counter value or the sixth sk-counter value based on a sum of a first sk-counter value and a first offset; or,
determining the third sk-counter value or the sixth sk-counter value based on a difference between a first sk-counter value and a first offset; or,
determining the third sk-counter value or the sixth sk-counter value based on an sk-counter value list and a number of accesses;
wherein the seventh sk-counter value is an sk-counter value used for a most recent generation or update of the SCG side security key; the first value N indicates that a network side configures N candidate SCGs for a terminal; the second value M indicates that the third sk-counter value or the sixth sk-counter value determined this time corresponds to an M-th access to the target SCG or a target SN; the first sequence number value is one or more of a cell group identifier or index corresponding to the target SCG, an SN identifier or index corresponding to the target SCG, or a primary secondary cell (PSCell) identifier or index corresponding to the target SCG.

62. The apparatus of claim 61, wherein the second step comprises one or more of the following:
a step specified by a protocol;
a step generated by the terminal; or
a first step.

63. The apparatus of claim 61, wherein the first offset is determined by one or more of the following ways:
determining the first offset based on a sum of a second offset and a second step; or,
determining the first offset based on a difference between a second offset and a second step; or,
determining the first offset based on a sum of the three: a second offset, a product of a first value N and a second value M, and a first sequence number value; or,
determining the first offset based on a sum of the two: a product of a second offset and a first sequence number value, and a second value M; or,
determining the first offset based on a sum of the two: a product of a first sequence number value and a second value M, and a second offset;
wherein the second offset is a most recently updated first offset.

64. The apparatus of any of claims 59 to 63, further comprising:
a first sending unit, used for sending first information to the MN, wherein the first information contains one or more of the following:
a third sk-counter value;
a sixth sk-counter value;
a second step;
an sk-counter value index;
a number of accesses; or
a first offset.

65. The apparatus of any of claims 59 to 63, wherein the first security key determining unit is further used for:
in case of determining that an sk-counter value used to generate the SCG side security key is greater than a maximum sk-counter value configured by a network side, or a number of accesses is greater than a maximum number of accesses configured by a network side, performing one or more of the following:
sending second information to the MN, wherein the second information is used to indicate that the sk-counter value or the number of accesses reaches a maximum threshold;
releasing configuration information of the target SCG or a target secondary node (SN);
releasing configuration information of all candidate SCGs; or
ending evaluation of an execution condition for the target SCG or a target SN.

66. The apparatus of claim 55, wherein determining to access to the target SCG comprises one or more of the following:
determining that an execution condition for the target SCG is satisfied; or,
receiving an SCG addition or change indication sent from a network device, wherein the SCG addition or change indication is used to indicate a terminal to access to the target SCG.

67. The apparatus of claim 59, wherein a way for determining the fourth sk-counter value comprises:
receiving a media access control-control element (MAC-CE), downlink control information (DCI) or a radio resource control (RRC) signaling sent from a network device, wherein the MAC-CE, DCI or RRC signaling contains the fourth sk-counter value or indication information for indicating the fourth sk-counter value.

68. An apparatus for determining secondary cell group (SCG) side security key, comprising:
a second sending unit, used for sending first configuration information to a terminal, wherein the first configuration information is used for determining an SCG side security key used, by the terminal, for accessing a target SCG or for at least one subsequent access to a candidate target SCG; and
the second sending unit is further used for sending second configuration information to a first secondary node (SN), wherein the second configuration information is used for determining a third security key used for data transmission between the first SN and the terminal, wherein the first SN comprises a target SN or a candidate target SN.

69. The apparatus of claim 68, wherein the first configuration information comprises one or more of the following:
security configuration information;
a security configuration information list, wherein the security configuration information list contains at least one security configuration information unit, and each security configuration information unit is associated with one or more candidate SCGs;
a cell group identifier or index;
a secondary node (SN) identifier or index; or
a calculation way of an SN key counter (sk-counter) value.

70. The apparatus of claim 69, wherein the security configuration information unit contains one or more of the following:
security configuration information;
a secondary node (SN) identifier or index;
a cell group identifier or index;
a primary secondary cell (PSCell) identifier or index; or
a security configuration information index.

71. The apparatus of claim 69 or 70, wherein the security configuration information contains one or more of the following:
a first SN key counter (sk-counter) value;
a maximum sk-counter value;
a maximum number of accesses;
a first step;
an sk-counter value list; or
a cell radio network temporary identifier (C-RNTI) list.

72. The apparatus of claim 68, wherein the second configuration information contains one or more of the following:
a value of the third security key;
a security key list;
an index of the third security key;
a cell radio network temporary identifier (C-RNTI) list;
an sk-counter value used to generate the third security key; or
third information used to determine the third security key.

73. The apparatus of claim 72, wherein the third information contains one or more of the following:
first information reported from the terminal to a master node (MN);
first configuration information configured by a network side for the terminal;
a first sk-counter value;
an MN side security key;
a maximum sk-counter value;
a maximum number of accesses;
a first step;
an sk-counter value list;
a C-RNTI list;
a cell group identifier or index of a first SCG, wherein the first SCG is a candidate SCG corresponding to the first SN among multiple candidate SCGs configured by a network side for the terminal;
a primary secondary cell (PSCell) identifier or index of a first PSCell, wherein the first PSCell is a PSCell corresponding to a first SCG;
an SN identifier or index of the first SN;
a step generated by the terminal;
a number of accesses;
a first offset; or
a calculation way of an sk-counter value.

74. The apparatus of claim 68, wherein the second sending unit is further used for:
sending a media access control-control element (MAC-CE), downlink control information (DCI) or a radio resource control (RRC) signaling to the terminal, wherein the MAC-CE, DCI or RRC signaling contains a fourth sk-counter value or indication information for indicating a fourth sk-counter value.

75. The apparatus of claim 68, wherein the second sending unit is further used for:
sending an SCG addition or change indication to the terminal, wherein the SCG addition or change indication is used to indicate the terminal to access to the target SCG.

76. The apparatus of claim 68, further comprises a second receiving unit, used for:
receiving second information sent from the terminal, wherein the second information is used to indicate that an sk-counter value or a number of accesses reaches a maximum threshold; and
performing one or more of the following based on the second information:
releasing configuration information of a target SCG or target SN accessed by the terminal;
releasing configuration information of all candidate SCGs;
reconfiguring configuration information of a target SCG or target SN accessed by the terminal;
reconfiguring configuration information of all candidate SCGs;
reconfiguring a master node (MN) side security key; or
reconfiguring an sk-counter value or first configuration information used to determine the SCG side security key.

77. An apparatus for determining secondary cell group (SCG) side security key, comprising:
a third receiving unit, used for receiving second configuration information sent from a master node (MN); and
a second security key determining unit, used for determining a third security key used for data transmission with a terminal based on the second configuration information.

78. The apparatus of claim 77, wherein the second configuration information contains one or more of the following:
a value of the third security key;
a security key list;
an index of the third security key;
a cell radio network temporary identifier (C-RNTI) list;
an SN key counter (sk-counter) value used to generate the third security key; or
third information used to determine the third security key.

79. The apparatus of claim 78, wherein the third information contains one or more of the following:
first information reported from the terminal to the MN;
first configuration information configured by a network side for the terminal;
a first sk-counter value;
an MN side security key;
a maximum sk-counter value;
a maximum number of accesses;
a first step;
an sk-counter value list;
a C-RNTI list;
a cell group identifier or index of a first SCG, wherein the first SCG is a candidate SCG corresponding to a first secondary node (SN) among multiple candidate SCGs configured by a network side for the terminal;
a primary secondary cell (PSCell) identifier or index of a first PSCell, wherein the first PSCell is a PSCell corresponding to a first SCG;
an SN identifier or index of a first SN;
a step generated by the terminal;
a number of accesses;
a first offset; or
a calculation way of an sk-counter value.

80. The apparatus of claim 77, wherein determining the third security key used for data transmission with the terminal based on the second configuration information comprises:
determining the third security key based on a mapping relationship between a cell radio network temporary identifier (C-RNTI) and an sk-counter value or a security key, and a C-RNTI sent from the terminal.

81. The apparatus of claim 77, further comprising:
a third sending unit, used for sending a media access control-control element (MAC-CE), downlink control information (DCI) or a radio resource control (RRC) signaling to the terminal, wherein the MAC-CE, DCI or RRC signaling contains a fourth sk-counter value or indication information for indicating the fourth sk-counter value.

82. A computer-readable storage medium, wherein the computer-readable storage medium stores a computer program, and the computer program is used for causing a computer to perform the method of any of claims 1 to 13, or the method of any of claims 14 to 22, or the method of any of claims 23 to 27.
